# EUROPEAN PATENT APPLICATION

(11) **EP 4 549 443 A1**
(43) Date of publication of application: **07.05.2025**
(21) Application number: 23831883.6
(22) Date of filing: 28.06.2023
(51) Int. Cl.: C07F 7/08, C07F 7/18, C07F 7/21, H01M 10/0567, H01M 10/0565, H01M 10/42, H01M 10/052

(54) **NOVEL ANION RECEPTOR COMPOUND AND ELECTROLYTE CONTAINING SAME**

(30) Priority: 28.06.2022 KR 20220078927
(71) Applicant: Zain Energy Inc., Cheongju-si, Chungcheongbuk-do 28776 (KR)
(72) Inventor: LEE, Juyoung, Daejeon 34698 (KR); LEE, Joohyeon, Sejong 30150 (KR)
(74) Representative: Maiwald GmbH
(86) International application number: PCT/KR2023/008989
(87) International publication number: WO 2024/005524

(57) **Abstract**

Proposed are a novel anion receptor and an electrolyte containing the same. More specifically, proposed are a novel anion receptor, and a nonaqueous liquid electrolyte and a gel-type or solid polymer electrolyte containing the same. The receptor is composed of a compound formed of a silicon-nitrogen bond structure, such as a novel silazane, in which an electron withdrawing group-substituted amine group is introduced into a silicon atom or in which an electron withdrawing group is introduced into a nitrogen atom, or a mixture of the compound above and a composition selected from linear hydrocarbon, cyclic hydrocarbon, polyalkylene oxide, and siloxane compounds, into which an electron withdrawing group-substituted amine group is introduced or in which an electron withdrawing group is introduced into a nitrogen atom in a ring, improving the ion conductivity and cation transport rate of the electrolytes and increasing the electrochemical stability of alkali metal batteries using the electrolytes.

## Description

### Technical Field

The present disclosure relates to a novel anion receptor compound and an electrolyte containing the same. More particularly, the present disclosure relates to a novel silicon-based anion receptor compound and an electrolyte containing the same.

### Background Art

Anion receptors enhance anion stability by Lewis acid-base interactions. Such anion receptors, compounds with electron-poor atoms (N and B), allow electron-rich anions to be coordinated in the surrounding thereof, preventing the anions and lithium cations from bonding as an ion pair to facilitate the lithium cations to migrate. The first compounds known as anion receptors were aza-ethers composed of cyclic or linear amides in which the nitrogen atom of the amine group having a perfluoroalkylsulfonyl substituent is rendered electron-deficient and is enabled to appropriately interact with electron-rich anions through Coulomb attraction (J. Electrochem. Soc., 143 (1996) 3825, 146 (2000) 9). However, such aza-ethers show limited solubility in polar solvents adopted as typical nonaqueous electrolytes, and the electrochemical stability window of LiCl salt-added electrolytes fails to meet the level required for currently available positive electrode materials, which is at 4.0 V. Aza-ethers were also found to be unstable to LiPF₆ (J. Electrochem. Solid-State Lett., 5 (2002) A248). In other words, while LiF, a solid, and PF₅, a gas, are in equilibrium even at room temperature because LiPF₆ is chemically and thermally unstable, the generation of this gaseous product, PF₅, causes the equilibrium to further shift toward the generation of PF₅.

**LiPF₆ (s)** 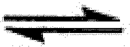

**LiF (s) + PF₅ (g)**

PF₅ in nonaqueous solvents tends to initiate a series of reactions, including ring-opening polymerization or breakage of ether bonds composed of atoms, such as oxygen or nitrogen, having non-covalent electron pairs. PF₅, which is a strong Lewis acid, attacks electron pairs, and aza-ethers are immediately attacked by PF₅ due to having high electron density (J. Power Sources, 104 (2002) 260). This imposes significant restrictions on the commercialization of aza-ether compounds. Due to such restrictions, McBreen et al. synthesized an anion receptor by selecting boron, an electron-deficient atom, to be electron withdrawing group-substituted, using the same approach (J. Electrochem. Soc., 145 (1998) 2813, 149 (2002) A1460).

In the meantime, solid polymer electrolytes do not involve electrolyte solution leakage and are highly resistant to vibration and shock, making the use thereof convenient. In addition, solid polymer electrolytes have significantly low self-discharge characteristics and are usable even at high temperatures, which is in line not only with the trend of portable electronic devices in weight reduction and size reduction but also with the wireless trend of information and communication devices and home appliances. Furthermore, solid polymer electrolytes are widely applicable to large-capacity lithium polymer secondary batteries for electric vehicles and the like. Thus, extensive research has been conducted on such solid polymer electrolytes to improve their performance. Since the discovery of polyalkylene oxide (PAO) -based solid polymer electrolytes by P. V. Wright in 1975 (British Polymer Journal, 7, 319), these materials were named "ion conductive polymers" by M. Armand in 1978. Typical solid polymer electrolytes are composed of lithium salt complexes in conjunction with polymers having electron-donating atoms, such as oxygen, nitrogen, phosphorus, or the like. Despite having been known as the most representative solid polymer electrolytes known so far, polyethylene oxide (PEO) and lithium salt complexes thereof are unable to be applied to electrochemical devices operating at room temperature due to having an ion conductivity of about 10⁻⁸ S/cm at room temperature. These PAO-based solid polymer electrolytes are highly crystalline, which imposes restrictions on molecular chain motion, and thus exhibit a significantly low ion conductivity at room temperature. Crystalline regions present in polymer structures are required to be reduced to a minimum while increasing amorphous regions to improve molecular chain mobility. To this end, research has been conducted on using phosphazenes (J. Am. Chem. Soc., 106 (1984) 6845) or siloxanes (Macromol. Chem. Rapid Commun., 7 (1986) 115) with flexible molecular chains as the main chain or on introducing PAO with relatively short length as side chains (Electrochem. Acta, 34 (1989) 635). In addition, research has been conducted on preparing solid polymer electrolytes with reticular structures by introducing one or more crosslinkable functional groups at the terminal of PAO. However, the ion conductivity of such solid polymer electrolytes at room temperature is in the range of about 10⁻⁵ to 10⁻⁴ S/cm, making the use thereof in lithium batteries operating at room temperature inappropriate. Thus, research continues to improve this problem. In order to solve such a problem, Abraham et al. improved the ion conductivity by introducing low-molecular-weight polyethylene oxide into vinylidene hexafluoride-hexafluoropropene copolymers (Chem. Mater., 9 (1997) 1978). In addition, it has been reported that an ion conductivity of up to 8 × 10⁻⁴ S/cm is exhibited at room temperature under film-forming conditions by adding low-molecular-weight polyethylene glycol dimethyl ether (PEGDME) to a photocuring crosslinker in which a siloxane serves as the main chain and PEO serves as the side chain (J. Power Sources 119-121 (2003) 448). However, the calculated cycling efficiency of Ni electrodes remained around 53%. Such a low efficiency is explained by electrode surface passivation resulting from the rapid corrosion of the freshly deposited lithium surface (Solid State Ionics 119 (1999) 205, Solid State Ionics 135 (2000) 283). In other words, it is stated by Vincent that a reaction between a lithium salt and lithium metal occurs as shown below (Solid State Chem. 17 (1987) 145), in which case the resulting CF₃ radical detaches a hydrogen atom from the PEO polymer chain to form HCF₃, so the main chain of the polymer at the resulting =C-O-C- functional group is thus cleaved. In this case, it is explained that the CH₃ generated by the cleavage of the chain attacks the chain in conjunction with the CF₃ radical or cleaves the -C-O- bond, allowing a compound in the form of Li-O-R to be attached to the electrode surface and causing passivation.

**LiSO₃CF₃ + Li (s) → 2Li⁺ + SO₃²⁻** + **CF₃·**

Therefore, in order to solve such problems described above, what is necessary is to design compounds with structures in which the middle of the conjugate is free of a nitrogen atom susceptible to attack, such as aza-ethers, or to research new materials capable of improving ion conductivity while resolving electrochemical instability and instability to lithium salts by replacing PAO-based plasticizers.

### Disclosure

### Technical Problem

The present disclosure aims to provide a novel silicon-based anion receptor compound in which an electron withdrawing group-substituted amine group is introduced into a silicon atom or an electron withdrawing group is introduced into a nitrogen atom.

The present disclosure also aims to provide an electrolyte composition capable of improving the ion conductivity and cation transport rate in electrolytes, increasing the electrochemical stability of batteries (for example, primary or secondary batteries) using such electrolytes, and providing a liquid, gel-type, or solid electrolyte.

The present disclosure also aims to provide an electrolyte with significantly improved electrochemical stability and ion conductivity at room temperature.

The present disclosure also aims to provide a solidifying electrolyte that enables a battery to stop operating through rapid curing once a predetermined temperature (for example, about 130°C) or higher is reached and is capable of preventing a fire from occurring due to thermal runaway of the battery, and a battery including the same.

### Technical Solution

To accomplish the above objectives, the present disclosure provides a silicon-based anion receptor compound selected from the group consisting of Formulas 1 to 6 shown below.

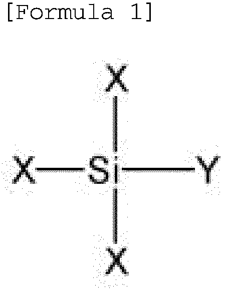

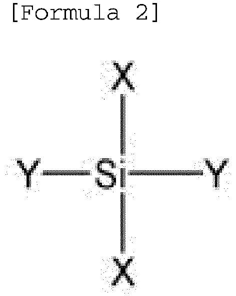

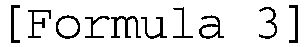

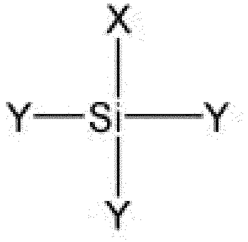

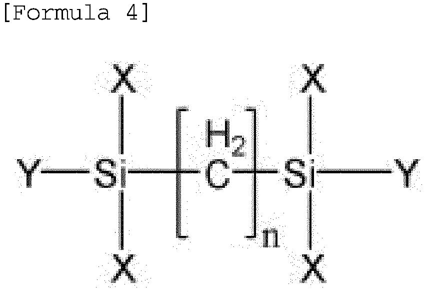

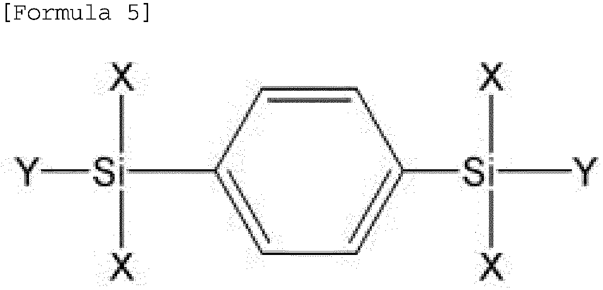

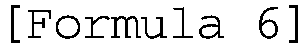

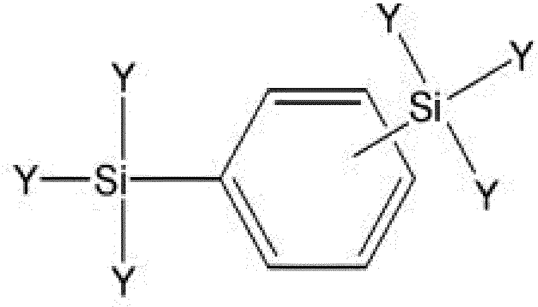

(In Formulas 1 to 6,
(a) X is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, -COR (where R is a linear or branched alkyl group having 1 to 20 carbon atoms or a linear or branched alkenyl group having 2 to 20 carbon atoms), -OR (where R is a linear or branched alkyl group having 1 to 20 carbon atoms), -ROR' (where R and R' are each independently a linear or branched alkyl group having 1 to 20 carbon atoms), -SiR₃ (where R is a linear or branched alkyl group having 1 to 20 carbon atoms), - O-SiR₃ (where R is a linear or branched alkyl group having 1 to 20 carbon atoms), 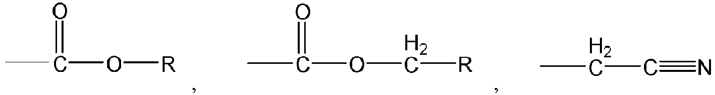 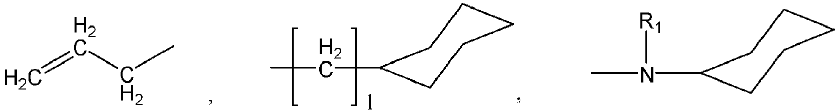 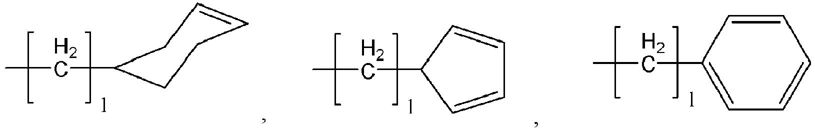 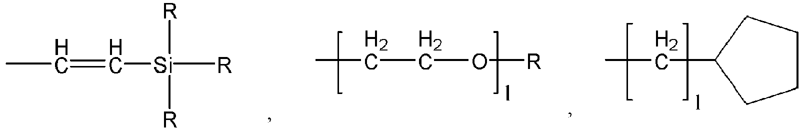 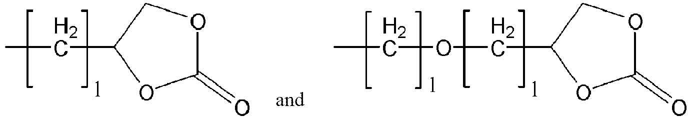 (where R is selected from a linear or branched alkyl group having 1 to 20 carbon atoms or a linear or branched alkenyl group having 2 to 20 carbon atoms, R₁ is selected from a halogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, and l is an integer in the range of 0 to 20),
(b) Y is selected from 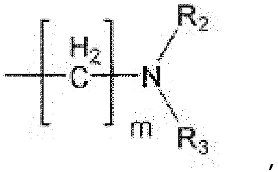 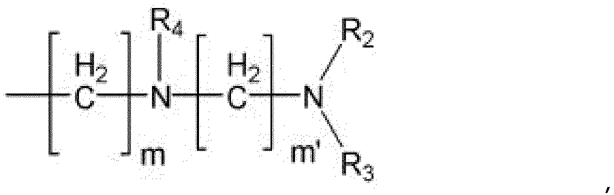 and 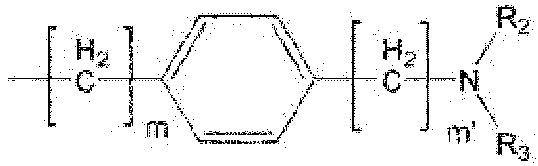 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in the range of 0 to 20),
(c) R₁, R₂, and R₃ are selected from a halogen atom and an electron withdrawing group that is selected from -SO₂CF₃, - OSO₂CF₃, -SO₂CHF₂, -OSO₂CHF₂, -SO₂CH₂F, -OSO₂CH₂F, -COCF₃, - OCOCF₃, -COCHF₂, -OCOCHF₂, -COCH₂F, -OCOCH₂F, -SO₂CN, -OSO₂CN, - SO₂F, -OSO₂F, -CF₃, -OCF₃, and -CN, and
(d) n is an integer in the range of 0 to 20.

The present disclosure also provides an electrolyte composition containing at least one of the silicon-based anion receptor compounds represented by Formulas 1 to 6.

In the present disclosure, the electrolyte composition is characterized by further containing one or more compounds selected from the group consisting of Formulas 7 to 16 shown below.

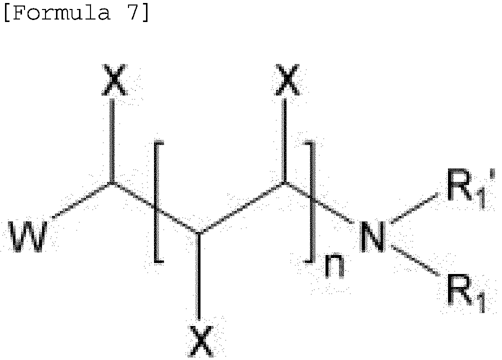

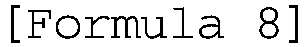

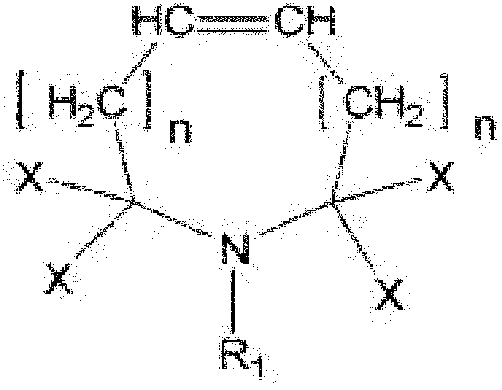

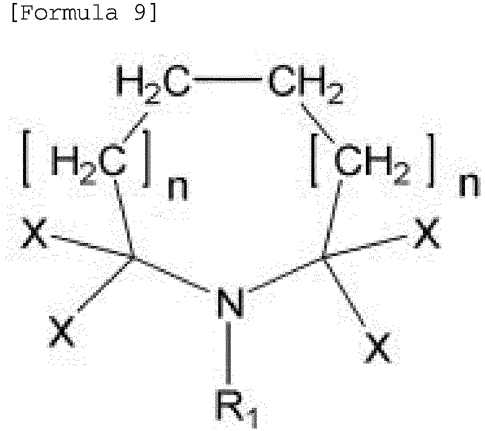

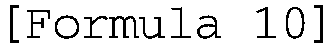

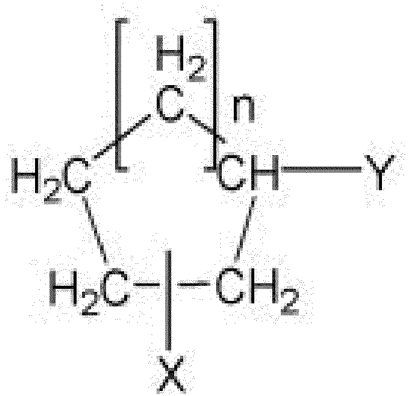

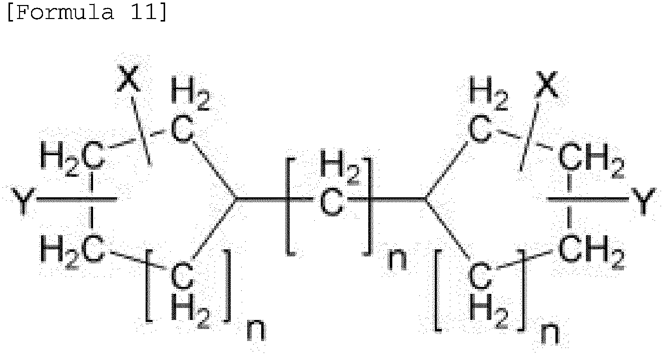

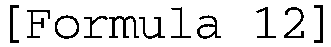

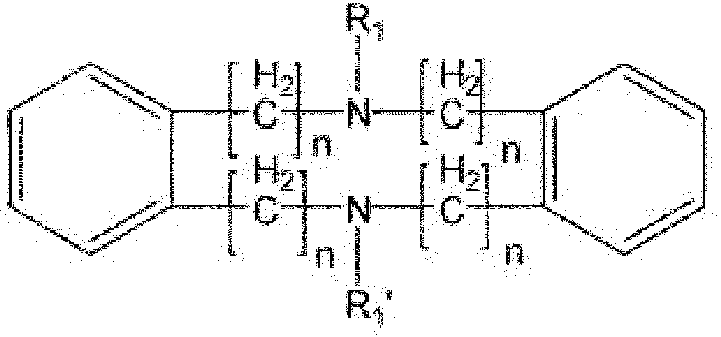

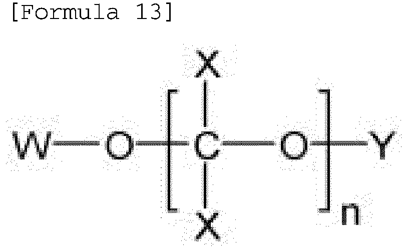

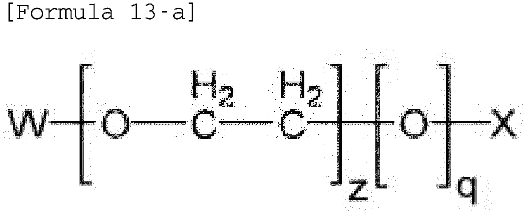

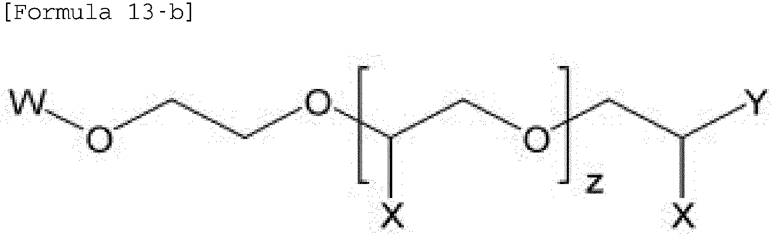

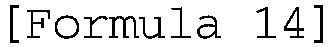

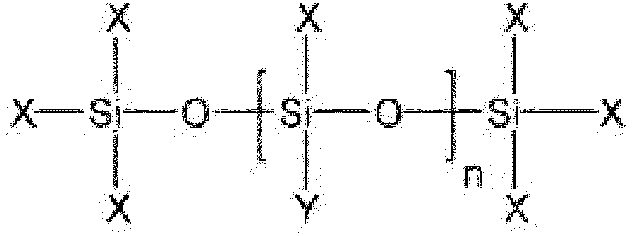

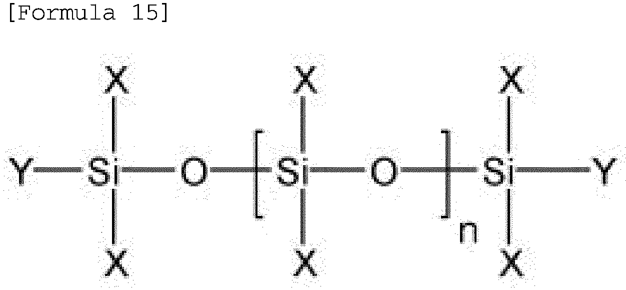

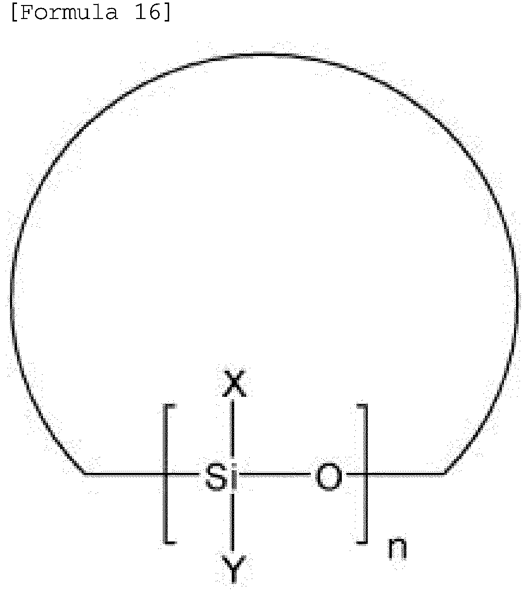

In Formulas 7 to 16,
(a) X is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, -COR (where R is a linear or branched alkyl group having 1 to 20 carbon atoms or a linear or branched alkenyl group having 2 to 20 carbon atoms), -OR (where R is a linear or branched alkyl group having 1 to 20 carbon atoms), -ROR' (where R and R' are each independently a linear or branched alkyl group having 1 to 20 carbon atoms), -SiR₃ (where R is a linear or branched alkyl group having 1 to 20 carbon atoms), - O-SiR₃ (where R is a linear or branched alkyl group having 1 to 20 carbon atoms), 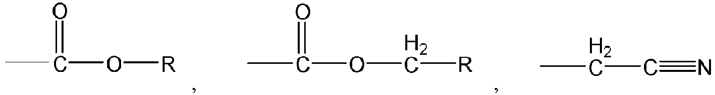 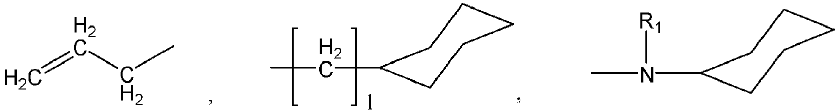 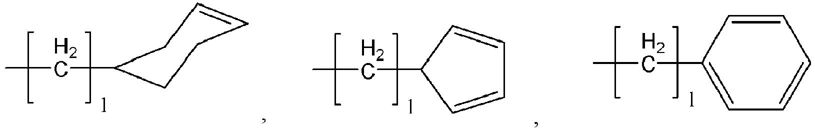 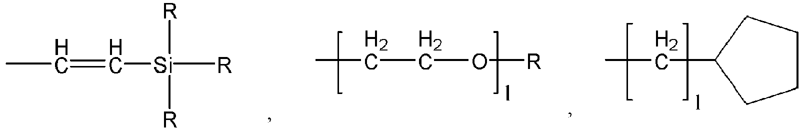 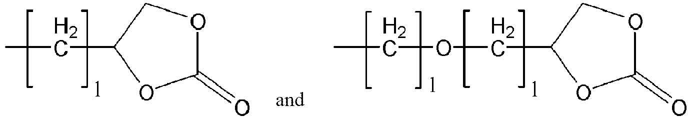 (where R is selected from a linear or branched alkyl group having 1 to 20 carbon atoms or a linear or branched alkenyl group having 2 to 20 carbon atoms, R₁ is selected from a halogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, and l is an integer in the range of 0 to 20),
(b) Y is selected from 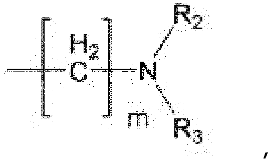 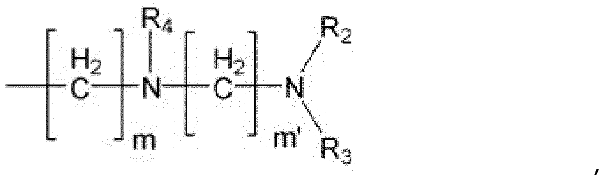 and 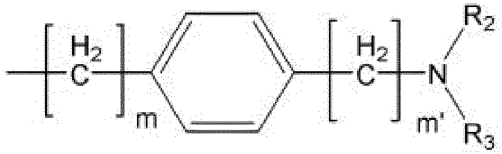 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in the range of 0 to 20),
(c) W is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, 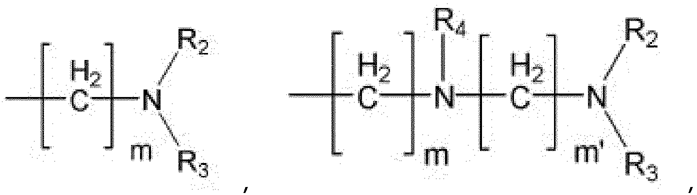 and 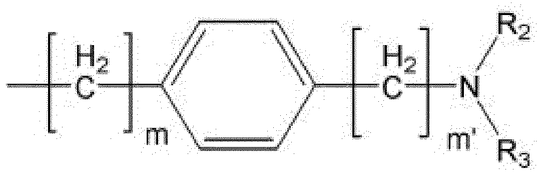 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in the range of 0 to 20),
(d) R₁ and R₁' are each independently selected from a hydrogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, wherein R₁ and R₁' are not simultaneously hydrogen atoms in the same molecule,
(e) n and q are each independently an integer in the range of 0 to 20, and
(f) z is an integer in the range of 1 to 20.

The present disclosure also provides a solidifying electrolyte prepared from the electrolyte composition.

The present disclosure also provides a polymer electrolyte thin film formed from the electrolyte composition.

The present disclosure also provides a battery including the solidifying electrolyte.

The present disclosure also provides a recycle battery including the solidifying electrolyte.

### Advantageous Effects

The present disclosure can provide a compound serving as a novel silicon-based anion receptor, and a liquid electrolyte (for example, nonaqueous liquid electrolytes) and gel-type or solid electrolyte (for example, gel-type polymer electrolytes or solid polymer electrolytes) containing the same. In other words, the present disclosure can provide a novel cyclic silicon compound in which an electron withdrawing group-substituted amine group is introduced into a silicon atom or an electron withdrawing group is introduced into a nitrogen atom in a ring. In addition, using the novel cyclic silicon compound, the present disclosure can provide an electrolyte that is widely applicable as electrolytes (for example, gel-type or solid polymer electrolytes, solid sulfide polymer-based electrolytes, and solid oxide polymer-based electrolytes) of small lithium polymer secondary batteries applied to various electronic devices, such as portable information devices, including mobile phones and laptops, and camcorders, as well as large-capacity secondary batteries (for example, lithium polymer secondary batteries) used for electric vehicles and power storage devices for power leveling.

The present disclosure can provide a solidifying electrolyte that obtains stability by reducing the risk of a fire occurring due to thermal runaway and is capable of being highly utilizable in batteries of electric vehicles and power storage devices.

### Description of Drawings

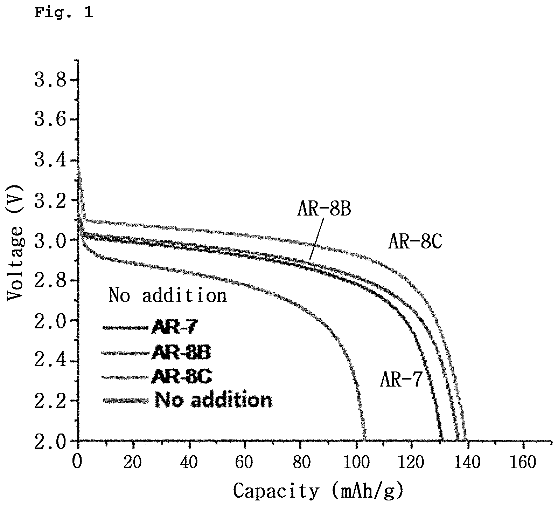

FIG. 1 is a graph showing room-temperature battery performance (comparison for voltage with respect to relative discharge capacity) of the present disclosure and a comparative example.

### Best Mode

Hereinafter, embodiments will be described in detail with reference to the accompanying drawings. However, various modifications may be added to the embodiments, so the scope of the patent application is not limited or restricted by such embodiments. It should be understood that all modifications, equivalents, and alternatives to the embodiments fall within the scope of the claims

The terms used herein are only for illustrative purposes and should not be construed as limiting the present disclosure. The singular expressions include the plural expressions unless the context clearly indicates otherwise. It will be further understood that the terms "comprises", "includes", "contains", "introduces", and the like when used herein specify the presence of stated features, integers, steps, operations, elements, components, or combinations thereof, but do not preclude the presence or addition of one or more other features, integers, steps, operations, elements, components, or combinations thereof.

Although the terms "first", "second", and the like used herein may be used to describe various elements, these elements are not to be construed as being limited by these terms. These terms are used only for the purpose of distinguishing one element from another. For example, without departing from the scope of the claims as defined by the concepts of the embodiments, a first element may be referred to as a second element and, similarly, a second element may also be referred to as a first element.

Unless otherwise defined, all terms used herein, including technical or scientific terms, have the same meaning as commonly understood by those skilled in the art to which the present disclosure pertains. Terms, such as those defined in commonly used dictionaries, should be interpreted as having a meaning that is consistent with their meaning in the context of the related art and will not be interpreted in an idealized or overly formal sense unless expressly so defined herein.

Furthermore, in the following descriptions with reference to the accompanying drawings, the same reference numerals will be assigned to refer to the same elements regardless of the reference numerals used in the drawings, and redundant explanations thereof will be omitted. In the following description of the embodiments, when it is determined that the detailed description of the known art related to the present disclosure might obscure the gist of the embodiments, the detailed description thereof will be omitted.

Hereinafter, a novel anion receptor of the present disclosure, a method of preparing the same, and use thereof will be described in detail with reference to the embodiments and drawings. However, the present disclosure is not limited to these embodiments and drawings.

The present disclosure relates to a novel anion receptor.

According to one embodiment of the present disclosure, the anion receptor is a novel silicon-based compound and may be a compound serving as a novel silicon-based anion receptor in which an electron withdrawing group-substituted amine group is introduced into a nitrogen atom.

According to one embodiment of the present disclosure, the anion receptor compound may be compounds represented by Formulas 1 to 6 shown below. This compound may perform a role as an anion receptor in electrolyte compositions (for example, electrolytes), may improve the ion conductivity and cation transport rate when applied as an additive to electrolyte compositions (for example, electrolytes), and may increase the electrochemical stability of batteries using such electrolyte compositions.

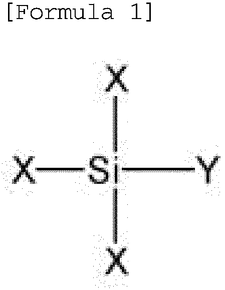

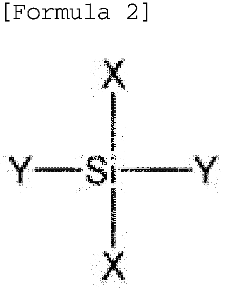

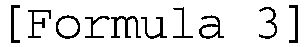

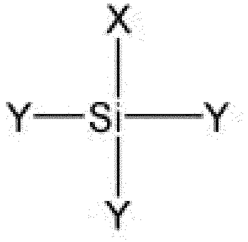

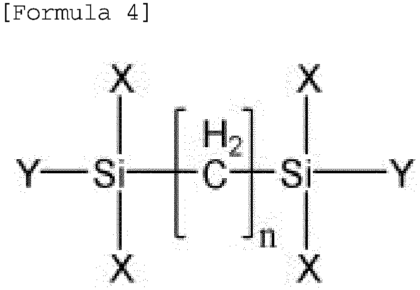

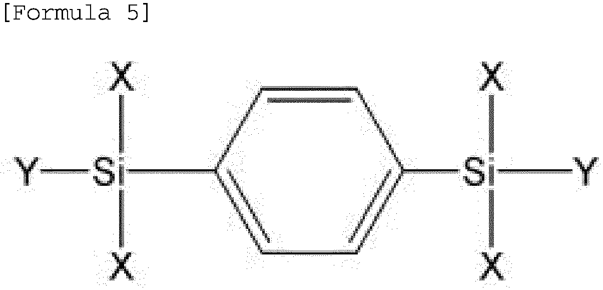

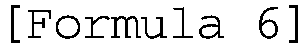

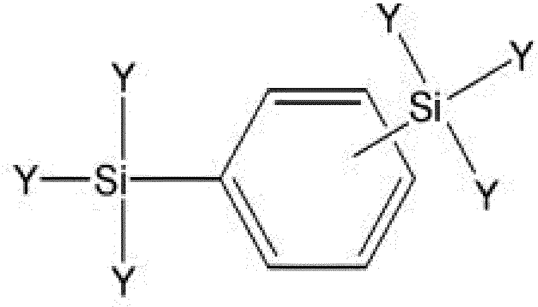

In one example of the present disclosure, the compounds represented by Formulas 1 to 6 may be compounds serving as novel silicon-based anion receptors in which a functional group having an electron withdrawing group-substituted silicon is introduced into a nitrogen atom.

In one example of the present disclosure, X in Formulas 1 to 6 may be selected from a halogen atom, a linear or branched alkyl group having 1 to 20 carbon atoms, a linear or branched alkenyl group having 2 to 20 carbon atoms, a linear or branched alkynyl group having 2 to 20 carbon atoms, -COR, -OR, -ROR', -Si(R)₃, -O-Si(R)₃,

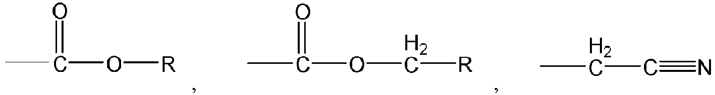

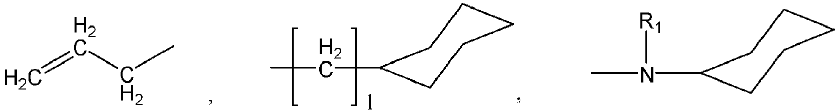

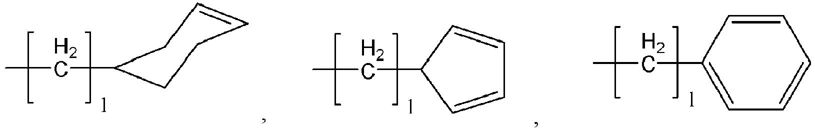

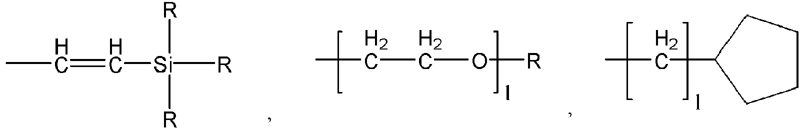

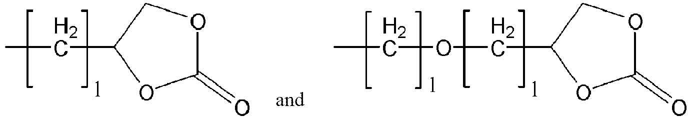

.

R, R', and R₁ in X may be each independently selected from a hydrogen atom, a halogen atom, a linear or branched alkyl group having 1 to 20 carbon atoms, a linear or branched alkenyl group having 2 to 20 carbon atoms, and an electron withdrawing group that is selected from -SO₂CF₃, -OSO₂CF₃, - SO₂CHF₂, -OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, - CF₃, -OCF₃, and -CN. Preferably, R and R' are each independently selected from a linear or branched alkyl group having 1 to 20 carbon atoms and a linear or branched alkenyl group having 2 to 20 carbon atoms, and R₁ is selected from a halogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN. In addition, l may be an integer in the range of 0 to 20.

Preferably, in X,
R in "-COR" is selected from a linear or branched alkyl group having 1 to 20 carbon atoms or a linear or branched alkenyl group having 2 to 20 carbon atoms,
R in "-OR" is a linear or branched alkyl group having 1 to 20 carbon atoms,
R and R' in "-ROR'" are each independently a linear or branched alkyl group having 1 to 20 carbon atoms,
R in "-Si(R)₃" is a linear or branched alkyl group having 1 to 20 carbon atoms, and
R in "-O-Si(R)₃" is a linear or branched alkyl group having 1 to 20 carbon atoms.

In addition, l may be an integer in the range of 0 to 10 or 0 to 5.

More preferably, X in Formulas 1 to 6 is selected from - F, -CH₃, -CH₂-CH₃, -CH=CH₂, - CO-CH=CH₂, -OCH₃, - CH₂OCH₃, - OCH₂CH₃, -CH(CH₃)₂, -O-CH(CH₃)₂, -C(CH₃)₃, -Si(CH₃)₃, -O-Si(CH₃)₃, 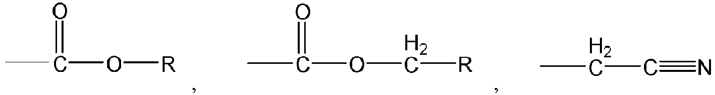 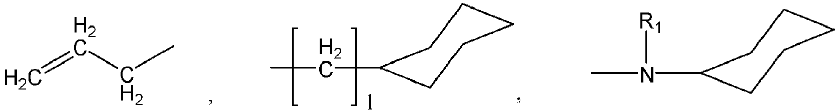 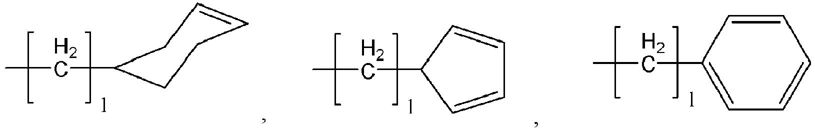 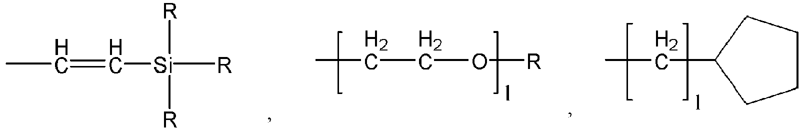 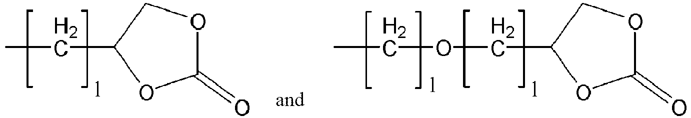 (where R may be selected from a linear or branched alkyl group having 1 to 5 carbon atoms, which is more preferably - CH₃, R₁ may be selected from a halogen atom and an electron withdrawing group that is selected from -SO₂CF₃, -OSO₂CF₃, - SO₂CHF₂, -OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, - CF₃, and -OCF₃, which is more preferably selected from -F, -Cl, -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, and -OCF₃, and l may be an integer in the range of 0 to 10, which is more preferably an integer in the range of 0 to 3).

In one example of the present disclosure, n in Formulas 1 to 6 may be an integer in the range of 0 to 20. Preferably, n is an integer in the range of 0 to 10.

In one example of the present disclosure, Y in Formulas 1 to 6 may be selected from 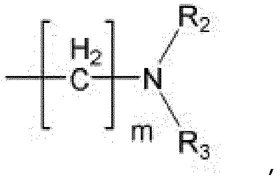 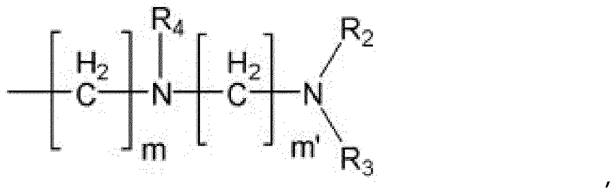 and

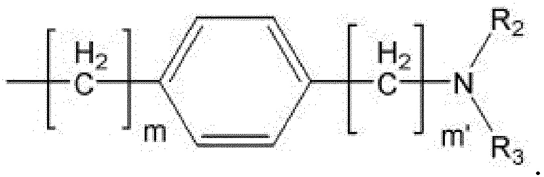

R₂, R₃, and R₄ in Y may be each independently selected from a hydrogen atom, a halogen atom, and an electron withdrawing group that is selected from -SO₂CF₃, -OSO₂CF₃, - SO₂CHF₂, -OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, - CF₃, -OCF₃, and -CN. However, in one molecule or Y, R₂ and R₃ or R₂, R₃, and R₄ are not simultaneously hydrogen atoms, at least one of which is an electron withdrawing group.

In Y, m and m' may be each independently an integer in the range of 0 to 20. In another example, m and m' may not be simultaneously "0" in one molecule or Y.

Preferably, R₂, R₃, and R₄ are each independently selected from a hydrogen atom, a halogen atom, and an electron withdrawing group that is selected from -SO₂CF₃, -OSO₂CF₃, - SO₂CHF₂, -OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, - CF₃, -OCF₃, and -CN, and m and m' are each independently an integer in the range of 0 to 20.

In one example of the reaction herein, n in Formula 4 may be an integer in the range of 0 to 20. Preferably, n is an integer in the range of 0 to 10.

In one example of the present disclosure, the compound represented by Formula 1 may be selected from the following compounds.

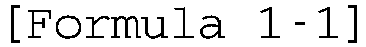

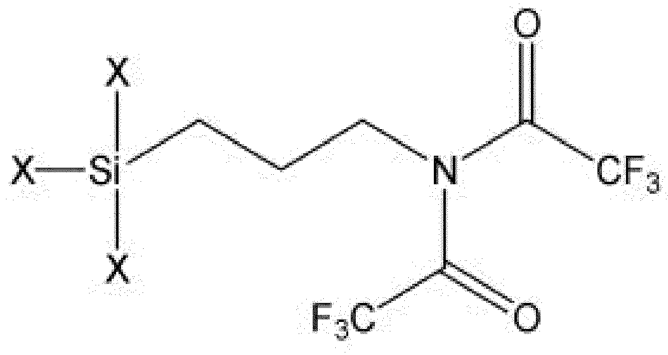

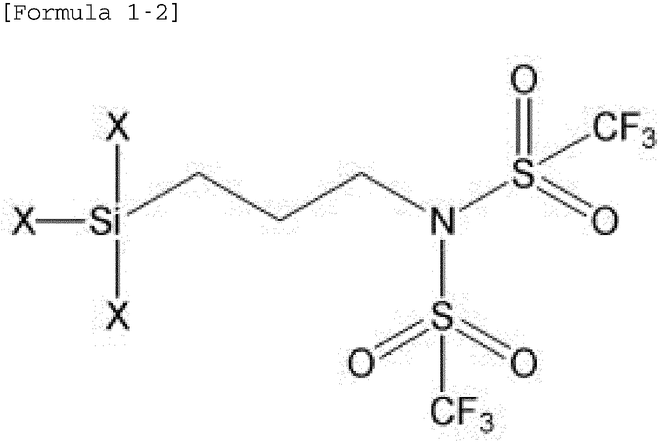

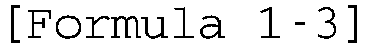

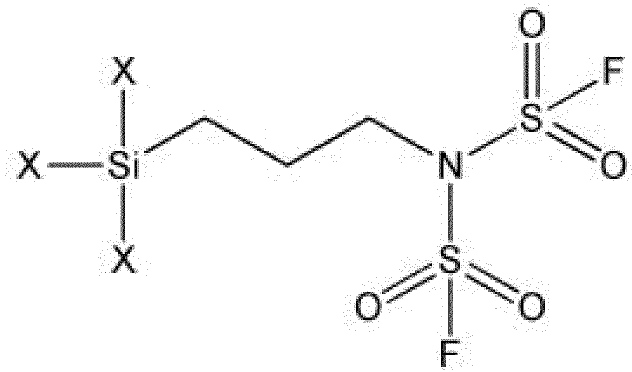

In Formulas 1-1 to 1-3, X may be selected from a halogen atom, a linear or branched alkyl group having 1 to 10 carbon atoms, and a linear or branched alkenyl group having 2 to 10 carbon atoms, is preferably selected from -F, -CH₃, -CH₂CH₃, and -CH=CH₂, and is more preferably -CH₃.

In one example of the present disclosure, the compound represented by Formula 2 may be selected from the following compounds.

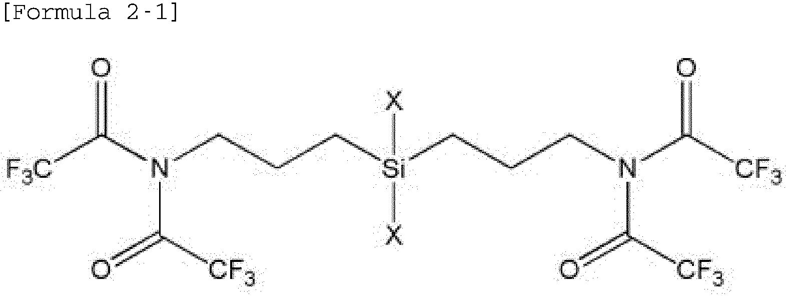

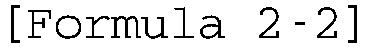

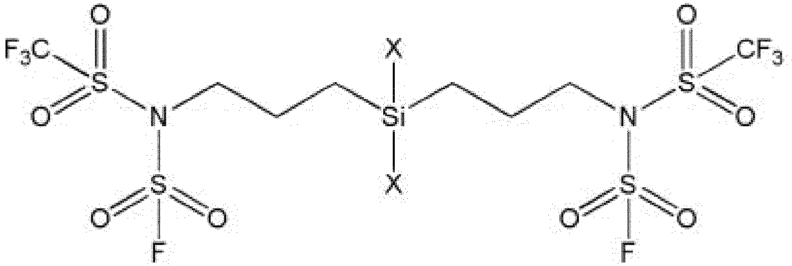

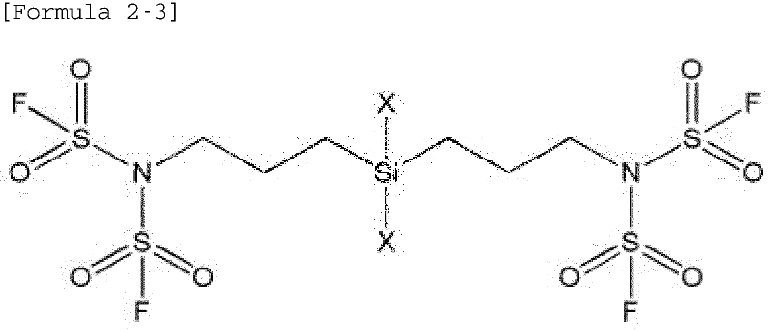

In Formulas 2-1 to 2-3, X may be selected from a halogen atom, a linear or branched alkyl group having 1 to 10 carbon atoms, and a linear or branched alkenyl group having 2 to 10 carbon atoms, is preferably selected from -F, -CH₃, -CH₂CH₃, and -CH=CH₂, and is more preferably -CH₃.

In one example of the present disclosure, the compound represented by Formula 3 may be selected from the following compounds.

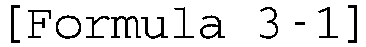

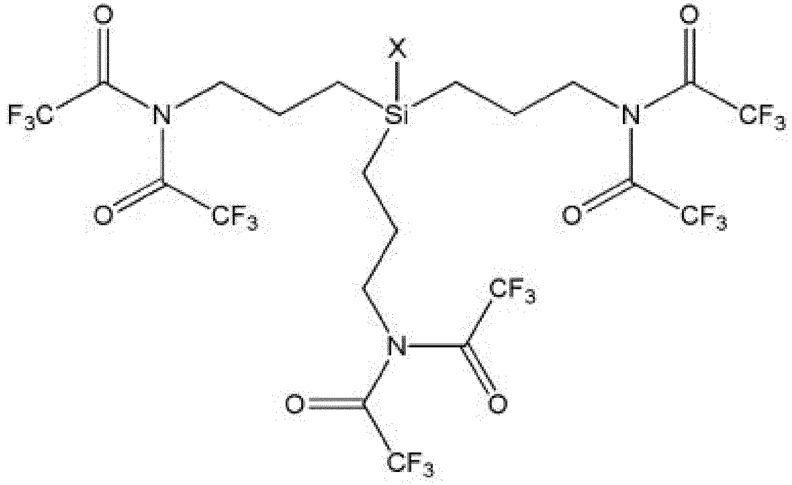

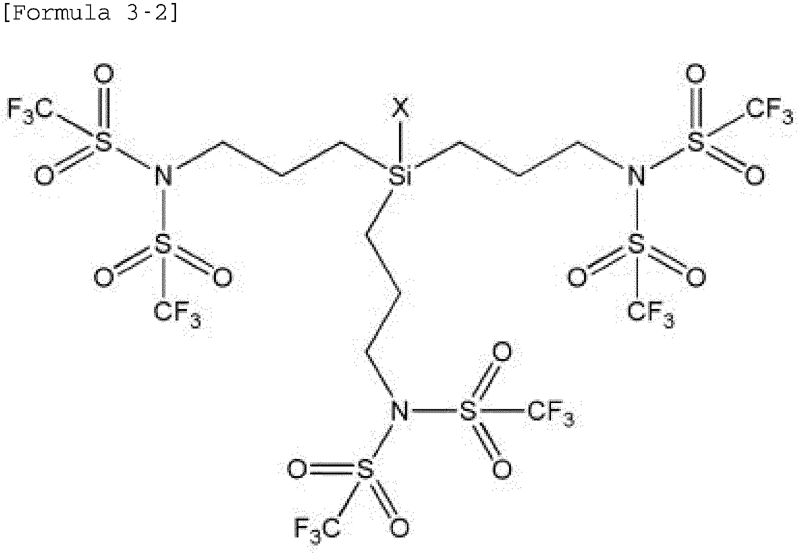

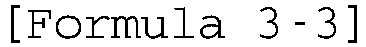

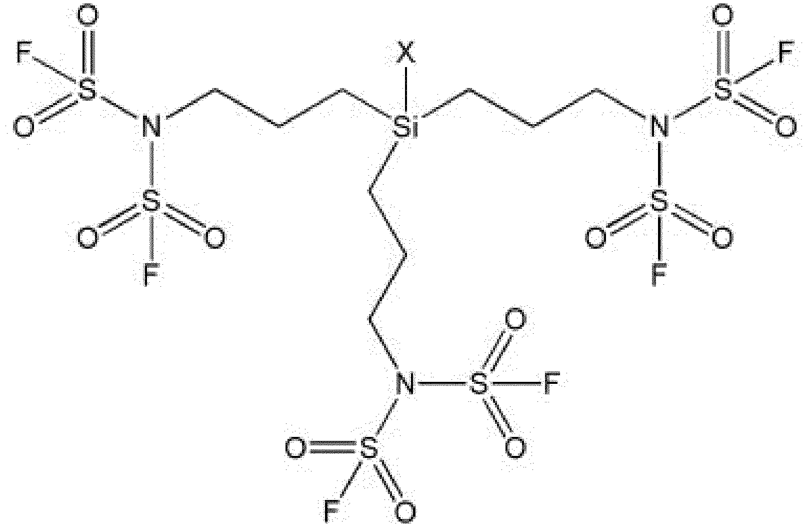

In Formulas 3-1 to 3-3, X may be selected from a halogen atom, a linear or branched alkyl group having 1 to 10 carbon atoms, and a linear or branched alkenyl group having 2 to 10 carbon atoms, is preferably selected from -F, -CH₃, -CH₂CH₃, and -CH=CH₂, and is more preferably -CH₃.

In one example of the present disclosure, the compound represented by Formula 4 may be selected from the following compounds.

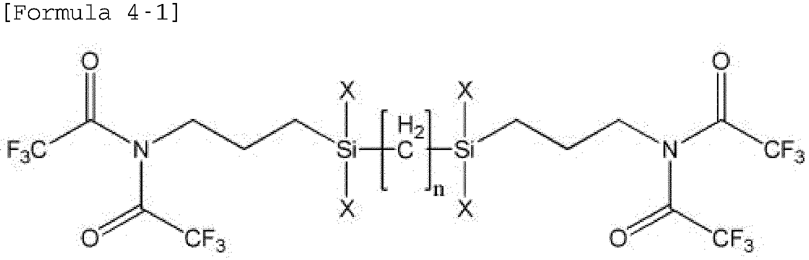

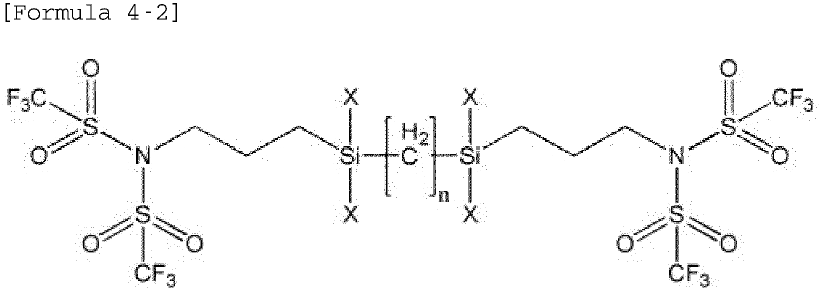

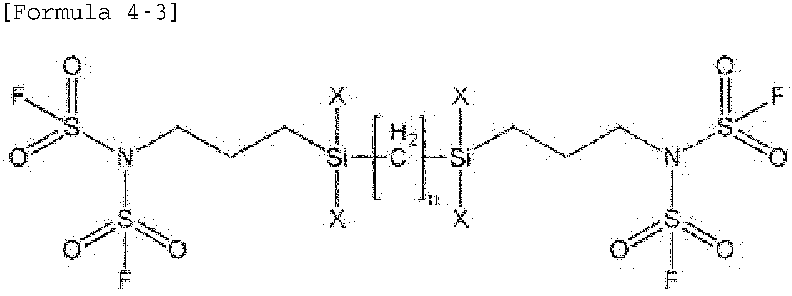

In Formulas 4-1 to 4-3, X is selected from a halogen atom, a linear or branched alkyl group having 1 to 10 carbon atoms, and a linear or branched alkenyl group having 2 to 10 carbon atoms, is preferably selected from F, -CH₃, -CH₂CH₃, and -CH=CH₂, and is more preferably -CH₃. In addition, n is an integer in the range of 0 to 2.

In one example of the present disclosure, the compound represented by Formula 5 may be selected from the following compounds.

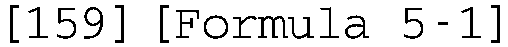

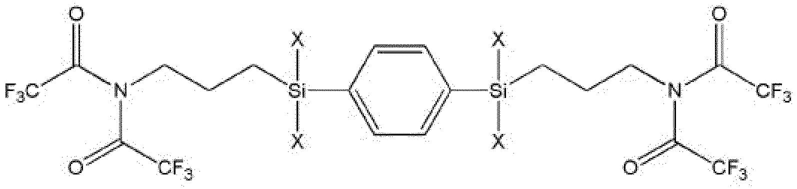

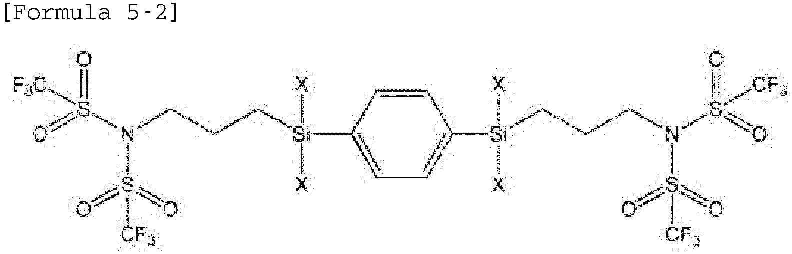

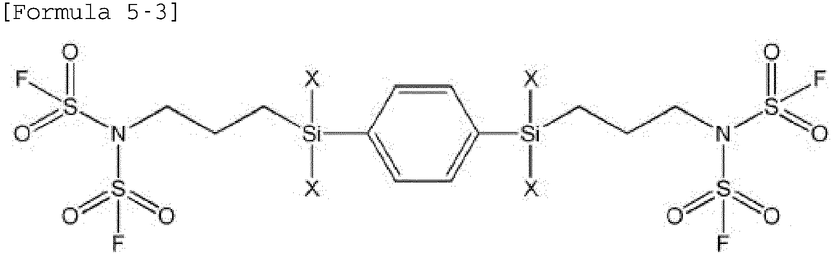

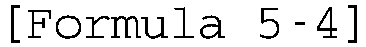

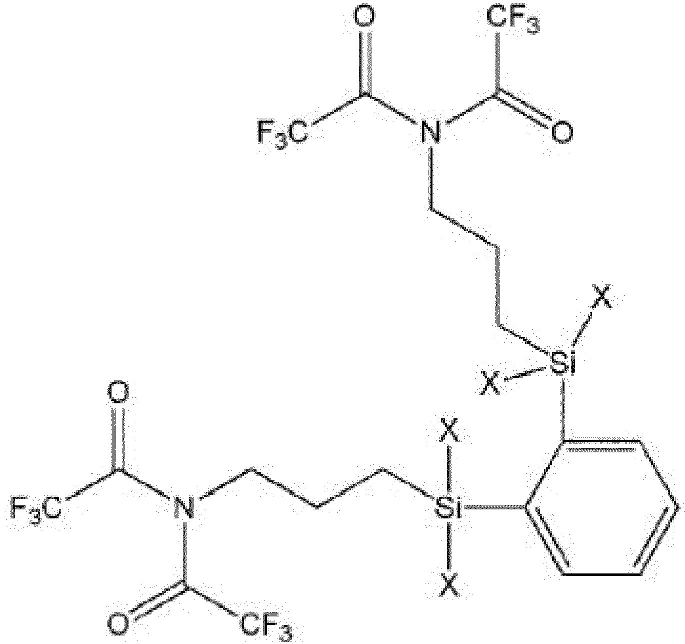

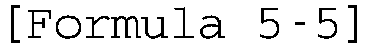

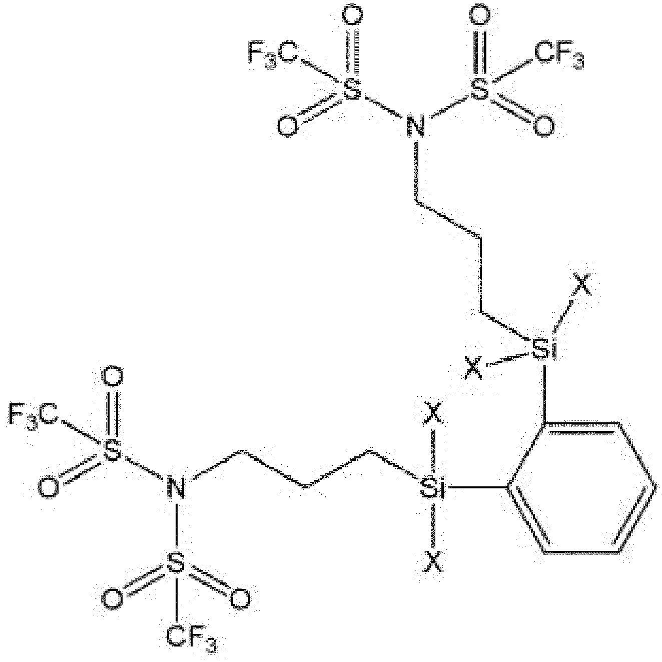

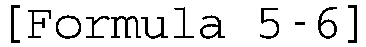

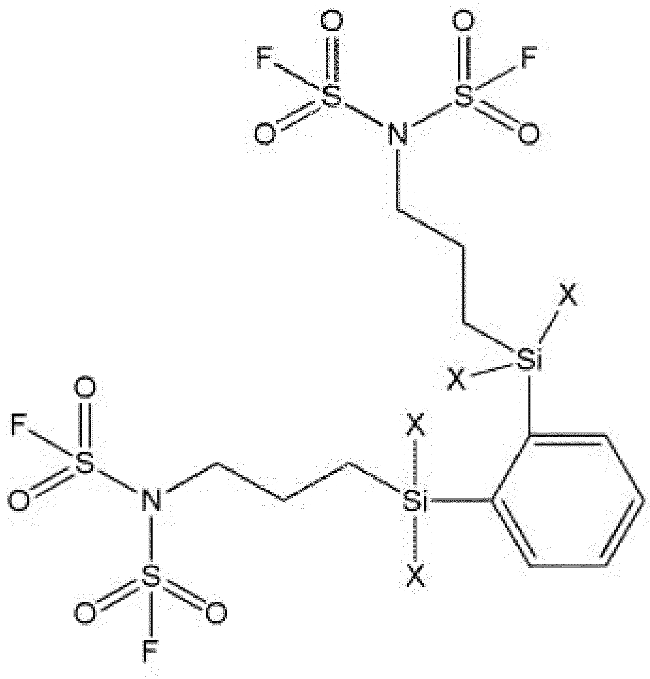

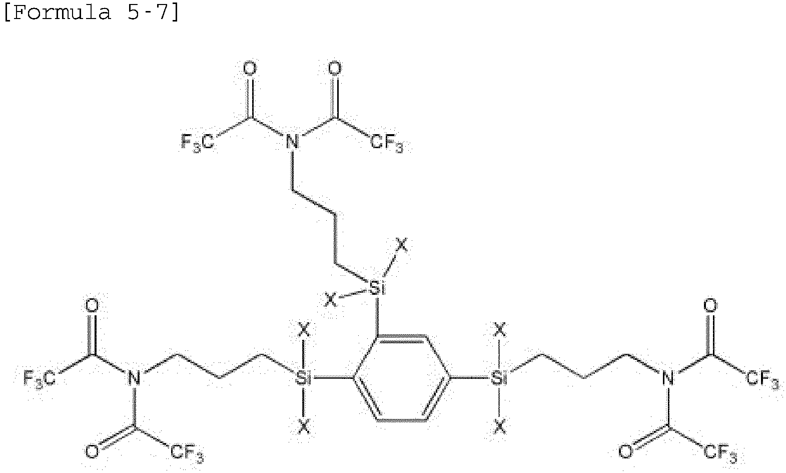

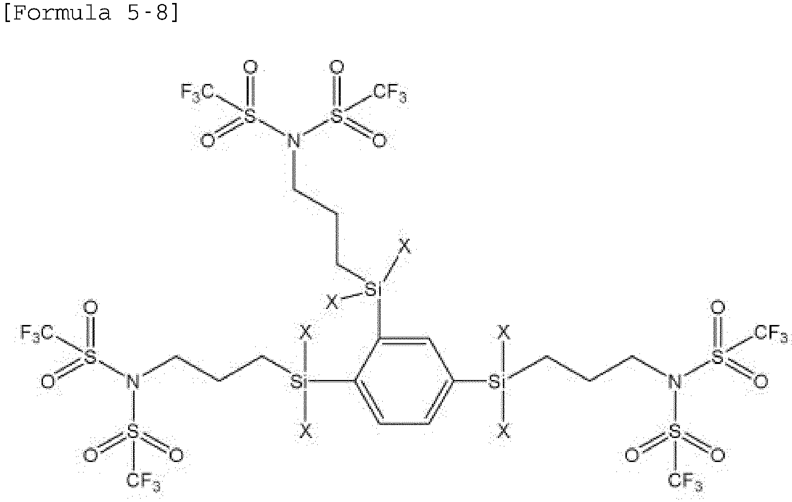

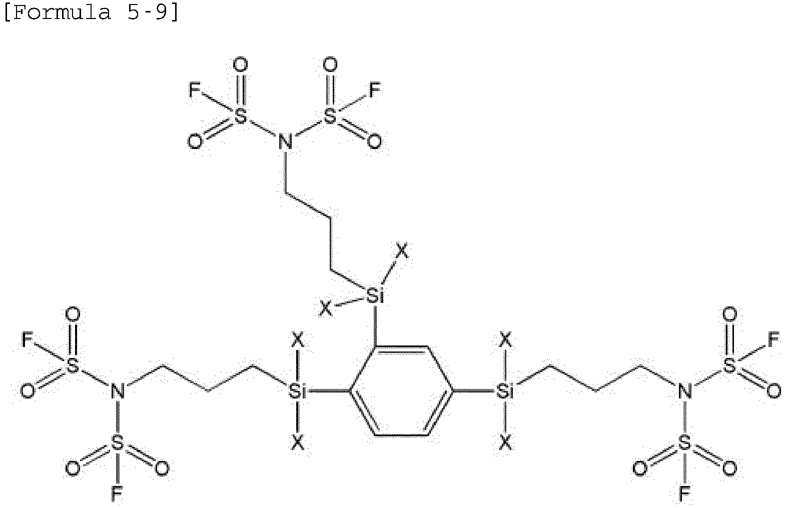

In Formulas 5-1 to 5-9, X is selected from a halogen atom, a linear or branched alkyl group having 1 to 10 carbon atoms, and a linear or branched alkenyl group having 2 to 10 carbon atoms, is preferably selected from -F, -CH₃, -CH₂CH₃, and -CH=CH₂, and is more preferably -CH₃.

In one example of the present disclosure, the compound represented by Formula 6 may be selected from the following compounds.

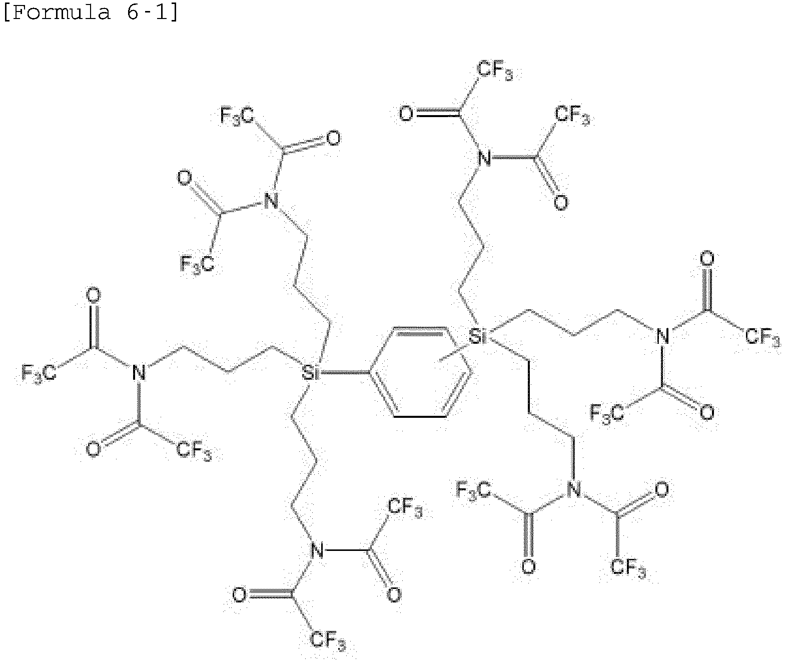

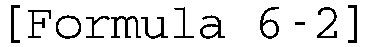

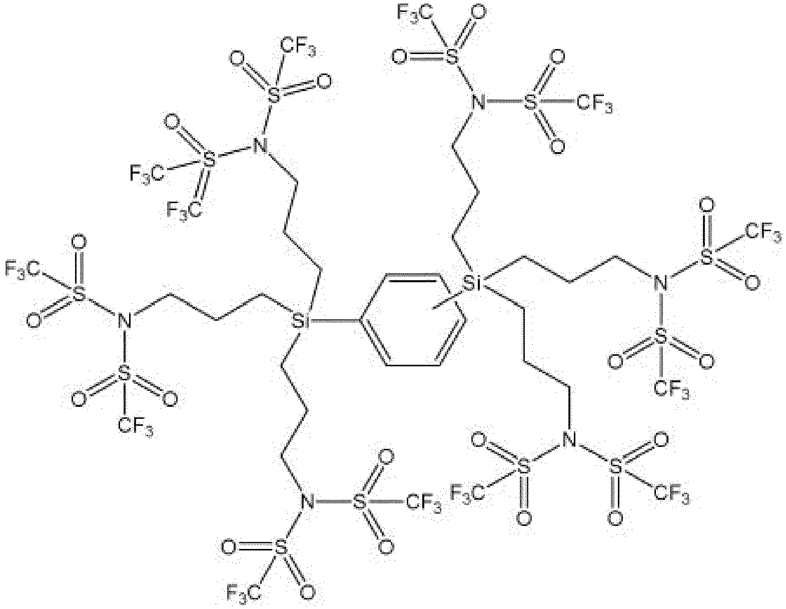

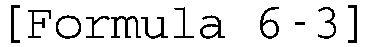

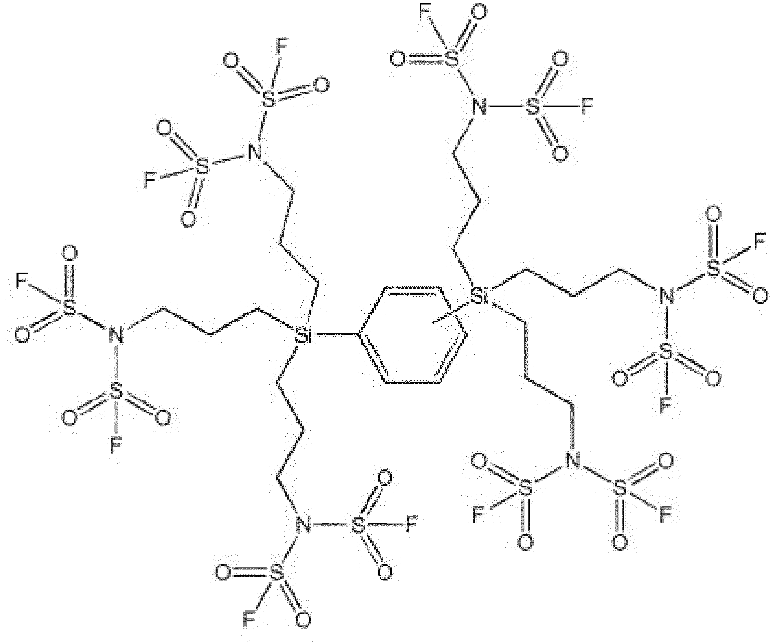

In one example of the reaction herein, the "halogen atom" may be selected from a fluorine atom, a chlorine atom, a bromine atom, or an iodine atom, is preferably a fluorine atom and a chlorine atom, and is more preferably a fluorine atom.

In one example of the present disclosure, the "alkyl group" may be linear or branched and may have 1 to 20 carbon atoms, 1 to 15 carbon atoms, 1 to 10 carbon atoms, 1 to 5 carbon atoms, or 1 to 3 carbon atoms. Examples thereof may include methyl, ethyl, propyl, isopropyl, isobutyl, tert-butyl, pentyl, hexyl, and the like.

In one example of the present disclosure, the "alkenyl group" may be linear or branched and may have 2 to 20 carbon atoms, 1 to 15 carbon atoms, 2 to 10 carbon atoms, 2 to 5 carbon atoms, or 2 to 3 carbon atoms. Examples thereof may include vinyl, propenyl, isopropenyl, butenyl, pentenyl, hexenyl, and the like.

In one example of the present disclosure, the "alkynyl group" may be linear or branched and may have 2 to 20 carbon atoms, 1 to 15 carbon atoms, 2 to 10 carbon atoms, 2 to 5 carbon atoms, or 2 to 3 carbon atoms. Examples thereof may include acetylenyl, propynyl, butynyl, pentynyl, hexynyl, and the like.

In one example of the present disclosure, "n" may be an integer in the range of 0 to 20, 0 to 15, 0 to 10, 0 to 5, 1 to 20, 1 to 15, 1 to 10, or 1 to 5.

In one example of the present disclosure, "m", "an integer in the range of 0 to 20", and "m'" may be each independently an integer in the range of 0 to 20, 0 to 15, 0 to 10, 1 to 20, 0 to 10, 0 to 3, 1 to 15, 1 to 10, or 1 to 5.

In one example of the present disclosure, "l" may be an integer in the range of 0 to 20, 0 to 15, 0 to 10, 1 to 20, 0 to 10, 0 to 3, 1 to 15, 1 to 10, or 1 to 5.

According to embodiments of the present disclosure, the anion receptor may be applied to electrolyte compositions or process compositions, which will be mentioned later, of electrochemical batteries or components thereof. According to one embodiment of the present disclosure, the electrolyte composition may be applied in liquid, gel-type, solid-type, and molded article (film, thin film, porous structure, sheet, and the like) form.

The present disclosure relates to a method of preparing the anion receptor compound.

According to one embodiment of the present disclosure, the method of preparing the anion receptor corresponds to methods of preparing the compounds represented by Formulas 1 to 6. In one example of the present disclosure, the compounds represented by Formulas 1 to 6 may be prepared according to the following reaction formulas. According to one embodiment of the present disclosure, methods known in the art to which the present disclosure pertains may be appropriately used or replaced in terms of starting materials, catalysts, solvents, reaction conditions, reaction mechanisms, and post-treatment processes (reactant separation, filtration, crystallization, washing, and the like) to obtain end products depending on chemical structural designs. For example, in a single or mixed solvent of water, methanol, isopropanol, ethanol, methylene chloride, dichloromethane, acetonitrile, tetrahydrofuran, methyl-tert-butyl ether, chloroform, dimethylformamide (DMF), N,N-dimethylacetamide, and the like, reactions may proceed at the following reaction temperature: - 40°C or higher, -10°C or higher, 0°C or higher, room temperature or higher, 40°C or higher, 50°C or higher, 80°C or higher, 100°C or higher, or in the range of -40°C to 130°C. For example, the reaction temperature may be appropriately selected depending on the reflux conditions of reaction mixtures. In addition, a catalyst such as a platinum catalyst, a basic substance (triethylamine, diisopropylethylamine, pyridine, and the like), and the like may be further added.

According to one embodiment of the present disclosure, a silicon compound represented by 1-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 1-1 below, to synthesize the compound represented by Formula 1-1.

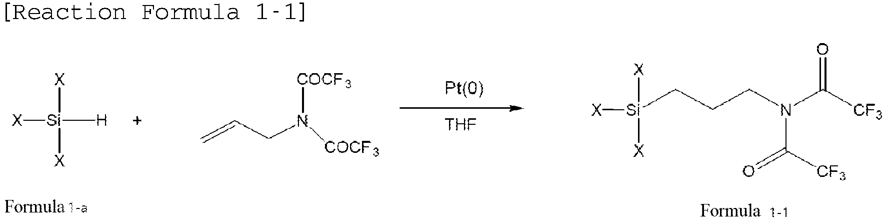

(In Reaction Formula 1-1, each X is the same as that defined above in Formula 1.)

According to one embodiment of the present disclosure, a silicon compound represented by 1-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 1-2 below, to synthesize the compound represented by Formula 1-2.

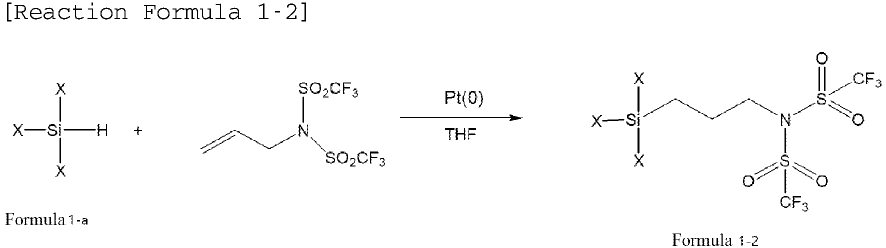

(In Reaction Formula 1-2, each X is the same as that defined above in Formula 1.)

According to one embodiment of the present disclosure, a silicon compound represented by 2-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 2-1 below, to synthesize the compound represented by Formula 1-3.

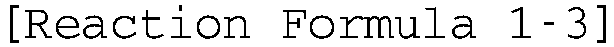

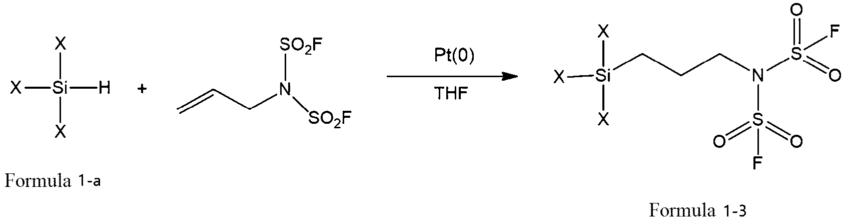

(In Reaction Formula 1-3, each X is the same as that defined above in Formula 1.)

According to one embodiment of the present disclosure, a silicon compound represented by 2-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 2-1 below, to synthesize the compound represented by Formula 2-1.

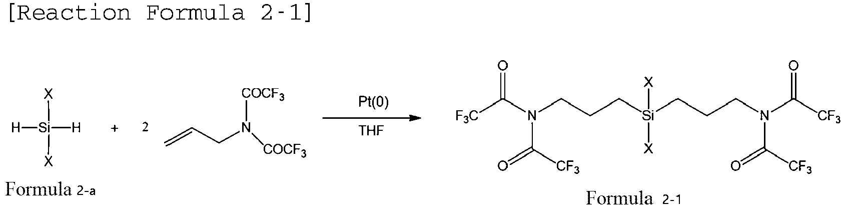

(In Reaction Formula 2-1, each X is the same as that defined above in Formula 2.)

According to one embodiment of the present disclosure, a silicon compound represented by 2-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 2-2 below, to synthesize the compound represented by Formula 2-2.

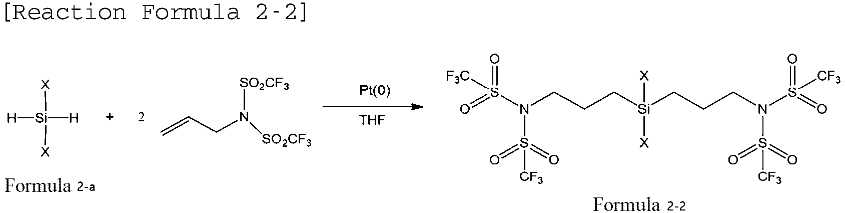

(In Reaction Formula 2-2, each X is the same as that defined above in Formula 2.)

According to one embodiment of the present disclosure, a silicon compound represented by 2-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 2-3 below, to synthesize the compound represented by Formula 2-3.

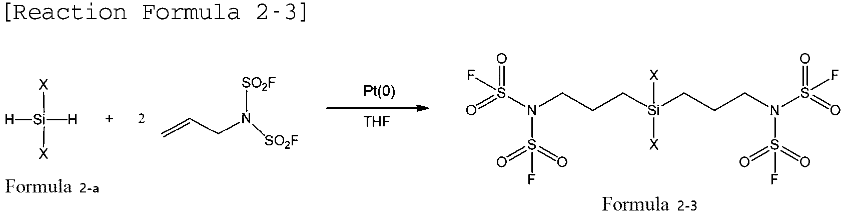

(In Reaction Formula 2-3, each X is the same as that defined above in Formula 2.)

According to one embodiment of the present disclosure, a silicon compound represented by 3-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 3-1 below, to synthesize the compound represented by Formula 3-1.

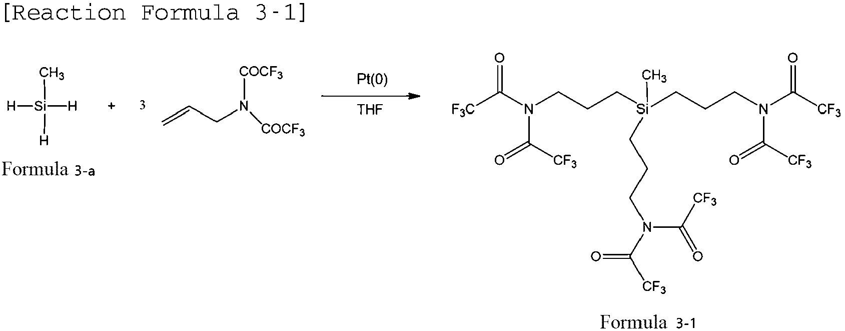

According to one embodiment of the present disclosure, a silicon compound represented by 3-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 3-2 below, to synthesize the compound represented by Formula 3-2.

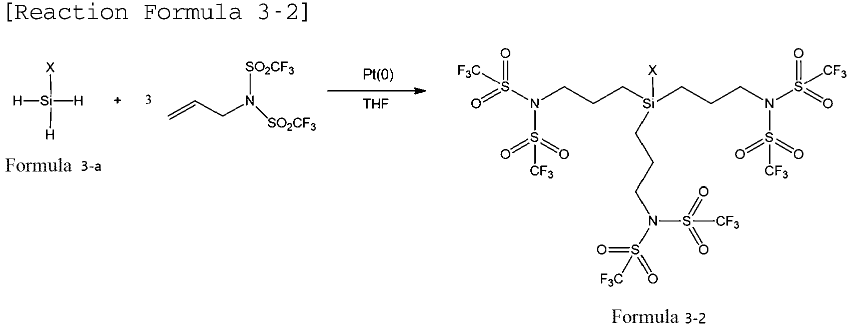

(In Reaction Formula 3-2, each X is the same as that defined above in Formula 3.)

According to one embodiment of the present disclosure, a silicon compound represented by 3-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 3-3 below, to synthesize the compound represented by Formula 3-3.

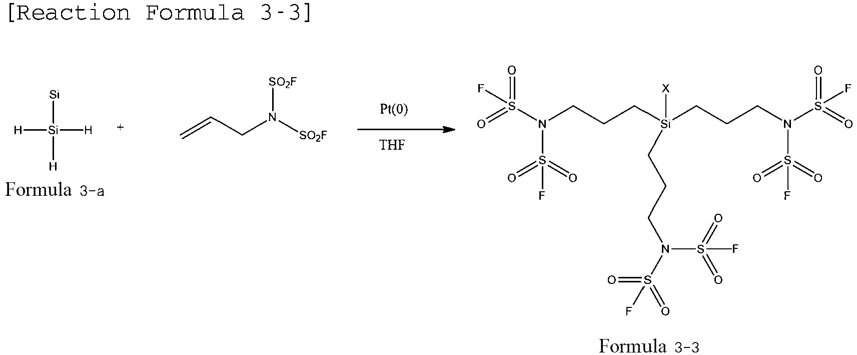

(In Reaction Formula 3-3, each X is the same as that defined above in Formula 3.)

According to one embodiment of the present disclosure, a silicon compound represented by 4-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 4-1 below, to synthesize the compound represented by Formula 4-1.

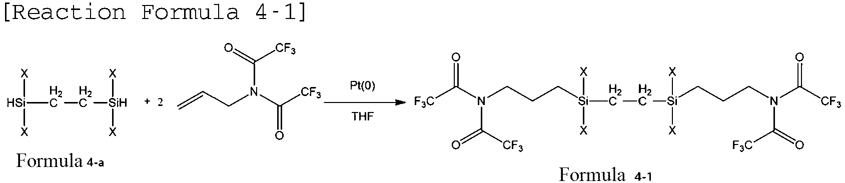

(In Reaction Formula 4-1, each X is the same as that defined above in Formula 4.)

According to one embodiment of the present disclosure, a silicon compound represented by 4-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 4-2 below, to synthesize the compound represented by Formula 4-2.

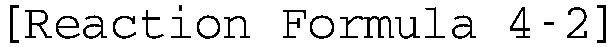

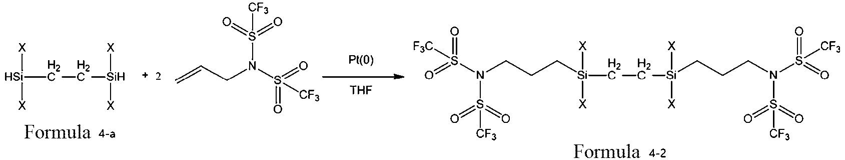

(In Reaction Formula 4-2, each X is the same as that defined above in Formula 4.)

According to one embodiment of the present disclosure, a silicon compound represented by 4-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 4-3 below, to synthesize the compound represented by Formula 4-3.

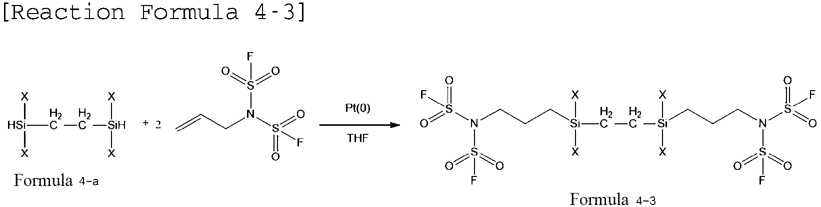

(In Reaction Formula 4-3, each X is the same as that defined above in Formula 4.)

According to one embodiment of the present disclosure, a silicon compound represented by 5-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 5-1 below, to synthesize the compound represented by Formula 5-1.

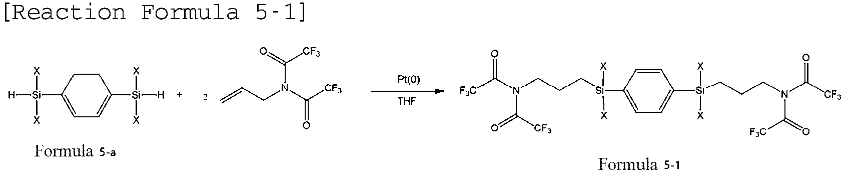

(In Reaction Formula 5-1, each X is the same as that defined above in Formula 5.)

According to one embodiment of the present disclosure, a silicon compound represented by 5-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 5-2 below, to synthesize the compound represented by Formula 5-2.

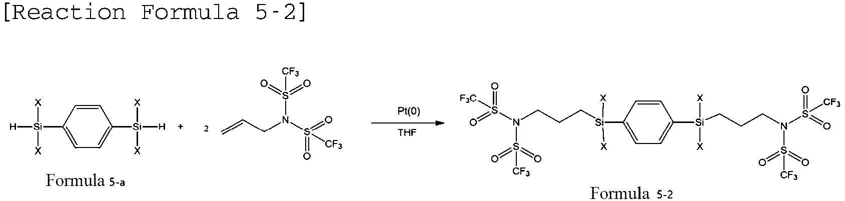

(In Reaction Formula 5-2, each X is the same as that defined above in Formula 5.)

According to one embodiment of the present disclosure, a silicon compound represented by 5-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 5-3 below, to synthesize the compound represented by Formula 5-3.

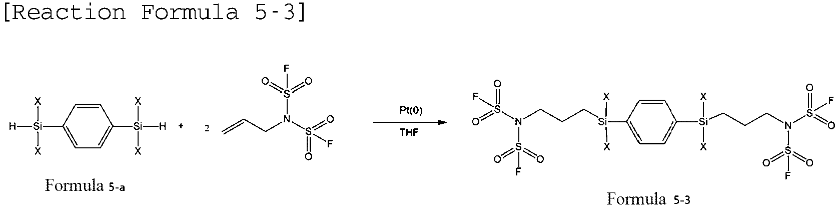

(In Reaction Formula 5-3, each X is the same as that defined above in Formula 5.)

According to one embodiment of the present disclosure, a silicon compound represented by 5-b below and an allyl compound having a -COCF₃-substituted nitrogen atom may be induced to react in tetrahydrofuran serving as a solvent in the presence of a platinum catalyst through a hydrosilylation reaction, as shown in Reaction Formula 5-4 below, to synthesize the compound represented by Formula 5-4.

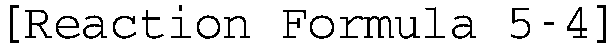

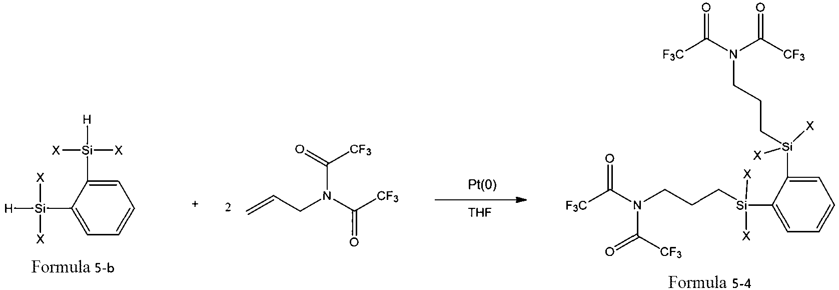

(In Reaction Formula 5-4, each X is the same as that defined above in Formula 5.)

According to one embodiment of the present disclosure, a silicon compound represented by 5-b below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 5-5 below, to synthesize the compound represented by Formula 5-5.

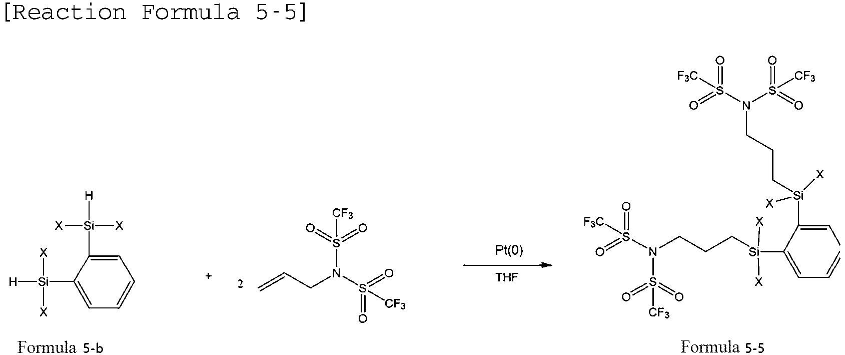

(In Reaction Formula 5-5, each X is the same as that defined above in Formula 5.)

According to one embodiment of the present disclosure, a silicon compound represented by 5-b below and an allyl compound having a -SO₂F-substituted nitrogen atom may be induced to react in tetrahydrofuran serving as a solvent in the presence of a platinum catalyst through a hydrosilylation reaction, as shown in Reaction Formula 5-6 below, to synthesize the compound represented by Formula 5-6.

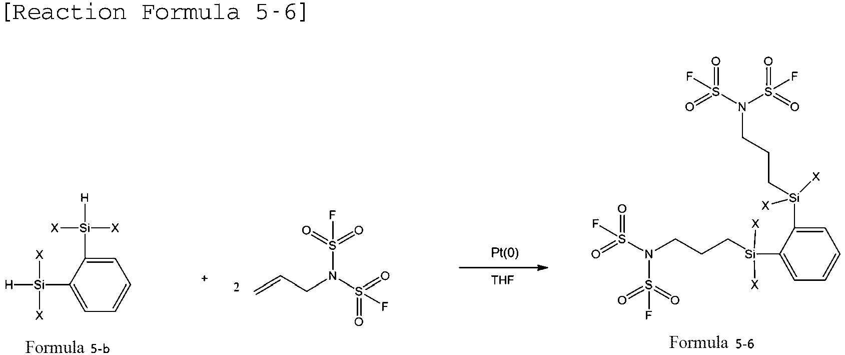

(In Reaction Formula 5-6, each X is the same as that defined above in Formula 5.)

According to one embodiment of the present disclosure, a silicon compound represented by 5-c below and an allyl compound having a -COCF₃-substituted nitrogen atom may be induced to react in tetrahydrofuran serving as a solvent in the presence of a platinum catalyst through a hydrosilylation reaction, as shown in Reaction Formula 5-7 below, to synthesize the compound represented by Formula 5-7.

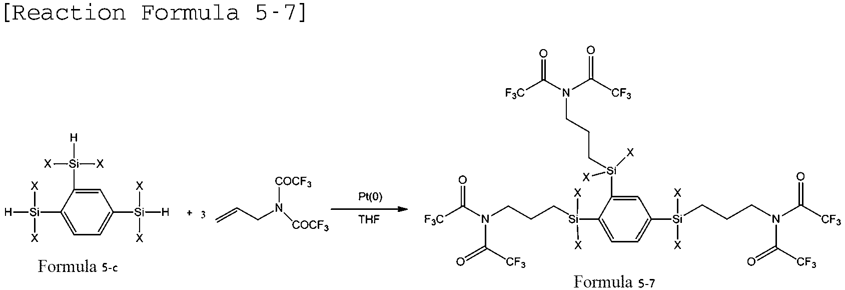

(In Reaction Formula 5-7, each X is the same as that defined above in Formula 5.)

According to one embodiment of the present disclosure, a silicon compound represented by 5-c below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 5-8 below, to synthesize the compound represented by Formula 5-8.

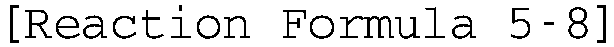

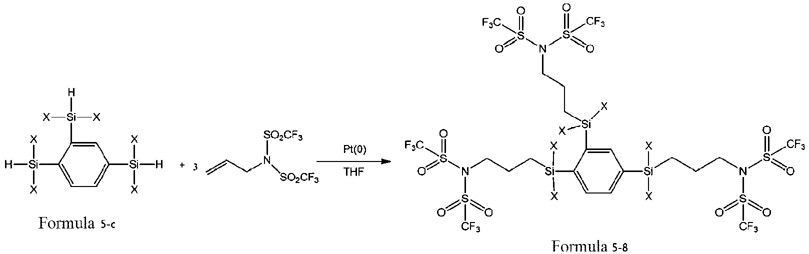

(In Reaction Formula 5-8, each X is the same as that defined above in Formula 5.)

According to one embodiment of the present disclosure, a silicon compound represented by 5-c below and an allyl compound having a -SO₂F-substituted nitrogen atom may be induced to react in tetrahydrofuran serving as a solvent in the presence of a platinum catalyst through a hydrosilylation reaction, as shown in Reaction Formula 5-9 below, to synthesize the compound represented by Formula 5-9.

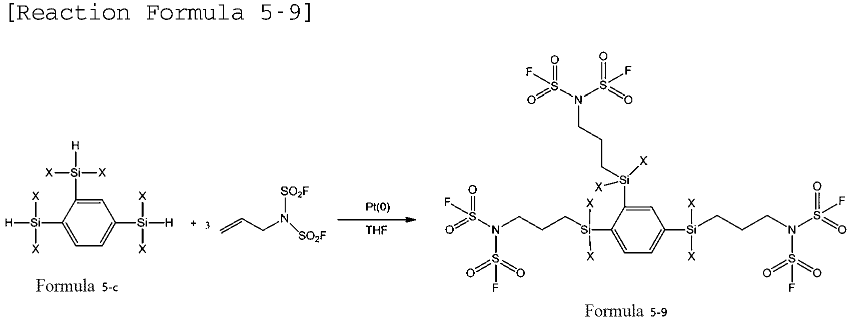

(In Reaction Formula 5-9, each X is the same as that defined above in Formula 5.)

According to one embodiment of the present disclosure, a silicon compound represented by 6-a below and an allyl compound having a -COCF₃-substituted nitrogen atom may be induced to react in tetrahydrofuran serving as a solvent in the presence of a platinum catalyst through a hydrosilylation reaction, as shown in Reaction Formula 6-1 below, to synthesize the compound represented by Formula 6-1.

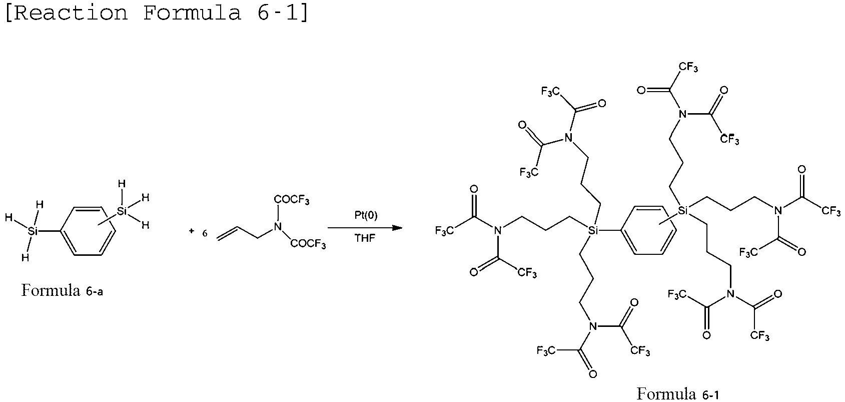

According to one embodiment of the present disclosure, a silicon compound represented by 6-a below and an allyl compound having a -SO₂CF₃-substituted nitrogen atom may be induced to react in tetrahydrofuran serving as a solvent in the presence of a platinum catalyst through a hydrosilylation reaction, as shown in Reaction Formula 6-2 below, to synthesize the compound represented by Formula 6-2.

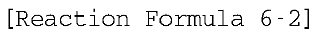

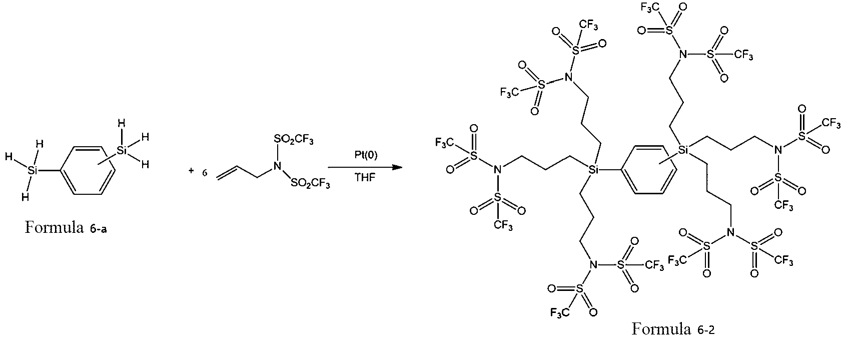

According to one embodiment of the present disclosure, a silicon compound represented by 6-a below and an allyl compound having a -SO₂F-substituted nitrogen atom may be induced to react in tetrahydrofuran serving as a solvent in the presence of a platinum catalyst through a hydrosilylation reaction, as shown in Reaction Formula 6-3 below, to synthesize the compound represented by Formula 6-3.

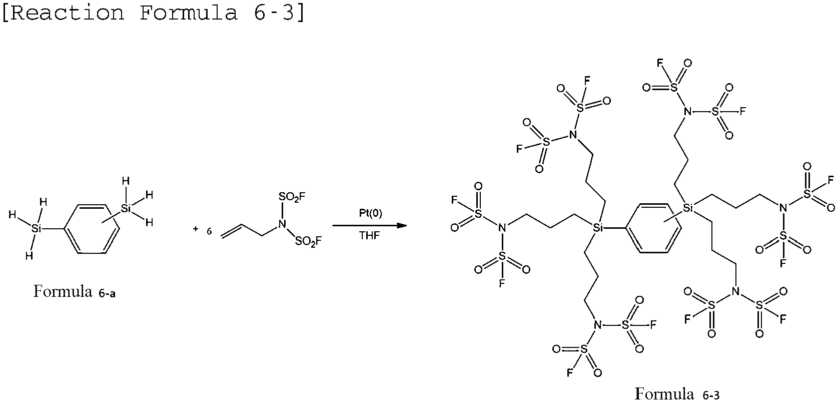

The present disclosure relates to an electrolyte composition containing the novel anion receptor according to the present disclosure.

According to one embodiment of the present disclosure, the anion receptor may contain at least one of the novel silicon compounds represented by Formulas 1 to 6 above in which an electron withdrawing group-substituted amine group is introduced into a silicon atom or an electron withdrawing group introduced into a nitrogen atom in a ring.

According to one embodiment of the present disclosure, the electrolyte composition, which contains the novel silicon compound mentioned above, further contains at least one compound of a linear hydrocarbon represented by Formula 7 below, cyclic hydrocarbons represented by Formulas 8 to 12 below, a polyalkylene oxide represented by Formula 13 below, and siloxane compounds represented by Formulas 14 to 16, into which a nitrogen atom in an electron withdrawing group-substituted amine group is introduced, which may be mixed with the novel silicon compound and contained in the electrolyte composition.

In other words, a nitrogen atom in a ring or an electron withdrawing group-substituted amine group, among functional groups introduced as side chains, may promote the dissociation of alkali metal salts, thus increasing electronegativity and cation mobility. For example, a nitrogen in a ring or an amine group is rendered electron-deficient by electron withdrawing groups, such as -SO₂CF₃, -OSO₂CF₃, -SO₂CHF₂, - OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and thus may form electrically neutral complexes with anionic species of the alkali metal salts to promote the dissociation of the alkali metal salts. In addition, a hydrogen atom in an amine group causes an electron withdrawing group-substituted nitrogen atom to be positioned only at the terminal of a hydrocarbon chain. For this reason, steric hindrance, instability to lithium salts (for example, LiPF₆), and electrochemical instability caused by the presence of a nitrogen atom susceptible to attack in the middle of the conjugate, such as aza-ethers described in U.S. Patent Nos. 5,705,689 and 6,120,941, may be resolved. Furthermore, the center of the nitrogen atom is further exposed, so bulky anions are enabled to be easily accessible. For this reason, high ion conductivity may be obtained by promoting the dissociation of the lithium salts and increasing cation mobility.

In one example of the present disclosure, the compound of Formula 7 below may perform a role as an anion receptor in the electrolyte composition (or electrolyte).

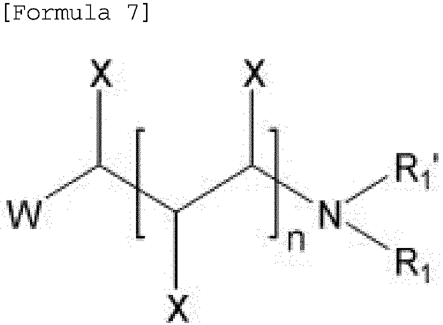

In one example of the present disclosure, X and n in Formula 7 are the same as those defined above in Formula 1. In Formula 7, R₁ and R₁' are each independently selected from a hydrogen atom, a halogen atom, and an electron withdrawing group that is selected from -SO₂CF₃, -OSO₂CF₃, -SO₂CHF₂, - OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, wherein R₁ and R₁' are not simultaneously hydrogen atoms in the same molecule, and at least one of R₁ and R₁' is an electron withdrawing group.

In one example of the present disclosure, W in Formula 7 may be selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, 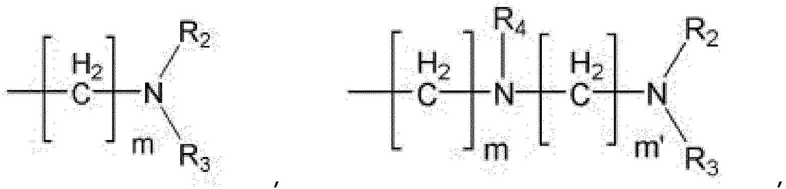 and 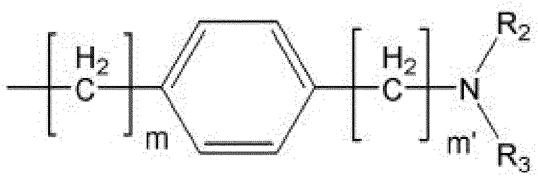 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in the range of 0 to 20).

In one example of the present disclosure, the compound of Formula 7 may be selected from the following compounds.

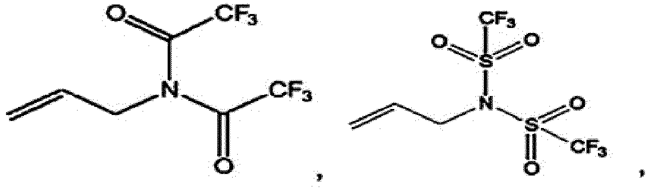

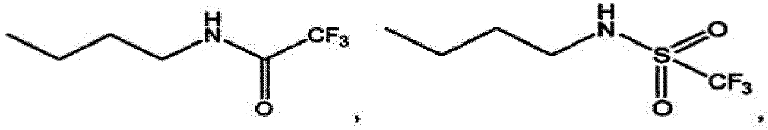

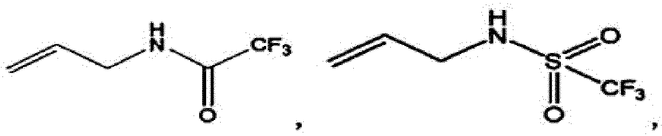

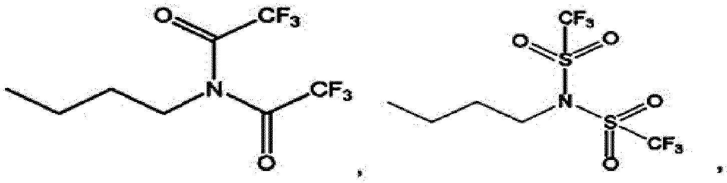

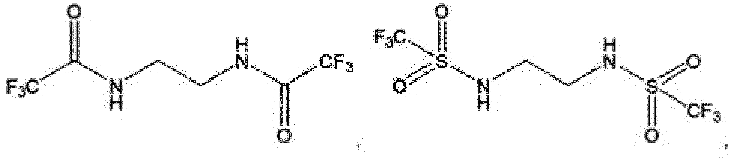

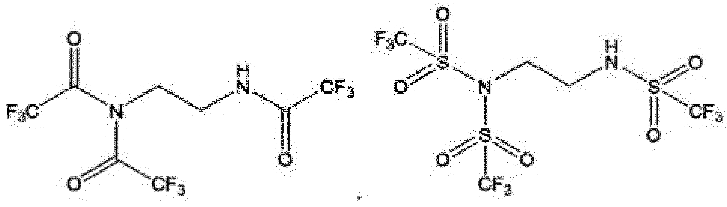

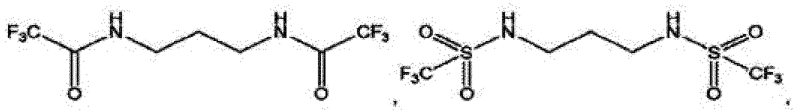

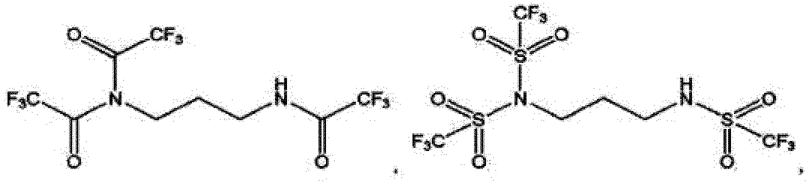

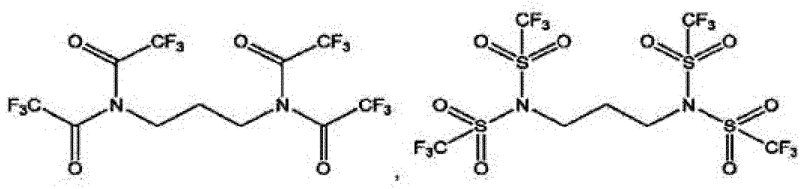

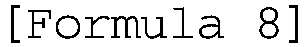

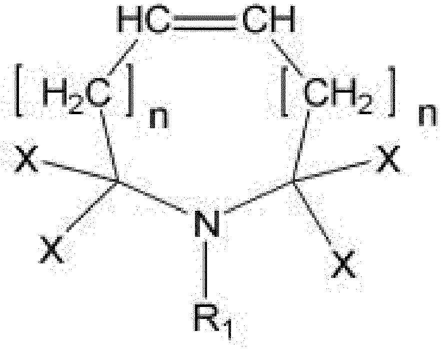

In one example of the present disclosure, the compound represented by Formula 8 may perform a role as an anion receptor in the electrolyte composition (or electrolyte). Additionally, X, R₁, and n in Formula 8 are the same as those defined above in Formula 1.

In one example of the present disclosure, the compound represented by Formula 8 may be selected from the following compounds.

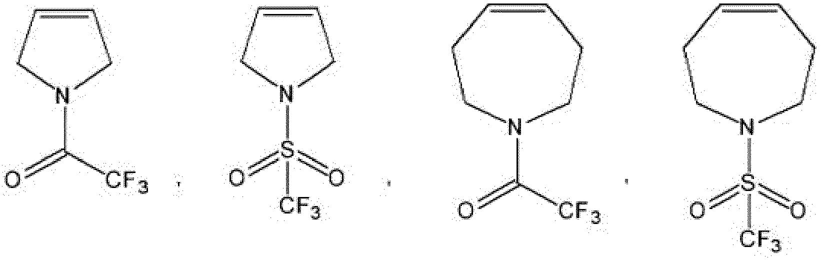

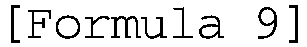

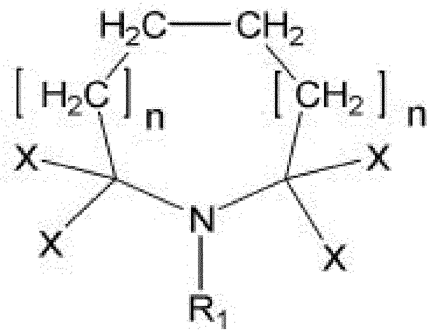

In one example of the present disclosure, the compound of Formula 9 may perform a role as an anion receptor in the electrolyte composition (or electrolyte). Additionally, R₁, X, and n in Formula 9 are the same as those defined above in Formula 1.

In one example of the present disclosure, the compound represented by Formula 9 may be selected from the following compounds.

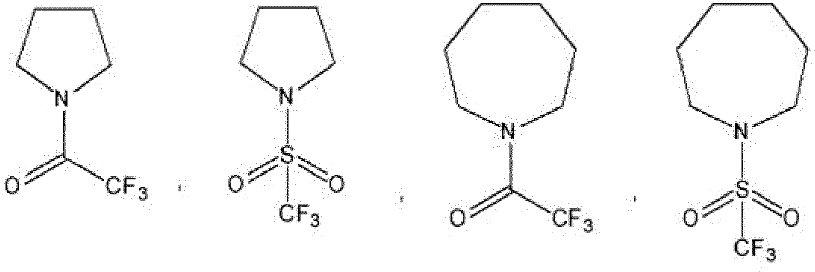

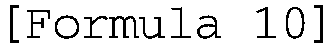

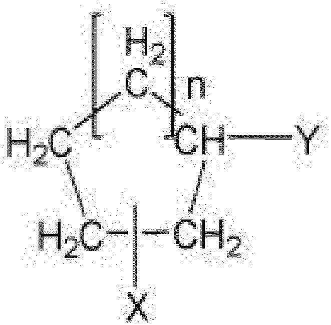

In one example of the present disclosure, the compound represented by Formula 10 may perform a role as an anion receptor in the electrolyte composition (or electrolyte). Additionally, X, Y, and n in Formula 10 are the same as those defined above in Formula 1.

In one example of the present disclosure, the compound represented by Formula 10 may be selected from the following compounds.

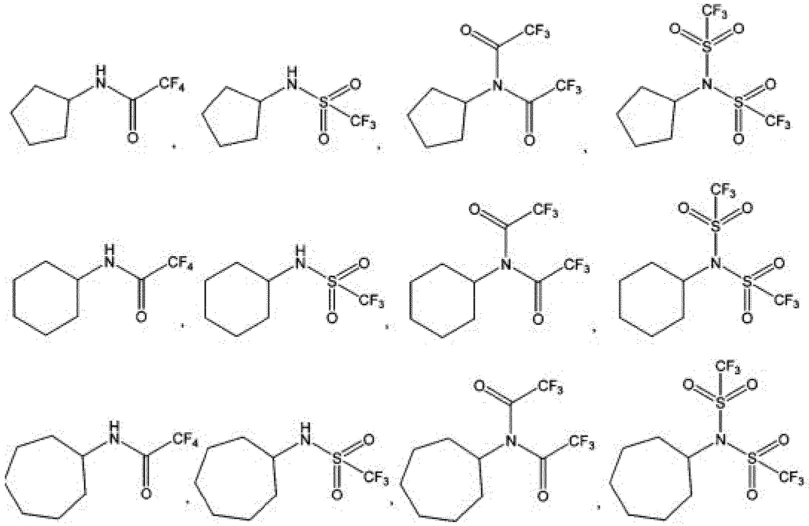

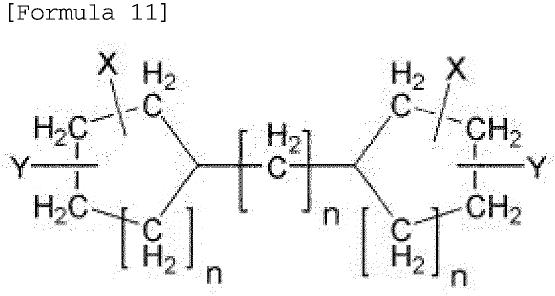

In one example of the present disclosure, the compound represented by Formula 11 may perform a role as an anion receptor in the electrolyte composition (or electrolyte). Additionally, X, Y, and n in Formula 11 are the same as those defined above in Formula 1.

In one example of the present disclosure, the compound represented by Formula 11 may be selected from the following compounds.

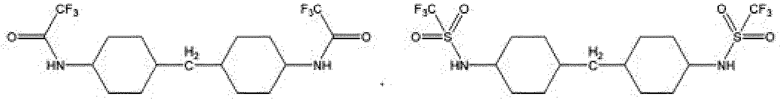

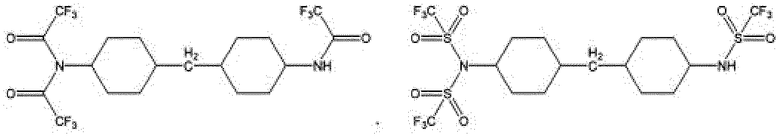

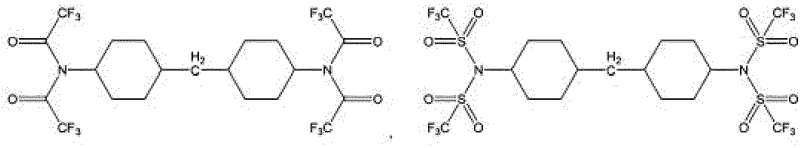

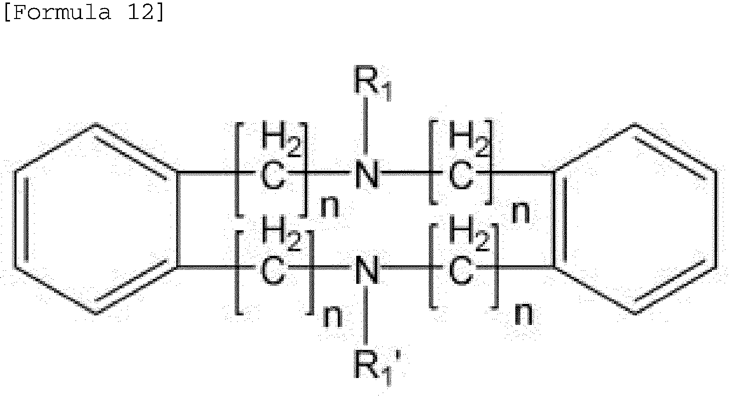

In one example of the present disclosure, the compound represented by Formula 12 may perform a role as an anion receptor in the electrolyte. Additionally, n is the same as that defined above in Formula 1 while R₁ and R₁' are the same as those defined in Formula 7.

In one example of the present disclosure, the compound represented by Formula 12 may be selected from the following compounds.

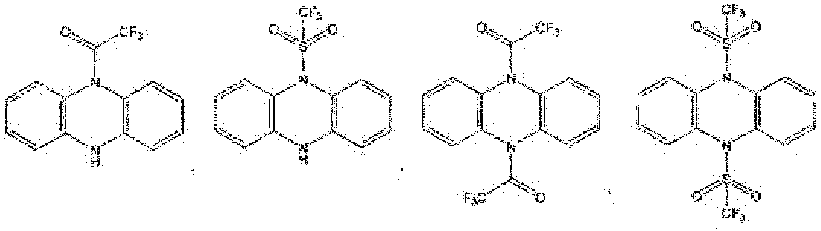

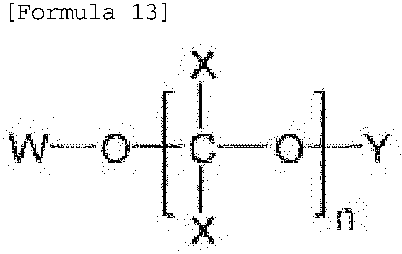

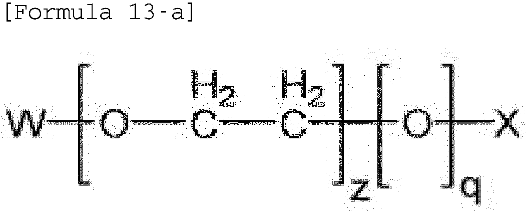

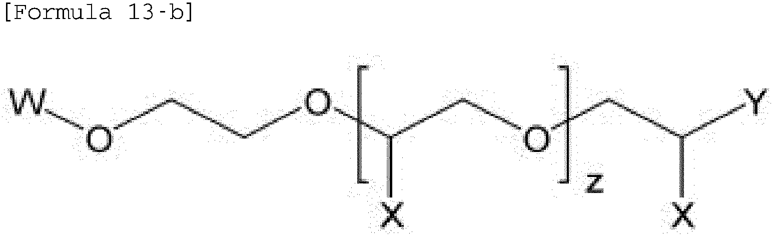

In one example of the present disclosure, the compounds represented by Formulas 13, 13-a, and 13-b may perform a role as an anion receptor in the electrolyte. Additionally, X, Y, and n are the same as those defined above in Formula 1. Furthermore, W is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, 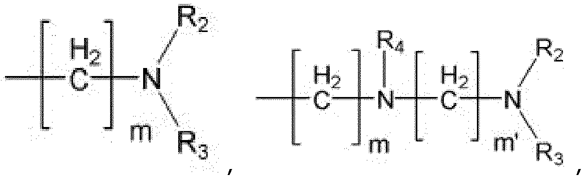 and 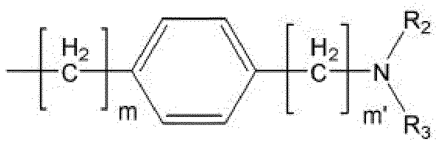 (where R₂, R₃, and R₄ are each independently selected from a hydrogen atom, a halogen atom, and an electron withdrawing group that is selected from - SO₂CF₃, -OSO₂CF₃, -SO₂CHF₂, -OSO₂CHF₂, -SO₂CH₂F, -OSO₂CH₂F, -COCF₃, -OCOCF₃, -COCHF₂, -OCOCHF₂, -COCH₂F, -OCOCH₂F, -SO₂CN, -OSO₂CN, - SO₂F, -OSO₂F, -CF₃, -OCF₃, and -CN, wherein R₂, R₃, and R₄ are not simultaneously hydrogen atoms, and m and m' are each independently an integer in the range of 0 to 20), z is an integer in the range of 1 to 20, and n and q are each independently an integer in the range of 0 to 20. Preferably, z is an integer in the range of 1 to 10, and n and q are each independently an integer in the range of 0 to 10.

In one example of the present disclosure, the compounds represented by Formulas 13, 13-a, and 13-b may be each independently selected from the following compounds.

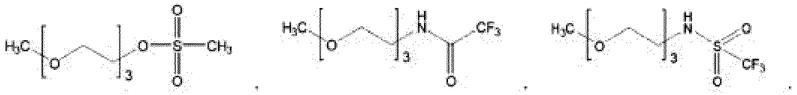

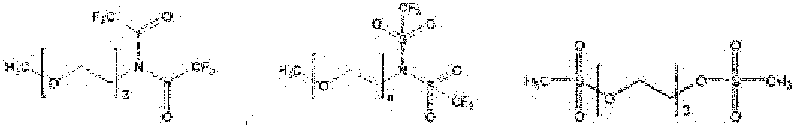

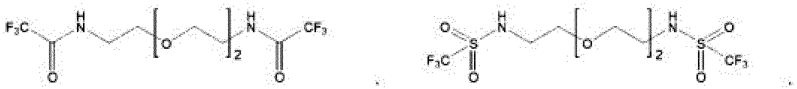

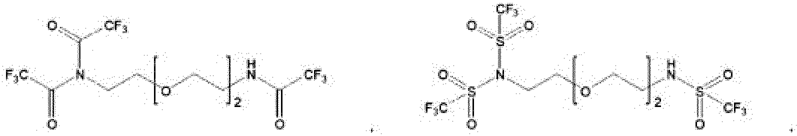

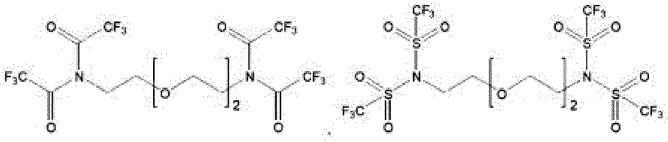

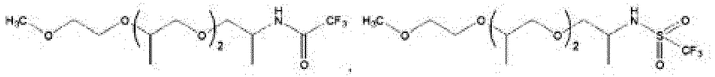

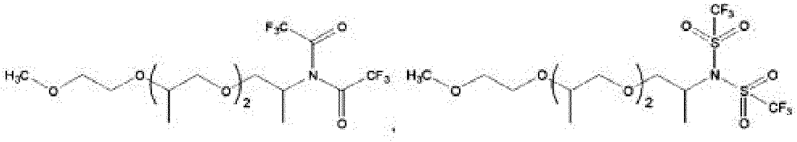

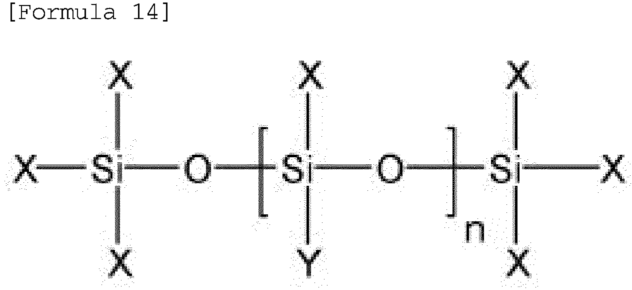

In one example of the present disclosure, the compound represented by Formula 14 may perform a role as an anion receptor in the electrolyte composition (or electrolyte). Additionally, X, Y, and n in Formula 14 are the same as those defined above in Formula 1.

In one example of the present disclosure, the compound represented by Formula 14 may be selected from the following compounds.

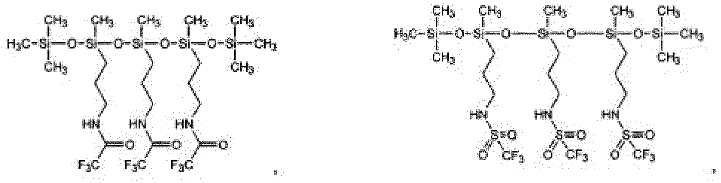

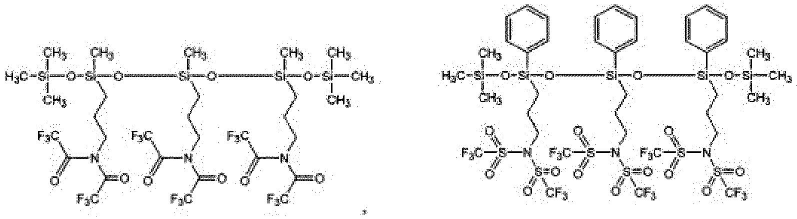

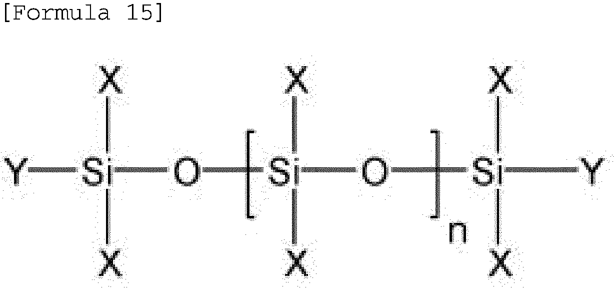

In one example of the present disclosure, the compound represented by Formula 15 may perform a role as an anion receptor in the electrolyte composition (or electrolyte). Additionally, X, Y, and n in Formula 15 are the same as those defined above in Formula 1.

In one example of the present disclosure, the compound represented by Formula 15 may be selected from the following compounds.

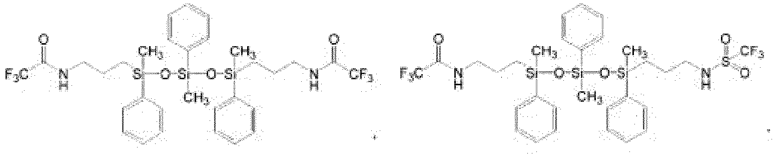

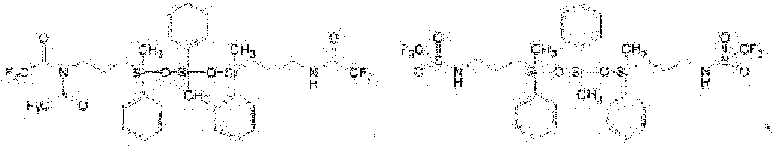

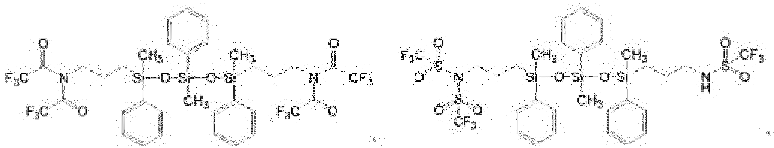

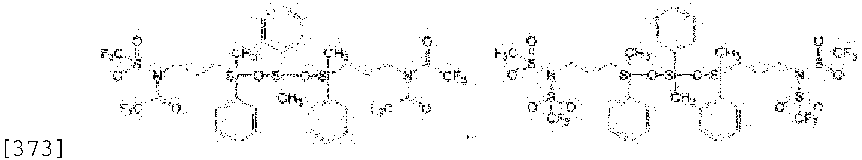

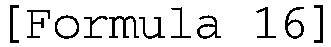

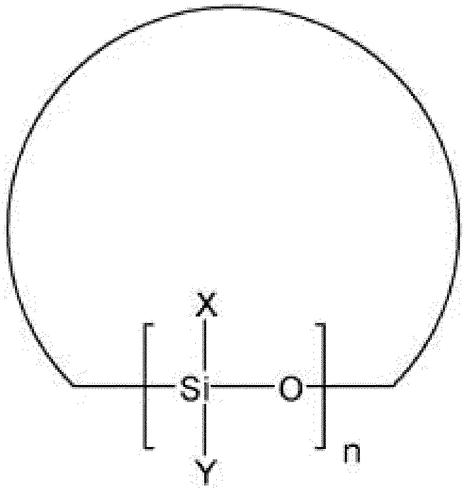

In one example of the present disclosure, the compound represented by Formula 16 may perform a role as an anion receptor in the electrolyte composition (or electrolyte). Additionally, X, Y, and n in Formula 16 are the same as those defined above in Formula 1.

In one example of the present disclosure, the compound represented by Formula 16 may be selected from the following compounds.

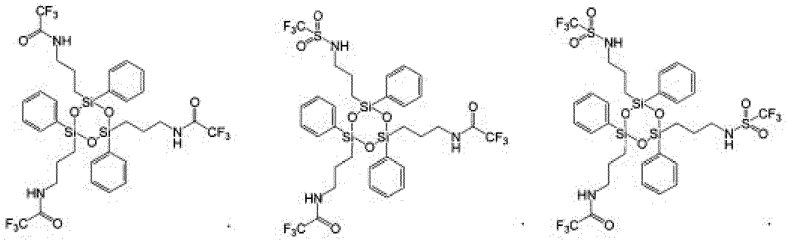

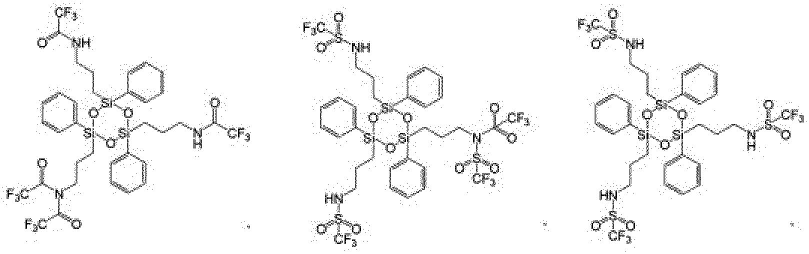

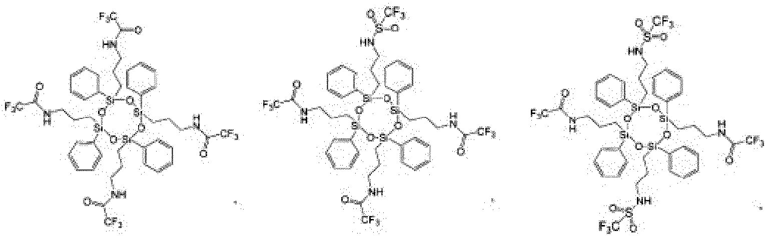

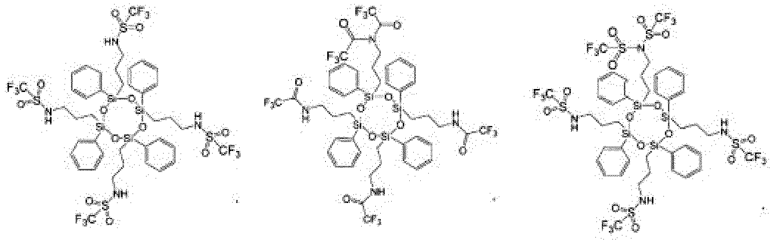

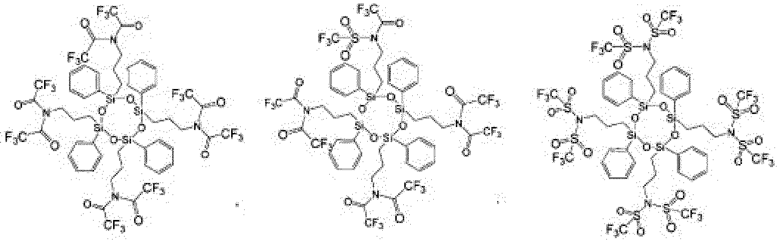

According to one embodiment of the present disclosure, the total anion receptor ("the anion receptor compounds of Formulas 1 to 6 + the anion receptors of Formulas 7 to 16") contained in the electrolyte composition accounts for 0.01 wt% to 40 wt%, 0.01 wt% to 35 wt%, 0.01 wt% to 30 wt%, 0.01 wt% to 20 wt%, 0.01 wt% to 10 wt%, 0.1 wt% to 10 wt%, 0.5 wt% to 5 wt%, or 1 wt% to 2 wt%, based on the total electrolyte composition mass. When the content above is less than 0.01 wt%, the performance of the anion receptor may be challenging to demonstrate. When the content above exceeds 40 wt%, the effects of improving ion conductivity, electrochemical stability, and low-temperature performance may be challenging to obtain.

According to one embodiment of the present disclosure, at least one of the compounds represented by Formulas 7 to 16 accounts for 0.01 wt% to 50 wt% (or less than 50 wt%), 0.1 wt% to 50 wt%, 1 wt% to 50 wt%, 2 wt% to 40 wt%, or 10 wt% to 30 wt%, based on the total anion receptor mass. When the content above falls within the above range, an electrolyte with improved ion conductivity and electrochemical stability at room temperature may be provided.

According to one embodiment of the present disclosure, the mixing ratio (w/w) of at least one of the silicon-based anion receptor compounds represented by Formulas 1 to 6 to at least one of the compounds represented by Formulas 7 to 16, contained in the anion receptor, may be in the range of 99:1 to 50:50. When the content above falls within the above ratio range, the effects of improving the ion conductivity and electrochemical stability at room temperature may be obtained.

According to one embodiment of the present disclosure, the electrolyte composition may contain an alkali metal ion-containing material and a nonaqueous solvent. In one example of the present disclosure, any nonaqueous solvents applicable to batteries may be used as the nonaqueous solvent without limitation. For example, the nonaqueous solvent may include at least one selected from the group consisting of ethylene carbonate (EC), dimethyl carbonate (DMC), diethyl carbonate (DEC), propylene carbonate (PC), dipropyl carbonate, ethyl methyl carbonate (EMC), methyl propyl carbonate and ethyl propyl carbonate, dimethylsulfamoyl fluoride, 1,2-butylene carbonate, 2,3-butylene carbonate, 1,2-pentylene carbonate, 2,3-pentylene carbonate, vinylene carbonate, ether, organic carbonate, lactone, formate, ester, sulfonate, nitrate, oxazolidinone, tetrahydrofuran, 2-methyltetrahydrofuran, 4-methyl-1,3-dioxolane, 1,3-dioxolane, 1,2-dimethoxyethane, dimethoxymethane, γ-butyrolactone, methyl formate, sulfolane, acetonitrile, 3-methyl-2-oxazolidinone, and N-methyl-2-pyrrolidinone, but is not limited thereto.

In one example of the present disclosure, the nonaqueous solvent in the electrolyte composition may account for 1 wt% or more, 15 wt% or more, 30 wt% or more, 60 wt% or more, or 80 wt% to 99 wt%, based on the remaining or total electrolyte composition mass.

In one example of the present disclosure, the alkali metal ion-containing material is an alkali metal ion-containing electrolyte salt and may, for example, be a lithium salt containing Li⁺ as a cation. In one example of the present disclosure, any of those applicable to electrolytes of batteries may be used as the lithium salt without limitation. For example, the lithium salt may include at least one selected from the group consisting of LiSO₃CF₃, LiCOOC₂F₅, LiN(SO₂CF₃)₂, LiC(SO₂CF₃)₃, LiClO₄, LiAsF₆, LiBF₄, LiPF₆, LiSbF₆, LiI, LiBr, and LiCl, but is not limited thereto.

In one example of the present disclosure, the alkali metal ion-containing material in the electrolyte composition may account for 3 wt% to 60 wt%, 3 wt% to 50 wt%, 10 wt% to 50 wt%, 20 wt% to 50 wt%, 3 wt% to 10 wt%, or 3 wt% to 5 wt%, based on the total electrolyte composition mass. With appropriate alkali ions supplied, stable battery performance may be provided and maintained.

According to one embodiment of the present disclosure, the electrolyte composition may form a nonaqueous liquid electrolyte, a gel-type polymer electrolyte and/or a solid polymer electrolyte, a solid sulfide-polymer-based electrolyte, and a solid oxide-polymer-based electrolyte, and may further contain additional components depending on the types of electrolyte. Examples of additional components may include polymeric compounds, polymer supports, additives (for example, curing initiators and polymerization inhibitors), nanometallic oxides, and the like.

According to one embodiment of the present disclosure, the electrolyte composition may form a nonaqueous liquid electrolyte. For example, the electrolyte composition for the nonaqueous liquid electrolyte may contain:
(a) an anion receptor being the novel silicon-based anion receptor compounds represented by Formulas 1 to 6 in which an electron withdrawing group-substituted amine group is introduced into a silicon atom or an electron withdrawing group is introduced into a nitrogen atom in a ring,
   or an anion receptor being a mixture of the novel silicon-based anion receptor compounds represented by Formulas 1 to 6 and at least one selected from the linear hydrocarbon compound represented by Formula 7, the cyclic hydrocarbon compounds represented by Formulas 8 to 12 below, the polyalkylene oxide compound represented by Formula 13, and the siloxane compounds represented by Formulas 14 to 16, into which an electron withdrawing group-substituted amine group is introduced or in which an electron withdrawing group is introduced into a nitrogen atom in a ring;
(b) a nonaqueous solvent; and
(c) an alkali metal ion-containing material

.

In one example of the present disclosure, (a) the anion receptor, (b) the nonaqueous solvent, and (c) the alkali metal ion-containing material in the electrolyte composition for the nonaqueous liquid electrolyte are the same as those mentioned above in the electrolyte composition. Preferably, in the electrolyte composition for the nonaqueous liquid electrolyte, the anion receptor accounts for 0.01 wt% to 5 wt%, the nonaqueous solvent accounts for 80 wt% or more or 95 wt% to 99 wt%, and the alkali metal ion-containing material accounts for 10 wt% to 30 wt%, 12 wt% to 20 wt%, or 12 wt% to 15 wt%, based on the total electrolyte composition mass.

According to one embodiment of the present disclosure, the electrolyte composition may form a gel-type polymer electrolyte. For example, the electrolyte composition for the gel-type polymer electrolyte may contain:
(a) an anion receptor being the novel silicon-based anion receptor compounds represented by Formulas 1 to 6 in which an electron withdrawing group-substituted amine group is introduced into a silicon atom or an electron withdrawing group is introduced into a nitrogen atom in a ring, an anion receptor being a mixture of the novel silicon-based anion receptor compounds represented by Formulas 1 to 6 and at least one selected from the linear hydrocarbon compound represented by Formula 7, the cyclic hydrocarbon compounds represented by Formulas 8 to 12, the polyalkylene oxide compound represented by Formula 13, and the siloxane compounds represented by Formulas 14 to 16, into which an electron withdrawing group-substituted amine group is introduced or in which an electron withdrawing group is introduced into a nitrogen atom in a ring;
(b) a crosslinkable polymeric compound, a polymeric compound selected from linear, reticular, comb-shaped, and branched polymeric compounds, or both;
(c) a polymer support;
(d) a nonaqueous solvent; and
(e) an alkali metal ion-containing material.

In one example of the present disclosure, (a) the anion receptor, (d) the nonaqueous solvent, and (e) the alkali metal ion-containing material in the electrolyte composition for the gel-type polymer electrolyte are the same as those mentioned above in the electrolyte composition. Preferably, in the electrolyte composition for the gel-type polymer electrolyte, (a) the anion receptor accounts for 0.01 wt% to 30 wt%, (d) the nonaqueous solvent accounts for 20 wt% to 80 wt%, and (e) the alkali metal ion-containing material accounts for 10 wt% to 30 wt%, based on the total electrolyte composition mass.

In one example of the present disclosure, any of those applicable to batteries (for example, electrolytes) may be used as (b) the polymeric compound selected from the linear, reticular, comb-shaped, and branched polymeric compounds in the electrolyte composition for the gel-type polymer electrolyte without limitation. Examples thereof may include a flexible inorganic polymer, a linear polyether, or both.

In one example of the present disclosure, the flexible inorganic polymer may be selected from polysiloxane, polyphosphazene, or a copolymer thereof, and the linear polyether may be polyalkylene oxide.

In one example of the present disclosure, any of those applicable to batteries (for example, electrolytes) may be used as the crosslinkable polymeric compound without limitation. For example, the crosslinkable polymeric compound may include at least one selected from the group consisting of polymeric compounds in which the main chain of a flexible inorganic polymer or linear polyether serves as the backbone, and a functional group such as acrylic, epoxy, trimethylsilyl, silanol, vinyl methyl, or divinylmonomethyl is introduced at the terminal thereof, but is not limited thereto. For example, the crosslinkable polymeric compound may be bisphenol A ethoxylate dimethacrylate (Bis-15m) of Formula 17 below, polyethylene glycol dimethacrylate (PEGDMA) represented by Formula 18 below, vinylene carbonate (VC) represented by Formula 19 below, or vinyl ethylene carbonate (VEC) represented by Formula 20 below, but is not limited thereto.

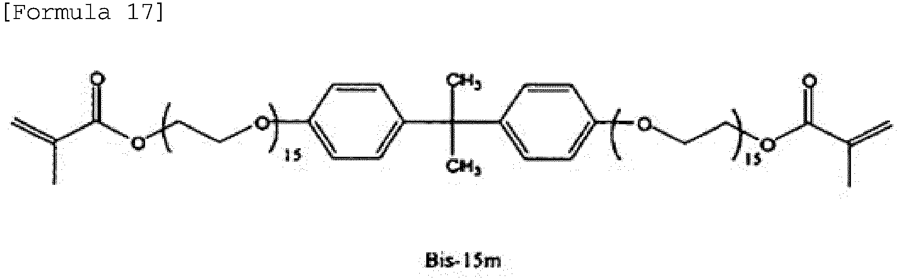

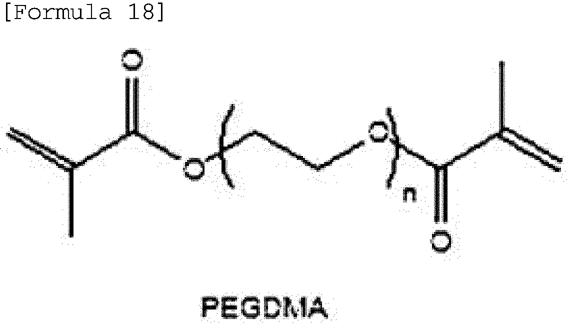

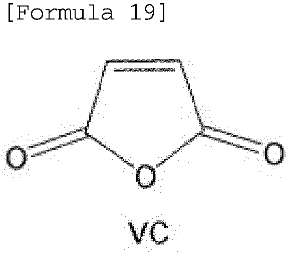

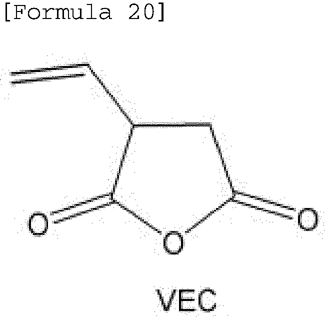

In one example of the present disclosure, (b) the crosslinkable polymeric compound, the polymeric compound selected from the linear, reticular, comb-shaped, and branched polymeric compounds, or both, in the electrolyte composition for the gel-type polymer electrolyte, may account for 0.01 wt% to 30 wt% based on the total electrolyte composition mass. When the content above falls within the above ratio range, a composition with improved mechanical properties and processability may be provided. For example, when the ratio thereof exceeds 80 wt%, viscosity may be high, leading to deterioration in processability, and when the ratio thereof is less than 20 wt%, mechanical properties may deteriorate.

In one example of the present disclosure, any polymer supports applicable to batteries (for example, electrolytes) may be used as (c) the polymer support without limitation. In one example of the present disclosure, the polymer support may include at least one selected from the group consisting of polyalkylene glycol-based polymers, polysiloxane-based polymers, polyacrylonitrile (PAN)-based polymers, polyvinylidene fluoride (PVDF)-hexafluoropropylene-based polymers, and the like, but is not limited thereto.

In one example of the present disclosure, the polymer support in the electrolyte composition for the gel-type polymer electrolyte may account for 1 wt% to 40 wt% or 5 wt% to 40 wt%, based on the total electrolyte composition mass. When the content above falls within the above range, the polymer support may solve leakage problems that may occur in the gel-type polymer electrolyte and may provide an electrolyte with improved stability and electrical performance.

According to one embodiment of the present disclosure, the electrolyte composition for the gel-type polymer electrolyte may further contain a curing initiator when involving the crosslinkable polymeric compound. In one example of the present disclosure, the curing initiator may include a photocuring initiator, a thermosetting initiator, or both. For example, the photocuring initiator may include at least one selected from the group consisting of dimethylphenyl acetophenone (DMPA), t-butyl peroxypivalate, ethyl benzoin ether, isopropyl benzoin ether, α-methyl benzoin ethyl ether, benzoin phenyl ether, α-acyl oxime ester, α,α-diethoxyacetophenone, 1,1-dichloroacetophenone, 2-hydroxy-2-methyl-1-phenylpropan-1-one, 1-hydroxycyclohexyl phenyl ketone, anthraquinone, thioxanthone, isopropylthioxanthone, chlorothioxanthone, benzophenone, p-chlorobenzophenone, benzyl benzoate, benzoyl benzoate, Michler's ketone, and the like, but is not limited thereto. In addition, the thermosetting initiator may, for example, include an azoisobutyronitrile-based compound, a peroxide-based compound, or both and, more specifically, may include at least one selected from the group consisting of 2,2'-azobis(2-methylbutyronitrile), 2,2'-azobis(isobutyronitrile), 2,2'-azobis(2,4-dimethylvaleronitrile), 2,2'-azobis(4-methoxy-2,4-dimethylvaleronitrile), tetramethylbutyl peroxyneodecanoate, bis(4-butylcyclohexyl)peroxydicarbonate, di(2-ethylhexyl)peroxycarbonate, butyl peroxyneodecanoate, dipropyl peroxydicarbonate, and the like, but is not limited thereto.

In one example of the present disclosure, the curing initiator in the electrolyte composition for the gel-type polymer electrolyte may account for 1 × 10⁻⁴ wt% to 0.1 wt% based on the total electrolyte composition mass. When the content above falls within the above range, an electrolyte with improved stability and electrical performance may be provided.

According to one embodiment of the present disclosure, the electrolyte composition for the gel-type polymer electrolyte may further contain a polymerization inhibitor in conjunction with the curing initiator to prevent crosslinking of specific polymeric compounds at appropriate temperatures or lower or when involving polymeric compounds not allowed to be crosslinked at appropriate temperatures or lower. In other words, the polymerization inhibitor may be added to provide a solidifying electrolyte having the function of a solidifying agent.

In one example of the present disclosure, any polymerization inhibitors applicable to batteries (for example, electrolytes) may be used as the polymerization inhibitor without limitation. Furthermore, any of those having a polymerization inhibition function or polymerization suppression function may be used without limitation. For example, the polymerization inhibitor may include at least one selected from the group consisting of p-benzoquinone, 4-methoxyphenol, 4-t-butylcatechol, phenothiazine, hydroquinone, naphthoquinone, phenanthroquinone, toluquinone, 2,5-diacetoxy-p-benzoquinone, 2,5-dicaproxy-p-benzoquinone, 2,5-acyloxy-p-benzoquinone, 2,5-di-t-butylhydroquinone, p-tert-butylcatechol, mono-t-butylhydroquinone, 2,5-di-t-amylhydroquinone, 2,5-di-t-amylhydroquinone, and the like, but is not limited thereto.

In one example of the present disclosure, the polymerization inhibitor contained in the gel-type polymer electrolyte accounts for 0.01 wt% to 3 wt% based on the total electrolyte mass. When the content above falls within the above range, an electrolyte that is capable of inhibiting crosslinking to specific polymeric compounds, preventing curing during product storage and transportation, and preventing deterioration in electrolyte functions and deterioration in battery performance from occurring due to high temperatures or thermal runaway by inducing crosslinking at predetermined temperatures may be provided.

According to one embodiment of the present disclosure, the electrolyte composition may form a solid polymer electrolyte. For example, the electrolyte composition for the solid polymer electrolyte may contain:
(a) an anion receptor being the silicon-based anion receptor compounds represented by Formulas 1 to 6 in which an electron withdrawing group-substituted amine group is introduced into a silicon atom or an electron withdrawing group is introduced into a nitrogen atom in a ring,
   or an anion receptor being a mixture of the silicon-based anion receptor compounds represented by Formulas 1 to 6 and at least one selected from the linear hydrocarbon compound represented by Formula 8, the cyclic hydrocarbon compounds represented by Formulas 8 to 12 below, the polyalkylene oxide compound represented by Formula 13, and the siloxane compounds represented by Formulas 14 to 16, into which an electron withdrawing group-substituted amine group is introduced or in which an electron withdrawing group is introduced into a nitrogen atom in a ring;
(b) a crosslinkable polymeric compound or a polymeric compound selected from linear, reticular, comb-shaped, and branched polymeric compounds;
(c) a polymer support;
(d) a nonaqueous solvent; and
(e) an alkali metal ion-containing material.

In addition, the electrolyte composition for the solid polymer electrolyte may further contain (f) a single compound or two or more compounds selected from polyalkylene glycol dialkyl ether and the nonaqueous solvent.

In one example of the present disclosure, (a) the anion receptor, (d) the nonaqueous solvent, and (e) the alkali metal ion-containing material in the electrolyte composition for the solid polymer electrolyte are the same as those mentioned above in the electrolyte composition. Preferably, in the electrolyte composition for the solid polymer electrolyte, (a) the anion receptor accounts for 0.01 wt% to 30 wt%, (d) the nonaqueous solvent accounts for 0 wt% to 10 wt%, and (e) the alkali metal ion-containing material accounts for 10 wt% to 70 wt%.

In one example of the present disclosure, any of those applicable to batteries (for example, electrolytes) may be used as the polymeric compound selected from the linear, reticular, comb-shaped, and branched polymeric compounds in the electrolyte composition for the solid polymer electrolyte without limitation. Examples thereof may include a flexible inorganic polymer, a linear polyether, or both.

In one example of the present disclosure, the flexible inorganic polymer may be polysiloxane, polyphosphazene, or a copolymer thereof, and the linear polyether may be polyalkylene oxide.

In one example of the present disclosure, any of those applicable to batteries (for example, electrolytes) may be used as the crosslinkable polymer without limitation, and examples thereof may include, but are not limited to, the compounds of Formulas 17 to 20 as described above.

In one example of the present disclosure, the crosslinkable polymeric compound, the polymeric compound selected from the linear, reticular, comb-shaped, and branched polymeric compounds, or both, in the electrolyte composition for the solid polymer electrolyte, may account for 20 wt% to 90 wt%. When the content above falls within the above ratio range, mechanical properties may be improved, and stable battery performance may be provided.

In one example of the present disclosure, any polymer supports applicable to batteries (for example, electrolytes) may be used as the polymer support without limitation. In one example of the present disclosure, the polymer support may include at least one selected from the group consisting of polyalkylene glycol-based polymers, polysiloxane-based polymers, polyacrylonitrile (PAN)-based polymers, and polyvinylidene fluoride (PVDF)-hexafluoropropylene-based polymers, but is not limited thereto.

In one example of the present disclosure, the polymer support in the electrolyte composition for the solid polymer electrolyte may account for 1 wt% to 30 wt% based on the total electrolyte composition mass. When the content above falls within the above range, an electrolyte with improved stability and electrical performance may be provided.

According to one embodiment of the present disclosure, the electrolyte composition for the solid polymer electrolyte may further contain a curing initiator when involving the crosslinkable polymeric compound. In one example of the present disclosure, the curing initiator may include a photocuring initiator, a thermosetting initiator, or both. For example, the photocuring initiator may include at least one selected from the group consisting of dimethylphenyl acetophenone (DMPA), t-butyl peroxypivalate, ethyl benzoin ether, isopropyl benzoin ether, α-methyl benzoin ethyl ether, benzoin phenyl ether, α-acyl oxime ester, α,α-diethoxyacetophenone, 1,1-dichloroacetophenone, 2-hydroxy-2-methyl-1-phenylpropan-1-one, 1-hydroxycyclohexyl phenyl ketone, anthraquinone, thioxanthone, isopropylthioxanthone, chlorothioxanthone, benzophenone, p-chlorobenzophenone, benzyl benzoate, benzoyl benzoate, Michler's ketone, and the like, but is not limited thereto. In addition, the thermosetting initiator may, for example, include an azoisobutyronitrile-based compound, a peroxide-based compound, or both and, more specifically, may be 2,2'-azobis(2-methylbutyronitrile), 2,2'-azobis(isobutyronitrile), 2,2'-azobis(2,4-dimethylvaleronitrile), 2,2'-azobis(4-methoxy-2,4-dimethylvaleronitrile), tetramethylbutyl peroxyneodecanoate, bis(4-butylcyclohexyl)peroxydicarbonate, di(2-ethylhexyl)peroxycarbonate, butyl peroxyneodecanoate, dipropyl peroxydicarbonate, or the like, but is not limited thereto.

In one example of the present disclosure, the curing initiator in the electrolyte composition for the solid polymer electrolyte may account for 1 × 10⁻⁴ wt% to 0.1 wt% based on the total electrolyte composition mass. When the content above falls within the above range, the polymer support may provide an electrolyte with improved stability and electrical performance.

According to one embodiment of the present disclosure, the electrolyte composition for the solid polymer electrolyte may further contain a polymerization inhibitor in conjunction with the curing initiator to prevent crosslinking of specific polymeric compounds at appropriate temperatures or lower or when involving polymeric compounds not allowed to be crosslinked. In other words, the polymerization inhibitor may be added to provide a solidifying electrolyte.

In one example of the present disclosure, any polymer supports applicable to batteries (for example, electrolytes) may be used as the polymerization inhibitor without limitation. Furthermore, any of those having a polymerization inhibition function or polymerization suppression function may be used without limitation. For example, the polymerization inhibitor may include at least one selected from the group consisting of p-benzoquinone, 4-methoxyphenol, 4-t-butylcatechol, phenothiazine, hydroquinone, naphthoquinone, phenanthroquinone, toluquinone, 2,5-diacetoxy-p-benzoquinone, 2,5-dicaproxy-p-benzoquinone, 2,5-acyloxy-p-benzoquinone, 2,5-di-t-butylhydroquinone, p-tert-butylcatechol, mono-t-butylhydroquinone, 2,5-di-t-amylhydroquinone, 2,5-di-t-amylhydroquinone, and the like, but is not limited thereto.

In one example of the present disclosure, the polymerization inhibitor contained in the solid polymer electrolyte accounts for 0.01 wt% to 3 wt% based on the total electrolyte mass. When the content above falls within the above range, an electrolyte that is capable of inhibiting crosslinking to specific polymeric compounds, preventing curing during product storage and transportation, and preventing deterioration in electrolyte functions and deterioration in battery performance from occurring due to high temperatures or thermal runaway by inducing crosslinking at predetermined temperatures may be provided.

According to one embodiment of the present disclosure, the nonaqueous solvent or polyalkylene glycol dialkyl ether that may be contained in the solid polymer electrolyte performs a role as a plasticizer, like the anion receptor of the present disclosure. Examples of the polyalkylene glycol dialkyl ether may include at least one selected from the group consisting of polyethylene glycol dimethyl ether (PEGDME), polyethylene glycol diethyl ether, polyethylene glycol dipropyl ether, polyethylene glycol dibutyl ether, polyethylene glycol diglycidyl ether, polypropylene glycol dimethyl ether, polypropylene glycol diglycidyl ether, a dibutyl ether-terminated polypropylene glycol/polyethylene glycol copolymer, a dibutyl ether-terminated polyethylene glycol/polypropylene glycol/polyethylene glycol block copolymer, and the like, but are not limited thereto.

In one example of the present disclosure, the nonaqueous solvent or polyalkylene glycol dialkyl ether in the electrolyte composition for the solid polymer electrolyte may account for 1 wt% to 30 wt%.

According to one embodiment of the present disclosure, the electrolyte composition may form a solidifying electrolyte. For example, the electrolyte composition for the solidifying electrolyte may contain:
(a) an anion receptor being the silicon-based anion receptor compounds represented by Formulas 1 to 6 in which an electron withdrawing group-substituted amine group is introduced into a silicon atom or an electron withdrawing group is introduced into a nitrogen atom in a ring,
   or an anion receptor being a mixture of the silicon-based anion receptor compounds represented by Formulas 1 to 6 and at least one selected from the linear hydrocarbon compound represented by Formula 7, the cyclic hydrocarbon compounds represented by Formulas 8 to 12 below, the polyalkylene oxide compound represented by Formula 13, and the siloxane compounds represented by Formulas 14 to 16, into which an electron withdrawing group-substituted amine group is introduced or in which an electron withdrawing group is introduced into a nitrogen atom in a ring;
(b) a crosslinkable polymeric compound or a polymeric compound selected from linear, reticular, comb-shaped, and branched polymeric compounds;
(c) a polymer support;
(d) a nonaqueous solvent;
(e) an alkali metal ion-containing material; and
(f) a polymerization inhibitor.

In addition, the electrolyte composition for the solid polymer electrolyte may further selectively contain (g) a single compound or two or more compounds selected from polyalkylene glycol dialkyl ether and the nonaqueous solvent.

In one example of the present disclosure, the components (a) to (g) mentioned above are the same as those mentioned in the electrolyte composition for the gel-type polymer electrolyte or the solid polymer electrolyte. Preferably, the total content of the polymeric compound, the crosslinkable polymeric compound, and the anion receptor, in the electrolyte composition for the solidifying electrolyte, is 12 wt% or more or 13 wt% or more. When the total content is the same or more than the above content range, which is minimum, a solidification function enabling rapid curing reactions to occur at temperatures at which electrolytes or batteries are likely to catch fire, for example, about 130°C or higher, may be provided. In addition, (d) the nonaqueous solvent in the electrolyte composition for the solidifying electrolyte may account for 20 wt% to 80 wt%.

The present disclosure relates to an electrolyte containing the novel silicon-based anion receptor according to the present disclosure.

According to one embodiment of the present disclosure, the electrolyte is prepared from the electrolyte composition according to the present disclosure. For example, the electrolyte may be a liquid, gel-type, or solid electrolyte. For example, the electrolyte may be a nonaqueous liquid electrolyte, a gel-type polymer electrolyte, a solid polymer electrolyte, a polymer electrolyte thin film, and/or a solidifying electrolyte.

According to one embodiment of the present disclosure, the solidifying electrolyte may be prepared from an electrolyte composition for the gel-type polymer electrolyte and/or an electrolyte composition for the solid polymer electrolyte. Alternatively, the solidifying electrolyte may be an electrolyte composition where no curing reaction proceeds. In addition, the solidifying electrolyte may have liquid-like or near-liquid-like viscosity and/or fluidity. Furthermore, when applied to a battery, curing may be allowed to proceed swiftly and rapidly at a predetermined temperature, for example, high temperatures of 120°C or higher or 130°C or higher, to enable the battery to stop operating and prevent risks, such as fires, from occurring due to thermal runaway and high temperatures by obtaining battery stability.

According to one embodiment of the present disclosure, the polymer electrolyte thin film may use the electrolyte composition for the gel-type polymer electrolyte and/or the electrolyte composition for the solid polymer electrolyte. For example, the polymer electrolyte thin film may be formed through a curing process.

According to one embodiment of the present disclosure, the polymer electrolyte thin film may be formed through the following process. In one example of the present disclosure, the formation method may include the following steps: preparing an electrolyte composition by mixing components; and forming a thin film by coating the upper portion of a substrate with the electrolyte composition and then drying and curing the coated substrate.

In one example of the present disclosure, when forming a gel-type polymer electrolyte thin film, the step of preparing the electrolyte composition, in which a gel-type polymer electrolyte composition is prepared, may involve placing a nonaqueous solvent, an anion receptor, an alkali metal ion-containing material, or the like in a container in an appropriate mixing ratio, stirring the resulting mixture with a stirrer to prepare a solution, and then adding a polymer support, followed by mixing all together. In this case, when being mixed, the polymer support may be melted by applying a predetermined amount of heat, if necessary, to prepare a mixed solution of the gel-type polymer electrolyte composition for preparing the gel-type polymer electrolyte thin film of the present disclosure.

For example, the step of forming the thin film may involve coating a supporting substrate made of glass or polyethylene or a currently available Mylar film with the mixed solution of the prepared composition to an appropriate thickness, followed by drying the coated substrate, exposing the coated substrate to electromagnetic, ultraviolet, or gamma rays, or heating the coated substrate to cause a curing reaction, thereby forming the thin film. In another example, the step of forming the thin film may involve applying the mixed solution of the composition on a supporting substrate, fixing spacers for thickness control at both ends of the supporting substrate, covering the supporting substrate with another supporting substrate, and causing a curing reaction using the heat source or curing irradiator, thereby forming the gel-type polymer electrolyte thin film.

In one example of the present disclosure, when forming a solid polymer electrolyte thin film, the step of preparing the electrolyte composition, in which a solid polymer electrolyte composition is prepared, may, for example, involve placing an anion receptor, polyalkylene glycol dialkyl ether, or nonaqueous solvent and an alkali metal ion-containing material in a container in an appropriate mixing ratio, stirring the resulting mixture with a stirrer to prepare a solution, and then adding a crosslinkable polymeric compound or a reticular, branched, or comb-shaped polymeric compound, followed by mixing all together. Then, when being mixed, the reticular, branched, or comb-shaped polymeric compound may be melted by applying a predetermined amount of heat, if necessary. In this case, when adding the crosslinkable polymeric compound to the mixed solution, a curing initiator and a polymerization inhibitor may be added and stirred to prepare a mixed solution of the solid polymer electrolyte composition for preparing the solid polymer electrolyte thin film of the present disclosure.

For example, the step of forming the thin film may involve coating a supporting substrate made of glass or polyethylene or a currently available Mylar film with the mixed solution of the prepared composition to an appropriate thickness, followed by drying the coated substrate, exposing the coated substrate to electromagnetic, ultraviolet, or gamma rays, or heating the coated substrate to cause a curing reaction, thereby forming the thin film. In another example, the step of forming the thin film may involve applying the mixed solution of the composition on a supporting substrate, fixing spacers for thickness control at both ends of the supporting substrate, covering the supporting substrate with another supporting substrate, and causing a curing reaction using the heat source or curing irradiator, thereby forming the solid polymer electrolyte thin film.

The present disclosure relates to a component or part of an electrochemical battery including the novel silicon-based anion receptor compound according to the present disclosure.

According to one embodiment of the present disclosure, the component or part may be a negative electrode, a positive electrode, current collectors thereof, and/or a separator coated or impregnated with the silicon-based anion receptor compound, an electrolyte containing the silicon-based anion receptor compound, a battery membrane, and the like.

For example, the silicon-based anion receptor compound may be applied to electrolyte compositions, process compositions, and the like.

For example, the silicon-based anion receptor compound may be introduced into the negative and positive electrodes when preparing an active material-containing electrode slurry.

For example, the component or part may be a separator impregnated or coated with the silicon-based anion receptor compound.

For example, the component or part may be a battery membrane (for example, polymer electrolyte thin films), a film, and/or a sheet, each of which includes the anion receptor compound, or may be formed (for example, cured, molded, or the like) from the electrolyte composition.

For example, the electrolyte may be a liquid, gel-type, or solid electrolyte using the electrolyte composition according to the present disclosure. The gel-type and solid electrolytes may be the gel-type polymer electrolyte thin film or the solid polymer electrolyte thin film, respectively.

The present disclosure relates to an electrochemical battery including the silicon-based anion receptor compound according to the present disclosure.

According to one embodiment of the present disclosure, the electrochemical battery may be a secondary or secondary battery and may include the liquid, gel-type, and/or solid electrolyte (for example, gel-type polymer electrolytes and solid polymer electrolytes) prepared from the electrolyte composition according to the present disclosure.

According to one embodiment of the present disclosure, a battery using the liquid or gel-type polymer electrolyte of the present disclosure may include a negative electrode, a positive electrode, and a separator. In addition, a battery using the solid polymer electrolyte of the present disclosure may include negative and positive electrodes. Although configurations known in the art to which the present disclosure pertains may be further involved in addition to the configurations of the battery mentioned above to drive or operate batteries, specific descriptions are not mentioned herein.

According to one embodiment of the present disclosure, as the negative and positive electrodes used in the battery, negative and positive electrodes used in batteries known in the art to which the present disclosure pertains, and those manufactured by the manufacturing methods thereof may be used. In addition, a battery assembly may be manufactured by existing methods of assembling a negative electrode, a positive electrode, and an electrolyte.

In one example of the present disclosure, the negative electrode may contain: lithium; a lithium alloy, such as Li-Al, Li-Si, or Li-Cd; a lithium-carbon intercalation compound; a lithium-graphite intercalation compound; a lithium metal oxide intercalation compound, such as LiₓWO₂ or LiMoO₂; a lithium metal sulfide intercalation compound, such as LiTiS₂; or a mixture thereof or a mixture thereof with an alkali metal. However, the negative electrode material is not limited thereto.

In one example of the present disclosure, the positive electrode may contain a transition metal oxide, a transition metal chalcogenide, a poly(carbon disulfide) polymer, an organodisulfide redox polymer, polyaniline, an organodisulfide/polyaniline complex, or a mixture containing these and oxychloride. However, the positive electrode material is not limited thereto.

According to one embodiment of the present disclosure, a primary battery made of the nonaqueous liquid electrolyte containing the silicon-based anion receptor compound of the present disclosure includes:
(a) a negative electrode containing lithium, a lithium alloy, a lithium-carbon intercalation compound, a lithium-graphite intercalation compound, a lithium metal oxide intercalation compound, a mixture containing these, or an alkali metal;
(b) a positive electrode containing a transition metal oxide, a transition metal chalcogenide, a poly(carbon disulfide) polymer, an organodisulfide redox polymer, polyaniline, an organodisulfide/polyaniline complex, and oxychloride, for example, a positive electrode containing SO₂, CuO, CuS, Ag₂CrO₄, I₂, PbI₂, PbS, SOCl₂, V₂O₅, MoO₃, MnO₂, or polycarbon monofluoride (CF)ₙ;
(c) the abovementioned nonaqueous liquid electrolyte of the present disclosure; and
(d) a separator. In addition, the positive and negative electrodes, as well as a battery assembly, may be fabricated by any methods known in the art.

According to one embodiment of the present disclosure, a secondary battery made of the nonaqueous liquid electrolyte containing the anion receptor of the present disclosure includes:
(a) a negative electrode containing lithium metal or a material in which lithium metal may act reversibly, such as lithium; a lithium alloy, such as Li-Al, Li-Si, or Li-Cd; a lithium-carbon intercalation compound, a lithium-graphite intercalation compound; a lithium metal oxide intercalation compound, such as LiₓWO₂ or LiMoO₂; or a lithium metal sulfide intercalation compound, such as LiTiS₂;
(b) a positive electrode containing: a transition metal oxide capable of intercalating lithium, such as Li_{2.5}V₆O₁₃, Li_{1.2}V₂O₅, LiCoO₂, LiNiO₂, LiNi₁₋ₓMₓO₂ (where M is Co, Mg, Al, or Ti), LiMn₂O₄, or LiMnO₂; a transition metal halide; a chalcogenide, such as LiNbSe₃, LiTiS₂, or LiMoS₂; or the like;
(c) the abovementioned nonaqueous liquid electrolyte of the present disclosure; and
(d) a separator. In addition, the positive and negative electrodes, as well as a battery assembly, may be fabricated by any methods known in the art.

According to one embodiment of the present disclosure, a secondary battery made of the gel-type polymer electrolyte containing the silicon-based anion receptor compound of the present disclosure may include the gel-type polymer electrolyte of the present disclosure, in conjunction with the negative electrode, the positive electrode, and the separator that are used in the secondary battery made of the nonaqueous liquid electrolyte.

According to one embodiment of the present disclosure, a secondary battery made of the solid polymer electrolyte containing the silicon-based anion receptor compound may include the solid polymer electrolyte of the present disclosure, in conjunction with the negative and positive electrodes that are used in the secondary battery made of the nonaqueous liquid electrolyte.

According to one embodiment of the present disclosure, the battery is a battery using an electrolyte containing a nonaqueous solvent and may, for example, be a lithium-ion battery, a lithium-ion polymer battery, an alkali metal battery, or the like. However, the battery is not limited thereto.

According to one embodiment of the present disclosure, the battery may be reusable through the replacement of a waste electrolyte after use.

The present disclosure relates to a recycle battery manufactured using the anion receptor according to the present disclosure.

According to one embodiment of the present disclosure, the recycle battery may be a reusable battery in which a waste electrolyte solution in a waste battery (for example, batteries for electric vehicles) after use is replaced and filled with the electrolyte containing the silicon-based anion receptor compound. In other words, the recycle battery may be composed of: components of a waste battery after use; and the electrolyte containing the silicon-based anion receptor compound of the present disclosure.

According to one embodiment of the present disclosure, the recycle battery may be fabricated as a reusable battery by a method of replacing and filling a waste electrolyte in a waste battery with the electrolyte containing the silicon-based anion receptor of the present disclosure. The manufacturing method of the recycle battery may include the following steps:
(a) preparing a waste battery;
(b) removing a waste electrolyte and other impurities from the waste battery; and
(c) regenerating the waste battery by injecting the electrolyte according to the present disclosure.

In one example of the present disclosure, the step of preparing the waste battery or the step of removing the waste electrolyte and other impurities from the waste battery may be performed in a dry room or under an inert atmosphere.

In one example of the present disclosure, the step of removing the waste electrolyte and other impurities from the waste battery may be performed under vacuum conditions.

In one example of the present disclosure, the step of regenerating the waste battery by injecting the electrolyte according to the present disclosure may use a method of applying vibration at a predetermined temperature after introducing a fresh electrolyte into the waste battery. For example, the temperature above may be in the range of 20°C to 50°C.

According to one embodiment of the present disclosure, the recycle battery and the manufacturing method thereof enable a battery fabricated to be reusable by replacing and filling the waste electrolyte solution in the battery for electric vehicles (waste batteries) after use with the electrolyte containing the silicon-based anion receptor compound according to the present disclosure. For example, the risk of explosion and fire is high in the case of charged-state waste batteries used for electric vehicles. Thus, a process of fully discharging the charged current and then dismantling and separating battery packs into each cell may be necessary. The charge capacity and discharge capacity of each of the discharged cells may be evaluated using a charging and discharging device to grade the cells depending on the capacity.

For example, the cells may be divided into those having a capacity of 80% or more, 68% to 80%, or 68% or less. Then, cells with a significantly reduced capacity, 68% or less, are subjected to a regeneration process. After rendering the cells with a reduced capacity fully discharged, a hole may be made in each cell in a dry room or inert atmosphere environment to remove the existing electrolyte, generated gases, and impurities under vacuum. The capacity of the battery may then be recovered through a process of injecting an electrolyte containing an additive enabling performance restoration into the cell, plugging the hole, and shaking the cell under predetermined temperature (25°C to 50°C) conditions for a predetermined period of time to evenly distribute the electrolyte, thus activating positive electrode/negative electrode active materials and increasing the activity of Li ions.

### Mode for Invention

Hereinafter, the present disclosure will be described in more detail through examples and comparative examples. However, the following examples of the present disclosure are disclosed only for illustrative purposes, and the content of the present disclosure is not limited thereto.

### [Example 1]

### [Reaction Formula 1-1] Synthesis of 2,2,2-trifluoro-N-(2,2,2-trifluoro-acetyl)-N-(3-trimethylsilanyl-propyl)-acetamide (Compound 1-1)

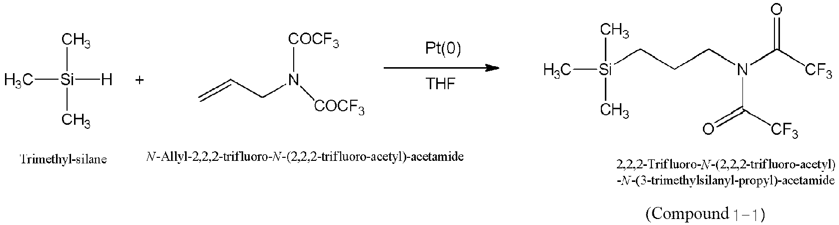

Trimethyl-silane (7.42 g, 0.1 mol), a Pt(O) -1,3-divinyl-1,1,3,3-tetramethyldisiloxane complex compound (Pt(O)) catalyst, and N-allyl-2,2,2-trifluoro-N-(2,2,2-trifluoro-acetyl) -acetamide (24.91 g, 0.1 mol) were dissolved in 50 ml of tetrahydrofuran and added dropwise. The obtained solution was refluxed to 65°C under a nitrogen atmosphere for 8 hours, cooled to room temperature, stirred with the addition of activated carbon, and filtered. Then, toluene was evaporated under reduced pressure. As a result, a product, 2,2,2-trifluoro-N- (2,2,2-trifluoro-acetyl)-N-(3-trimethylsilanyl-propyl) -acetamide (Compound 1-1), was obtained.

¹H NMR (300MHz, CDCl₃) : ppm 0.00 (m, 9H), 0.62 (m, 2H), 1.6(m, 2H), 3.48(m, 2H); ¹³C NMR (300MHz, CDCl₃) : ppm 0.3, 13.3, 23.7, 44.0, 122.6, 168.9; ¹⁹F NMR (CDCl₃) : ppm -77.2 (s).

### [Reaction Formula 1-2] Synthesis of 1,1,1-trifluoro-N-((trifluoromethyl)sulfonyl)-N-(3-(trimethylsilyl)propyl)methanesulfonamide (Compound 1-2)

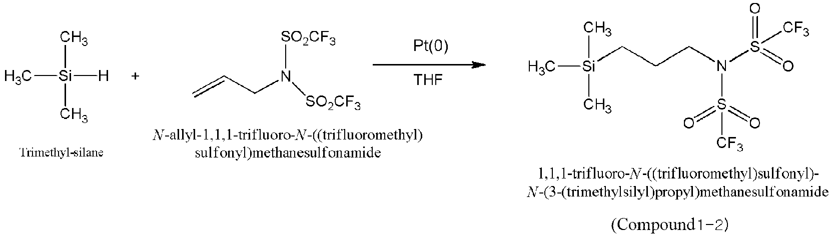

Trimethyl-silane (7.42 g, 0.1 mol), a Pt(O) -1,3-divinyl-1,1,3,3-tetramethyldisiloxane complex compound (Pt(O)) catalyst, and N-allyl-1,1,1-trifluoro-N-((trifluoromethanesulfonyl)sulfonyl) -methanesulfonamide (32.12 g, 0.1 mol) were reacted under the same conditions as in Reaction Formula 1-1 of Example 1. As a result, a product, 1,1,1-trifluoro-N-((trifluoromethyl) sulfonyl) -N- (3-(trimethylsilyl)propyl)methanesulfonamide (Compound 1-2), was obtained.

¹H NMR (300MHz, CDCl₃): ppm 0.00 (m, 9H), 0.62 (m, 2H), 1.6 (m, 2H), 2.65(m, 2H); ¹³C NMR (300MHz, CDCl₃) : ppm 0.3, 13.3, 21.9, 40.0, 145.8; ¹⁹F NMR (CDCl₃) : ppm -74.5 (s).

### [Reaction Formula 1-3] Synthesis of (fluorosulfonyl) (3-(trimethylsilyl)propyl)sulfamoyl fluoride (Compound 1-3)

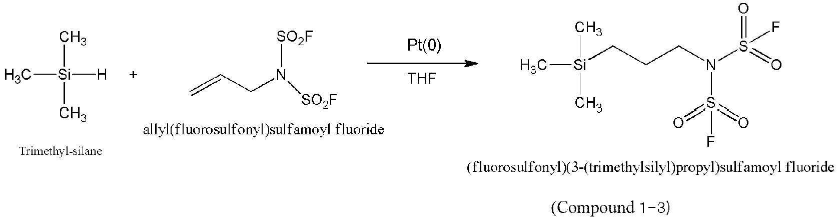

Trimethyl-silane (7.42 g, 0.1 mol), a Pt(O) -1,3-divinyl-1,1,3,3-tetramethyldisiloxane complex compound (Pt(O)) catalyst, and allyl(trifluorosulfonyl)sulfamoyl fluoride (22.12 g, 0.1 mol) were reacted under the same conditions as in Reaction Formula 1-1 of Example 1. As a result, a product, (fluorosulfonyl) (3- (trimethylsilyl)propyl)sulfamoyl fluoride (Compound 1-3), was obtained.

¹H NMR (300MHz, CDCl₃) : ppm 0.06 (m, 9H), 0.62 (m, 2H), 1.6 (m, 2H), 2.65 (m, 2H); ¹³C NMR (300MHz, CDCl₃): ppm 2.1, 20.1, 30.4, 33.9; ¹⁹F NMR (CDCl₃) : ppm -74.5 (s) .

### [Example 2]

### [Reaction Formula 2-1] Synthesis of N-[3-({3-[bis-(2,2,2-trifluoro-acetyl)-amino]-propyl}-dimethyl-silanyl)-propyl]-2,2,2-trifluoro-N-(2,2,2-trifluoro-acetyl)-acetamide (Compound 2-1)

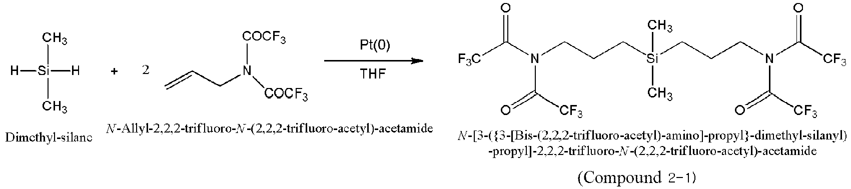

Dimethyl-silane (6.02 g, 0.1 mol), a Pt(O)-1,3-divinyl-1,1,3,3-tetramethyldisiloxane complex compound (Pt(O)) catalyst, and N-allyl-2,2,2-trifluoro-N-(2,2,2-trifluoro-acetyl) -acetamide (49.82 g, 0.2 mol) were reacted under the same conditions as in Reaction Formula 1-1 of Example 1. As a result, a product, N-[3-({3-[bis-(2,2,2-trifluoro-acetyl)-amino] -propyl} -dimethyl-silanyl) -propyl] -2,2,2-trifluoro-N-(2,2,2-trifluoro-acetyl) -acetamide (Compound 2-1), was obtained.

¹H NMR (300MHz, CDCl₃) : ppm 0.00 (m, 6H), 0.62 (m, 4H), 1.6(m, 4H), 3.48(m, 4H); ¹³C NMR (300MHz, CDCl₃) : ppm -1.9, 11.1, 24.0, 44.0, 122.6, 168.9; ¹⁹F NMR (CDCl₃) : ppm -77.3 (s).

### [Reaction Formula 2-2] Synthesis of N,N'-((dimethylsilanediyl)bis(propane-3,1-diyl))bis(1,1,1-trifluoro-N-((trifluoromethyl)sulfonyl)methanesulfonamide) (Compound 2-2)

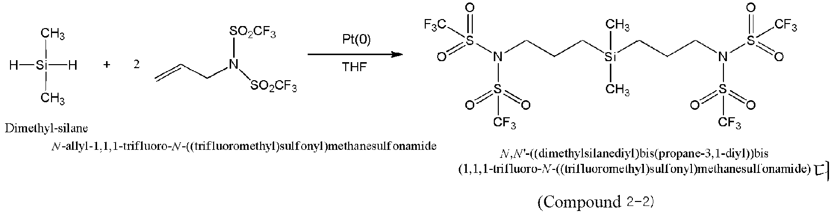

Dimethyl-silane (6.02 g, 0.1 mol), a Pt(O)-1,3-divinyl-1,1,3,3-tetramethyldisiloxane complex compound (Pt(O)) catalyst, and N-allyl-1,1,1-trifluoro-N-((trifluoromethanesulfonyl)sulfonyl) -methanesulfonamide (64.24 g, 0.2 mol) were reacted under the same conditions as in Reaction Formula 1-1 of Example 1. As a result, a product, N,N'-((dimethylsilanediyl)bis(propane-3,1-diyl))bis(1,1,1-trifluoro-N- ((trifluoromethyl)sulfonyl)methanesulfonamide) (Compound 2-2), was obtained.

¹H NMR (300MHz, CDCl₃) : ppm 0.00 (m, 6H), 0.62 (m, 4H), 1.6 (m, 4H), 2.65 (m, 4H); ¹³C NMR (300MHz, CDCl₃) : ppm -1.9, 11.1, 22.2, 40.0, 145.8; ¹⁹F NMR (CDCl₃) : ppm -74.3 (s).

### [Reaction Formula 2-3] Synthesis of ((dimethylsilanediyl)bis(propane-3,1-diyl))bis((fluorosulfonyl)sulfamoyl fluoride) (Compound 2-3)

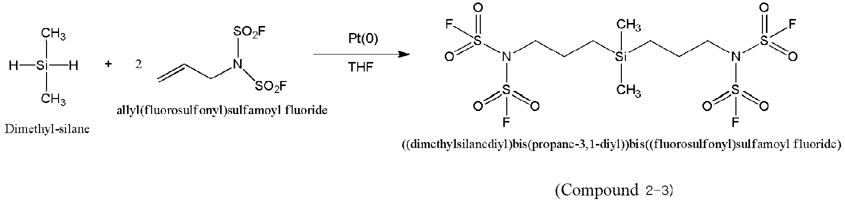

Dimethyl-silane (6.02 g, 0.1 mol), a Pt(O)-1,3-divinyl-1,1,3,3-tetramethyldisiloxane complex compound (Pt(O)) catalyst, and allyl(trifluorosulfonyl)sulfamoyl fluoride (44.24 g, 0.2 mol) were reacted under the same conditions as in Reaction Formula 1-1 of Example 1. As a result, a product, ((dimethylsilanediyl)bis(propane-3,1-diyl))bis((fluorosulfonyl)sulfamoyl fluoride) (Compound 2-3), was obtained.

¹H NMR (300MHz, CDCl₃): ppm 0.21(m, 6H), 0.62 (m, 4H), 1.6 (m, 4H), 2.65 (m, 4H); ¹³C NMR (300MHz, CDCl₃) : ppm 0.7, 17.9, 30.7, 33.9; ¹⁹F NMR (CDCl₃): ppm -74.3 (s) .

### [Example 3]

### [Reaction Formula 3-1] Synthesis of N-[3-(bis-{3-[bis-(2,2,2-trifluoro-acetyl)-amino]-propyl}-methyl-silanyl)-propyl]-2,2,2-trifluoro-N-(2,2,2-trifluoro-acetyl)-acetamide (Compound 3-1)

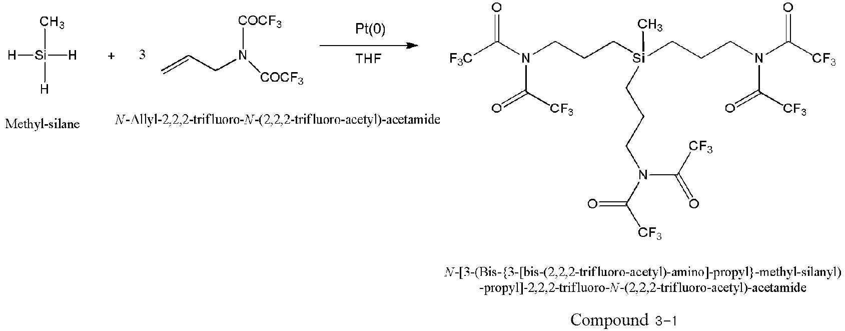

Methyl-silane (4.61 g, 0.1 mol), a Pt(O)-1,3-divinyl-1,1,3,3-tetramethyldisiloxane complex compound (Pt(O)) catalyst, and N-allyl-2,2,2-trifluoro-N-(2,2,2-trifluoro-acetyl) -acetamide (74.73 g, 0.3 mol) were reacted under the same conditions as in Reaction Formula 1-1 of Example 1. As a result, a product, N-[3-(bis-{3-[bis-(2,2,2-trifluoro-acetyl)-amino]-propyl}-methyl-silanyl)-propyl]-2,2,2-trifluoro-N-(2,2,2-trifluoro-acetyl)-acetamide (Compound 3-1), was obtained.

¹H NMR (300MHz, CDCl₃) : ppm 0.00 (m, 3H), 0.62 (m, 6H), 1.6(m, 6H), 3.48(m, 6H); ¹³C NMR (300MHz, CDCl₃) : ppm -4.1, 8.9, 24.3, 44.0, 122.6, 168.9; ¹⁹F NMR (CDCl₃): ppm -77.2 (s).

### [Reaction Formula 3-2] Synthesis of N,N',N''-((methylsilanetriyl)tris(propane-3,1-diyl))tris(1,1,1-trifluoro-N-((trifluoromethyl)sulfonyl)methanesulfonamide) (Compound 3-2)

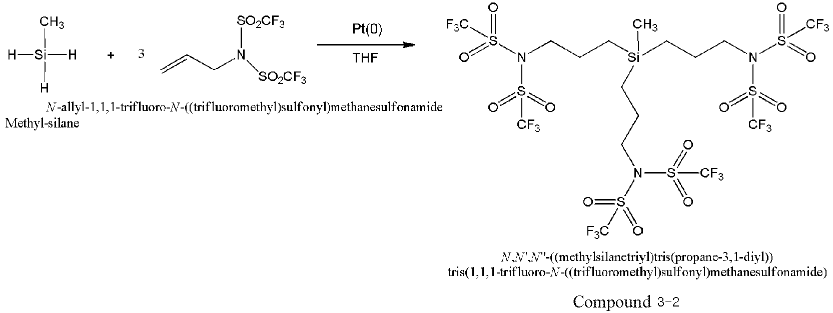

Methyl-silane (4.61 g, 0.1 mol), a Pt(O)-1,3-divinyl-1,1,3,3-tetramethyldisiloxane complex compound (Pt(O)) catalyst, and N-allyl-1,1,1-trifluoro-N-((trifluoromethanesulfonyl)sulfonyl) -methanesulfonamide (96.36 g, 0.3 mol) were reacted under the same conditions as in Reaction Formula 1-1 of Example 1. As a result, a product, N,N',N"-((methylsilanetriyl)tris(propane-3,1-diyl))tris(1,1,1-trifluoro-N- ((trifluoromethyl)sulfonyl)methanesulfonamide) (Compound 3-2), was obtained.

¹H NMR (300MHz, CDCl₃) : ppm 0.00 (m, 3H), 0.62(m, 6H), 1.6(m, 6H), 2.65(m, 6H) ; ¹³C NMR (300MHz, CDCl₃) : ppm -4.1, 8.9, 22.5, 40.0, 145.8; ¹⁹F NMR (CDCl₃) : ppm -65.2 (s).

### [Reaction Formula 3-3] Synthesis of ((methylsilanetriyl)tris(propane-3,1-diyl))tris((fluorosulfonyl)sulfamoyl fluoride) (Compound 3-3)

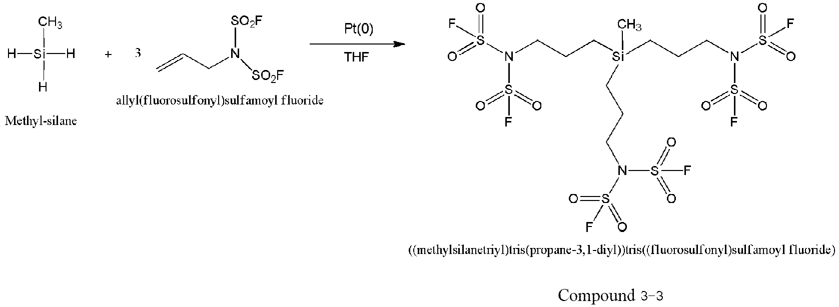

Methyl-silane (4.61 g, 0.1 mol), a Pt(O)-1,3-divinyl-1,1,3,3-tetramethyldisiloxane complex compound (Pt(O)) catalyst, and allyl(trifluorosulfonyl)sulfamoyl fluoride (66.36 g, 0.3 mol) were reacted under the same conditions as in Reaction Formula 1-1 of Example 1. As a result, a product, ((methylsilanetriyl)tris(propane-3,1-diyl))tris((fluorosulfonyl)sulfamoyl fluoride) (Compound 3-3), was obtained.

¹H NMR (300MHz, CDCl₃) : ppm 0.21(m, 3H), 0.62 (m, 6H), 1.6 (m, 6H), 2.65(m, 6H) ; ¹³C NMR (300MHz, CDCl₃) : ppm -0.4, 15.7, 33.9; ¹⁹F NMR (CDCl₃): ppm -65.2 (s).

### [Example 4]

### [Reaction Formula 4-1] Synthesis of N-{3-{[2-{{3-[bis-(2,2,2-trifluoro-acetyl)-amino]-propyl}-dimethyl-silanyl)-ethyl]-dimethyl-silanyl}-propyl)-2,2,2-trifluoro-N-(2,2,2-trifluoro-acetyl)-acetamide (Compound 4-1)

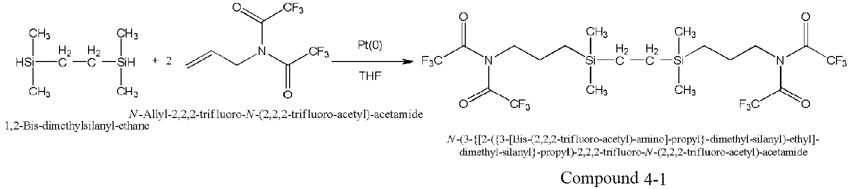

A Pt(O)-1,3-divinyl-1,1,3,3-tetramethyldisiloxane complex compound (Pt(O)) catalyst, 1,2-bis-dimethylsilanyl-ethane (14.64 g, 0.1 mol), and N-allyl-2,2,2-trifluoro-N-(2,2,2-trifluoro-acetyl) -acetamide (49.82 g, 0.2 mol) were reacted under the same conditions as in Reaction Formula 1-1 of Example 1. As a result, a product, N-(3-{[2-({3-[bis-(2,2,2-trifluoro-acetyl)-amino]-propyl}-dimethyl-silanyl)-ethyl]-dimethyl-silanyl}-propyl)-2,2,2-trifluoro-N-(2,2,2-trifluoro-acetyl) -acetamide (Compound 4-1), was obtained.

¹H NMR (300MHz, CDCl₃): ppm 0 (m, 12H), 0.62 (m, 4H), 0.7 (m, 4H), 1.6 (m, 4H), 3.48 (m, 4H); ¹³C NMR (300MHz, CDCl₃): ppm - 2.2, 9.0, 10.8, 24.0, 44.0, 122.6, 168.9; ¹⁹F NMR (CDCl₃): ppm -79.4 (s).

### [Reaction Formula 4-2] Synthesis of N,N'-((ethane-1,2-diylbis(dimethylsilanediyl))bis(propane-3,1-diyl))bis(1,1,1-trifluoro-N-((trifluoromethyl)sulfonyl)methanesulfonamide) (Compound 4-2)

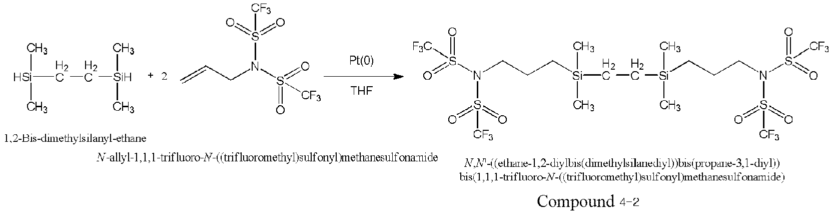

A Pt(O)-1,3-divinyl-1,1,3,3-tetramethyldisiloxane complex compound (Pt(O)) catalyst, 1,2-bis-dimethylsilanyl-ethane (14.64 g, 0.1 mol), and N-allyl-1,1,1-trifluoro-N- ((trifluoromethanesulfonyl)sulfonyl) -methanesulfonamide (64.24 g, 0.2 mol) were reacted under the same conditions as in Reaction Formula 1-1 of Example 1. As a result, a product, N,N'-((ethane-1,2-diylbis(dimethylsilanediyl))bis(propane-3,1-diyl))bis(1,1,1-trifluoro-N-((trifluoromethyl)sulfonyl)methanesulfonamide) (Compound 4-2), was obtained.

¹H NMR (300MHz, CDCl₃): ppm 0 (m, 12H), 0.62(m, 4H), 0.7(m, 4H), 1.6 (m, 4H), 2.65 (m, 4H), 7.54 (m, 2H); ¹³C NMR (300MHz, CDCl₃): ppm -2.2, 9.0, 10.8, 22.2, 40.0, 145.8; ¹⁹F NMR (CDCl₃): ppm -79.2 (s).

### [Reaction Formula 4-3] Synthesis of ((ethane-1,2-diylbis(dimethylsilanediyl))bis(propane-3,1-diyl))bis((fluorosulfonyl)sulfamoyl fluoride) (Compound 4-3)

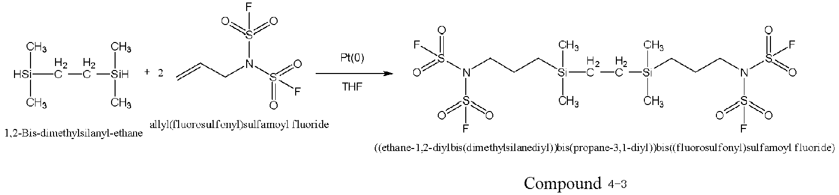

A Pt(O)-1,3-divinyl-1,1,3,3-tetramethyldisiloxane complex compound (Pt(O)) catalyst, 1,2-bis-dimethylsilanyl-ethane (14.64 g, 0.1 mol), and allyl(trifluorosulfonyl)sulfamoyl fluoride (44.24 g, 0.2 mol) were reacted under the same conditions as in Reaction Formula 1-1 of Example 1. As a result, a product, ((ethane-1,2-diylbis(dimethylsilanediyl))bis(propane-3,1-diyl))bis((fluorosulfonyl)sulfamoyl fluoride) (Compound 4-3), was obtained.

¹H NMR (300MHz, CDCl₃) : ppm 0.21(m, 12H), 0.62 (m, 4H), 0.7 (m, 4H), 1.6 (m, 4H), 2.65 (m, 4H); ¹³C NMR (300MHz, CDCl₃): ppm 0.4, 15.0, 17.6, 30.7, 33.9; ¹⁹F NMR (CDCl₃) : ppm -79.2 (s).

### [Example 5]

### [Reaction Formula 5-1] Synthesis of N-{3-{[2-({3-[bis-(2,2,2-trifluoro-acetyl)-amino]-propyl}-dimethyl-silanyl)-phenyl]-dimethyl-silanyl}-propyl)-2,2,2-trifluoro-N-(2,2,2-trifluoro-acetyl)-acetamide (Compound 5-1)

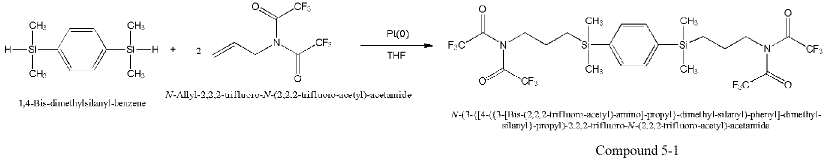

A Pt(O)-1,3-divinyl-1,1,3,3-tetramethyldisiloxane complex compound (Pt(O)) catalyst, 1,4-bis-dimethylsilanyl-benzene (19.44 g, 0.1 mol), and N-allyl-2,2,2-trifluoro-N-(2,2,2-trifluoro-acetyl) -acetamide (49.82 g, 0.2 mol) were reacted under the same conditions as in Reaction Formula 1-1 of Example 1. As a result, a product, N-(3-{[2-({3-[bis-(2,2,2-trifluoro-acetyl)-amino]-propyl}-dimethyl-silanyl)-phenyl]-dimethyl-silanyl}-propyl)-2,2,2-trifluoro-N-(2,2,2-trifluoro-acetyl) -acetamide (Compound 5-1), was obtained.

¹H NMR (300MHz, CDCl₃) : ppm 0.66 (m, 12H), 1.45 (m, 4H), 1.60 (m, 4H), 348 (m, 4H), 7.46 (m, 4H); ¹³C NMR (300MHz, CDCl₃): ppm 0.2, 13.2, 23.6, 44.0, 122.6, 132.7, 168.9; ¹⁹F NMR (CDCl₃): ppm -78.5 (s) .

### [Reaction Formula 5-2] Synthesis of N,N'-((1,4-phenylenebis(dimethylsilanediyl))bis(propane-3,1-diyl))bis(1,1,1-trifluoro-N-((trifluoromethyl)sulfonyl)methanesulfonamide) (Compound 5-2)

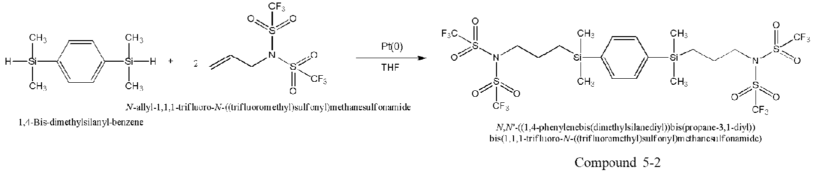

A Pt(O)-1,3-divinyl-1,1,3,3-tetramethyldisiloxane complex compound (Pt(O)) catalyst, 1,4-bis-dimethylsilanyl-benzene (19.44 g, 0.1 mol), and N-allyl-1,1,1-trifluoro-N-((trifluoromethanesulfonyl)sulfonyl) -methanesulfonamide (64.24 g, 0.2 mol) were reacted under the same conditions as in Reaction Formula 1-1 of Example 1. As a result, a product, N,N'-((1,4-phenylenebis(dimethylsilanediyl))bis(propane-3,1-diyl))bis(1,1,1-trifluoro-N-((trifluoromethyl)sulfonyl)methanesulfonamide) (Compound 5-2), was obtained.

¹H NMR (300MHz, CDCl₃): ppm 0.66 (m, 12H), 1.45 (m, 4H), 1.6 (m, 4H), 2.65 (m, 4H), 7.46 (m, 4H); ¹³C NMR (300MHz, CDCl₃) ppm 0.2, 13.2, 21.8, 40.0, 132.7, 145.8; ¹⁹F NMR (CDCl₃): ppm - 79.4 (s).

### [Reaction Formula 5-3] Synthesis of ((1,4-phenylenebis(dimethylsilanediyl))bis(propane-3,1-diyl))bis((fluorosulfonyl)sulfamoyl fluoride) (Compound 5-3)

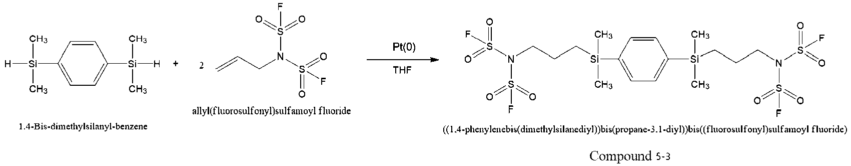

A Pt(O)-1,3-divinyl-1,1,3,3-tetramethyldisiloxane complex compound (Pt(O)) catalyst, 1,4-bis-dimethylsilanyl-benzene (19.44 g, 0.1 mol), and allyl(trifluorosulfonyl)sulfamoyl fluoride (44.24 g, 0.2 mol) were reacted under the same conditions as in Reaction Formula 1-1 of Example 1. As a result, a product, ((1,4-phenylenebis(dimethylsilanediyl))bis(propane-3,1-diyl))bis((fluorosulfonyl)sulfamoyl fluoride) (Compound 5-3), was obtained.

¹H NMR (300MHz, CDCl₃) : ppm 0.25 (m, 12H), 1.45 (m, 4H), 1.6(m, 4H), 2.65(m, 4H), 7.23(m, 2H), 7.38(m, 2H); ¹³C NMR (300MHz, CDCl₃) : ppm -2.6, 12.5, 30.3, 31.4, 129.4, 136.2; ¹⁹F NMR (CDCl₃) : ppm -79.3 (s).

### [Reaction Formula 5-4] Synthesis of N-{3-{[2-({3-[bis-(2,2,2-trifluoro-acetyl)-amino]-propyl}-dimethyl-silanyl)-phenyl]-dimethyl-silanyl}-propyl)-2,2,2-trifluoro-N-(2,2,2-trifluoro-acetyl)-acetamide (Compound 5-4)

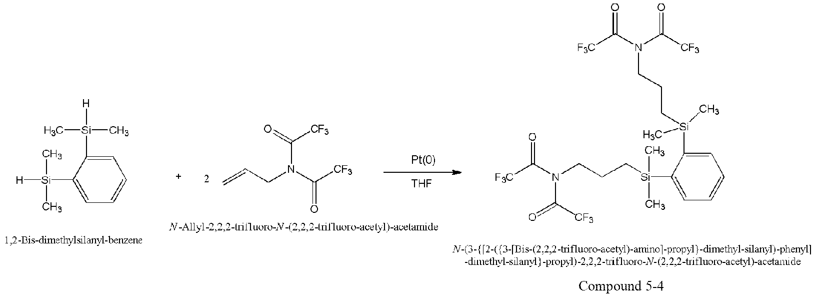

A Pt(O)-1,3-divinyl-1,1,3,3-tetramethyldisiloxane complex compound (Pt(O)) catalyst, 1,2-bis-dimethylsilanyl-benzene (19.44 g, 0.1 mol), and N-allyl-2,2,2-trifluoro-N-(2,2,2-trifluoro-acetyl) -acetamide (49.82 g, 0.2 mol) were reacted under the same conditions as in Reaction Formula 1-1 of Example 1. As a result, a product, N-(3-{[2-({3-[bis-(2,2,2-trifluoro-acetyl)-amino]-propyl}-dimethyl-silanyl)-phenyl]-dimethyl-silanyl}-propyl)-2,2,2-trifluoro-N-(2,2,2-trifluoro-acetyl) -acetamide (Compound 5-4), was obtained.

¹H NMR (300MHz, CDCl₃): ppm 0.66 (m, 12H), 1.45 (m, 4H), 1.60 (m, 4H), 3.48 (m, 4H), 7.22 (m, 2H), 7.46(m, 2H); ¹³C NMR (300MHz, CDCl₃): ppm 0.2, 13.2, 23.6, 44.0, 122.6, 128.2, 132.7, 145.0, 168.9; ¹⁹F NMR (CDCl₃) : ppm -78.5 (s).

### [Reaction Formula 5-5] Synthesis of N,N'-((1,2-phenylenebis(dimethylsilanediyl))bis(propane-3,1-diyl))bis(1,1,1-trifluoro-N-((trifluoromethyl)sulfonyl)methanesulfonamide) (Compound 5-5)

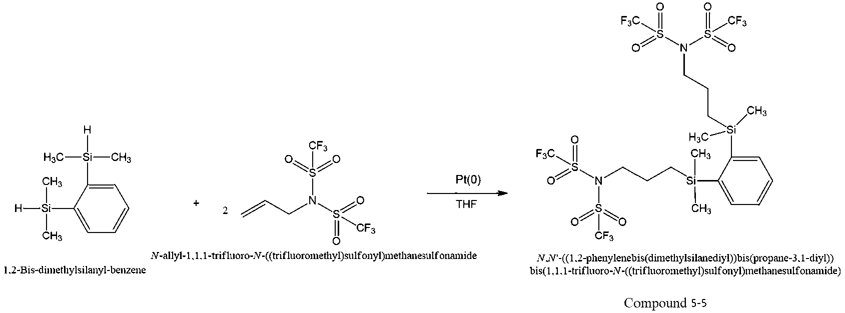

A Pt(O)-1,3-divinyl-1,1,3,3-tetramethyldisiloxane complex compound (Pt(O)) catalyst, 1,2-bis-dimethylsilanyl-benzene (19.44 g, 0.1 mol), and N-allyl-1,1,1-trifluoro-N-((trifluoromethanesulfonyl)sulfonyl) -methanesulfonamide (64.24 g, 0.2 mol) were reacted under the same conditions as in Reaction Formula 1-1 of Example 1. As a result, a product, N,N'-((1,2-phenylenebis(dimethylsilanediyl))bis(propane-3,1-diyl))bis(1,1,1-trifluoro-N-((trifluoromethyl)sulfonyl)methanesulfonamide) (Compound 5-5), was obtained.

¹H NMR (300MHz, CDCl₃) : ppm 0.66(m, 12H), 1.45 (m, 4H), 1.6(m, 4H), 2.65(m, 4H), 7.22(m, 2H), 7.46(m, 2H); ¹³C NMR (300MHz, CDCl₃) : ppm 0.2, 13.2, 21.8, 40.0, 128.2, 132.7, 145.0, 145.8; ¹⁹F NMR (CDCl₃) : ppm -79.3 (s).

### [Reaction Formula 5-6] Synthesis of ((1,2-diphenylenebis(dimethylsilanediyl))bis(propane-3,1-diyl))bis((fluorosulfonyl)sulfamoyl fluoride) (Compound 5-6)

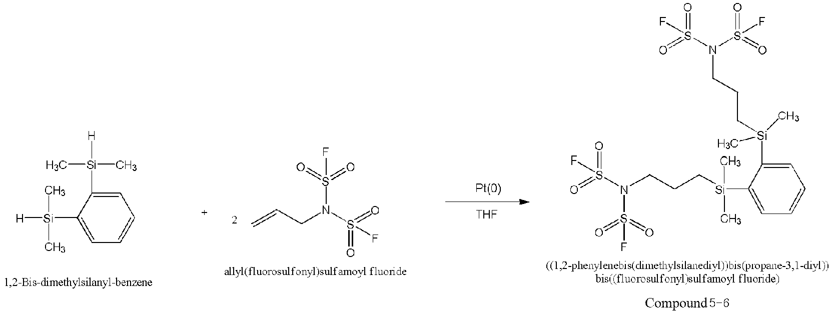

A Pt(O)-1,3-divinyl-1,1,3,3-tetramethyldisiloxane complex compound (Pt(O)) catalyst, 1,2-bis-dimethylsilanyl-benzene (19.44 g, 0.1 mol), and allyl(trifluorosulfonyl)sulfamoyl fluoride (44.24 g, 0.2 mol) were reacted under the same conditions as in Reaction Formula 1-1 of Example 1. As a result, a product, ((1,2-diphenylenebis(dimethylsilanediyl))bis(propane-3,1-diyl))bis((fluorosulfonyl)sulfamoyl fluoride) (Compound 5-6), was obtained.

¹H NMR (300MHz, CDCl₃) : ppm 0.25 (m, 12H), 1.45 (m, 4H), 1.6(m, 4H), 2.65(m, 4H), 7.23(m, 2H), 7.38(m, 2H); ¹³C NMR (300MHz, CDCl₃) : ppm -2.6, 12.5, 30.3, 31.4, 129.4, 136.2; ¹⁹F NMR (CDCl₃) : ppm -79.3 (s).

### [Reaction Formula 5-7] Synthesis of N-(3-{[2-({3-[acetyl-(2,2,2-trifluoro-acetyl)-amino]-propyl}-dimethyl-silanyl)-4-({3-[bis-(2,2,2-trifluoro-acetyl)-amino]-propyl}-dimethyl-silanyl)-phenyl]-dimethyl-silanyl}-propyl)-2,2,2-trifluoro-N-(2,2,2-trifluoro-acetyl)-acetamide (Compound 5-7)

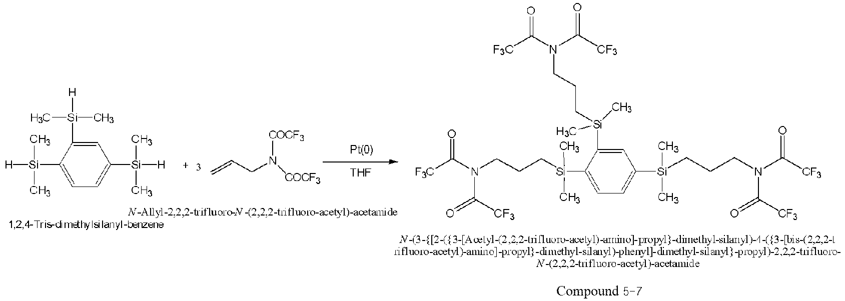

A Pt(O)-1,3-divinyl-1,1,3,3-tetramethyldisiloxane complex compound (Pt(O)) catalyst, 1,2,4-tris-dimethylsilanyl-benzene (25.26 g, 0.1 mol), and N-allyl-2,2,2-trifluoro-N-(2,2,2-trifluoro-acetyl)-acetamide (74.73 g, 0.3 mol) were reacted under the same conditions as in Reaction Formula 1-1 of Example 1. As a result, a product, N-(3-{[2-({3-[acetyl-(2,2,2-trifluoro-acetyl)-amino]-propyl}-dimethyl-silanyl)-4-({3- [bis- (2,2,2-trifluoro-acetyl) -amino] -propyl}-dimethyl-silanyl) -phenyl] -dimethyl-silanyl}-propyl) -2,2,2-trifluoro-N-(2,2,2-trifluoro-acetyl)-acetamide (Compound 5-7), was obtained.

¹H NMR (300MHz, CDCl₃) : ppm 0.66 (m, 12H), 1.45 (m, 6H), 1.60(m, 6H), 3.48(m, 6H), 7.44(m, 2H), 7.68(m, 1H) ; ¹³C NMR (300MHz, CDCl₃) : ppm 0.2, 13.2, 23.6, 44.0, 122.6, 132.0, 133.4, 137.6, 144.3, 145.4, 168.9; ¹⁹F NMR (CDCl₃): ppm -78.5 (s).

### [Reaction Formula 5-8] Synthesis of N,N',N"-((benzene-1,2,4-triyltris(dimethylsilanediyl))tris(propane-3,1-diyl))tris(1,1,1-trifluoro-N-((trifluoromethyl)sulfonyl)methanesulfonamide) (Compound 5-8)

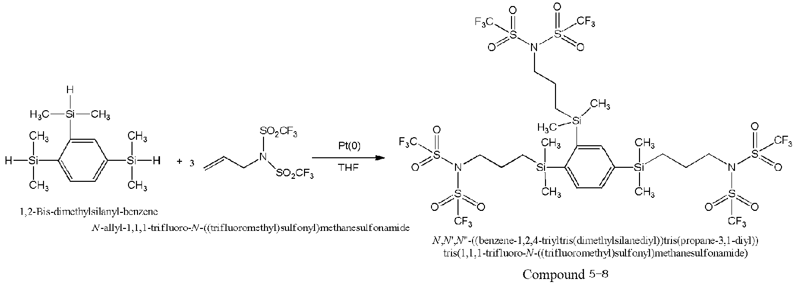

A Pt(O)-1,3-divinyl-1,1,3,3-tetramethyldisiloxane complex compound (Pt(O)) catalyst, 1,2-bis-dimethylsilanyl-benzene (19.44 g, 0.1 mol), and N-allyl-1,1,1-trifluoro-N- ((trifluoromethanesulfonyl)sulfonyl) -methanesulfonamide (96.72 g, 0.3 mol) were reacted under the same conditions as in Reaction Formula 1-1 of Example 1. As a result, a product, N,N',N"-((benzene-1,2,4-triyltris(dimethylsilanediyl))tris(propane-3,1-diyl))tris(1,1,1-trifluoro-N-((trifluoromethyl)sulfonyl)methanesulfonamide) (Compound 5-8), was obtained.

¹H NMR (300MHz, CDCl₃) : ppm 0.66 (m, 18H), 1.45 (m, 6H), 1.60(m, 6H), 2.65(m, 6H), 7.44(m, 2H), 7.68(m, 1H) ; ¹³C NMR (300MHz, CDCl₃) : ppm 0.2, 13.2, 23.6, 40.0, 132.0, 133.4, 137.6, 144.3, 145.4, 145.8; ¹⁹F NMR (CDCl₃): ppm -78.7 (s).

### [Reaction Formula 5-9] Synthesis of ((benzene-1,2,4-triyltris(dimethylsilanediyl))tris(propane-3,1-diyl))tris((fluorosulfonyl)sulfamoyl fluoride) (Compound 5-9)

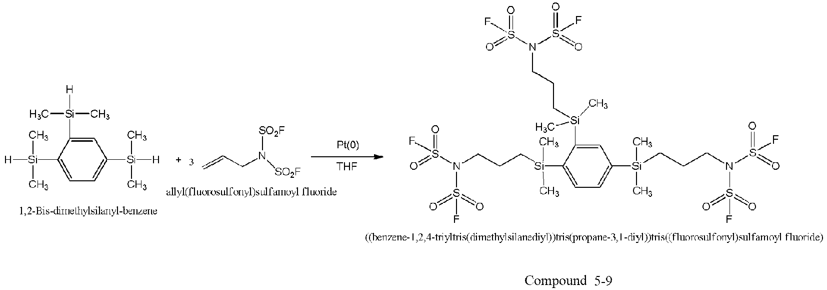

A Pt(O)-1,3-divinyl-1,1,3,3-tetramethyldisiloxane complex compound (Pt(O)) catalyst, 1,2-bis-dimethylsilanyl-benzene (19.44 g, 0.1 mol), and allyl(trifluorosulfonyl)sulfamoyl fluoride (66.36 g, 0.3 mol) were reacted under the same conditions as in Reaction Formula 1-1 of Example 1. As a result, a product, ((benzene-1,2,4-triyltris(dimethylsilanediyl))tris(propane-3,1-diyl))tris((fluorosulfonyl)sulfamoyl fluoride) (Compound 5-9), was obtained.

¹H NMR (300MHz, CDCl₃): ppm 0.25(m, 18H), 1.45(m, 6H), 1.60(m, 6H), 2.65(m, 6H), 7.36(m, 3H), 7.68(m, 1H); ¹³C NMR (300MHz, CDCl₃) : ppm -2.6, 12.5, 30.3, 31.4, 122.4, 128.7, 134.0, 139.8, 140.8; ¹⁹F NMR (CDCl₃): ppm -78.7 (s).

### [Example 6]

### [Reaction Formula 6-1] Synthesis of N-{3-[bis-[3-(bis-(2,2,2-trifluoro-acetyl)-amino)-propyl]-(4-{tris-[3-(bis-(2,2,2-trifluoro-acetyl)-amino)-propyl]-silanyl}-phenyl)-silanyl]-propyl}-2,2,2-trifluoro-acetamide (Compound 6-1)

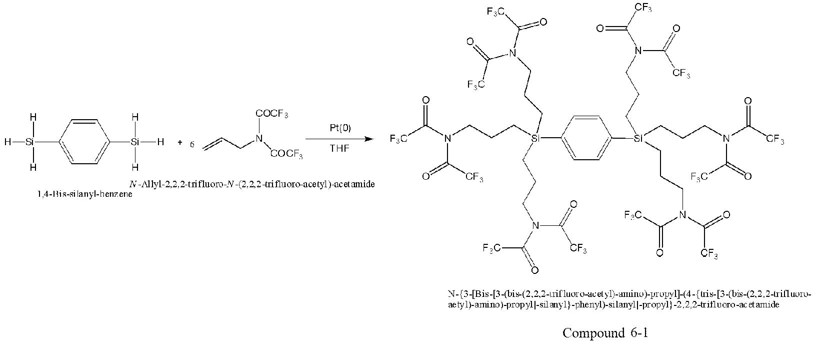

A Pt(O)-1,3-divinyl-1,1,3,3-tetramethyldisiloxane complex compound (Pt(O)) catalyst, 1,4-bis-silanyl-benzene (13.83 g, 0.1 mol), and N-allyl-2,2,2-trifluoro-N-(2,2,2-trifluoro-acetyl) -acetamide (149.46 g, 0.6 mol) were reacted under the same conditions as in Reaction Formula 1-1 of Example 1. As a result, a product, N- {3- [bis- [3- (bis- (2,2,2-trifluoro-acetyl)-amino) -propyl] - (4- {tris-[3-(bis-(2,2,2-trifluoro-acetyl)- amino)-propyl]-silanyl}-phenyl)-silanyl]-propyl}-2,2,2-trifluoro-acetamide (Compound 6-1), was obtained.

¹H NMR (300MHz, CDCl₃) : ppm 1.45 (m, 12H), 1.60 (m, 12H), 3.48 (m, 12H), 7.46 (m, 4H); ¹³C NMR (300MHz, CDCl₃) : ppm 8.8, 24.2, 44.0, 122.6, 132.7, 140.5, 168.9; ¹⁹F NMR (CDCl₃): ppm - 78.3 (s).

### [Reaction Formula 6-2] Synthesis of N,N',N",N‴,Nʺʺ,N‴ʺ-((1,4-phenylenebis(silanetetrayl))hexakis(propane-3,1-diyl))hexakis(1,1,1-trifluoro-N-((trifluoromethyl)sulfonyl)methanesulfonamide (Compound 6-2)

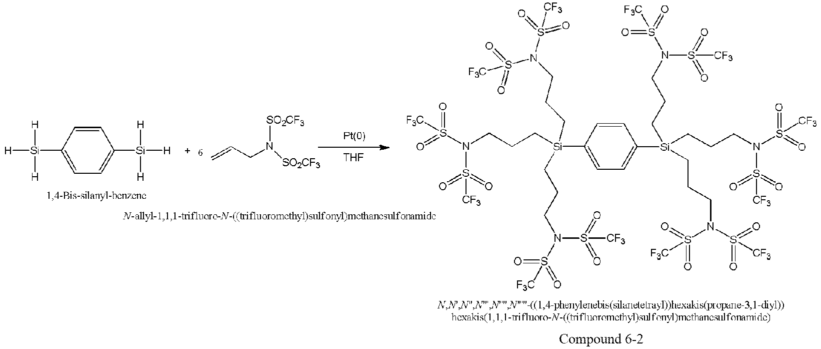

A Pt(O)-1,3-divinyl-1,1,3,3-tetramethyldisiloxane complex compound (Pt(O)) catalyst, 1,4-bis-silanyl-benzene (13.83 g, 0.1 mol), and N-allyl-1,1,1-trifluoro-N-((trifluoromethanesulfonyl)sulfonyl)-methanesulfonamide (193.44 g, 0.3 mol) were reacted under the same conditions as in Reaction Formula 1-1 of Example 1. As a result, a product, N,N',N",N‴,Nʺʺ,N‴ʺ-((1,4 phenylenebis(silanetetrayl))hexakis(propane-3,1-diyl))hexakis(1,1,1-trifluoro-N-((trifluoromethyl)sulfonyl)methanesulfonamide (Compound 6-2), was obtained.

¹H NMR (300MHz, CDCl₃) : ppm 1.45 (m, 12H), 1.60 (m, 12H), 2.65 (m, 12H), 7.46(m, 4H); ¹³C NMR (300MHz, CDCl₃) : ppm 8.8, 22.4, 40.0, 132.7, 145.8; ¹⁹F NMR (CDCl₃): ppm -78.6 (s) .

### [Reaction Formula 6-3] Synthesis of ((1,4-phenylenebis(silanetetrayl))hexakis(propane-3,1-diyl))hexakis((fluorosulfonyl)sulfamoyl fluoride) (Compound 6-3)

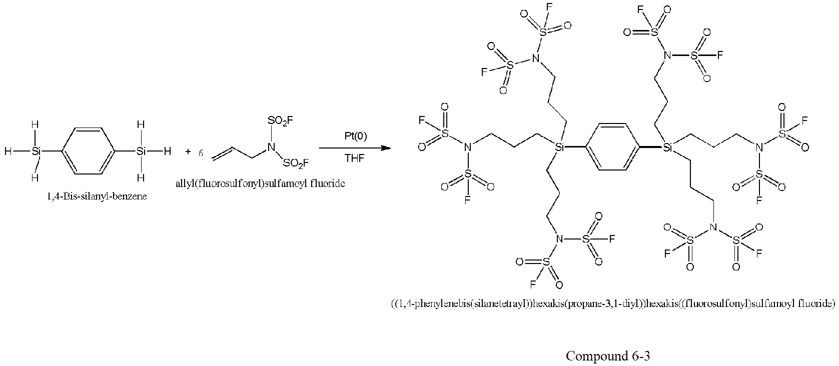

A Pt(O)-1,3-divinyl-1,1,3,3-tetramethyldisiloxane complex compound (Pt(O)) catalyst, 1,4-bis-silanyl-benzene (13.83 g, 0.1 mol), and allyl(trifluorosulfonyl)sulfamoyl fluoride (132.7 g, 0.6 mol) were reacted under the same conditions as in Reaction Formula 1-1 of Example 1. As a result, a product, ((1,4-phenylenebis(silanetetrayl))hexakis(propane-3,1-diyl))hexakis((fluorosulfonyl)sulfamoyl fluoride) (Compound 6-3), was obtained.

¹H NMR (300MHz, CDCl₃) : ppm 1.45(m, 12H), 1.60 (m, 12H), 2.65 (m, 12H), 7.38 (m, 4H); ¹³C NMR (300MHz, CDCl₃): ppm 8.1, 30.9, 31.4, 133.6, 140.5; ¹⁹F NMR (CDCl₃): ppm -78.6 (s).

### Example 7. Ion conductive thin film formation (1)

Compound 1-1 (0.25 g), serving as the anion receptor prepared in Example 1-1, was mixed with bisphenol A ethoxylate dimethacrylate (purchased from Aldrich, Mw = 1,700, "BIS-15m", 0.25 g) serving as a crosslinker, poly(ethylene glycol) dimethyl ether (Mw = 350, "PEGDME 300", 0.5 g), and lithium trifluoromethanesulfonimide (Li(CF₃SO₂)₂N, 0.7809 g). Dimethylphenyl acetophenone (DMPA, 0.0075 g) was added to the resulting mixture. The obtained mixture solution was applied on a conductive glass substrate and then exposed to ultraviolet rays at a wavelength of 350 nm under a nitrogen atmosphere for 30 minutes. Through such light irradiation, a solid polymer thin film was formed.

### Example 8. Ion conductive thin film formation (2)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 1-2 (0.25 g), serving as the anion receptor prepared in Example 1-2, and lithium trifluoromethanesulfonimide (0.7234 g). Then, a solid polymer thin film was formed in the same manner as in Example 7.

### Example 9. Ion conductive thin film formation (3)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 1-3 (0.25 g), serving as the anion receptor prepared in Example 1-3, and lithium trifluoromethanesulfonimide (0.7499 g). Then, a solid polymer thin film was formed in the same manner as in Example 7.

### Example 10. Ion conductive thin film formation (4)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 2-1 (0.25 g), serving as the anion receptor prepared in Example 2-1, and lithium trifluoromethanesulfonimide (0.6597 g). Then, a solid polymer thin film was formed in the same manner as in Example 7.

### Example 11. Ion conductive thin film formation (5)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 2-2 (0.25 g), serving as the anion receptor prepared in Example 2-2, and lithium trifluoromethanesulfonimide (0.6237 g). Then, a solid polymer thin film was formed in the same manner as in Example 7.

### Example 12. Ion conductive thin film formation (6)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 2-3 (0.25 g), serving as the anion receptor prepared in Example 2-3, and lithium trifluoromethanesulfonimide (0.6109 g). Then, a solid polymer thin film was formed in the same manner as in Example 7.

### Example 13. Ion conductive thin film formation (7)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 3-1 (0.25 g), serving as the anion receptor prepared in Example 3-1, and lithium trifluoromethanesulfonimide (0.4846 g). Then, a solid polymer thin film was formed in the same manner as in Example 7.

### Example 14. Ion conductive thin film formation (8)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 3-2 (0.25 g), serving as the anion receptor prepared in Example 3-2, and lithium trifluoromethanesulfonimide (0.4530 g). Then, a solid polymer thin film was formed in the same manner as in Example 7.

### Example 15. Ion conductive thin film formation (9)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 3-3 (0.25 g), serving as the anion receptor prepared in Example 3-3, and lithium trifluoromethanesulfonimide (0.4877 g). Then, a solid polymer thin film was formed in the same manner as in Example 7.

### Example 16. Ion conductive thin film formation (10)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 4-1 (0.25 g), serving as the anion receptor prepared in Example 4-1, and lithium trifluoromethanesulfonimide (0.4846 g). Then, a solid polymer thin film was formed in the same manner as in Example 7.

### Example 17. Ion conductive thin film formation (11)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 4-2 (0.25 g), serving as the anion receptor prepared in Example 4-2, and lithium trifluoromethanesulfonimide (0.4530 g). Then, a solid polymer thin film was formed in the same manner as in Example 7.

### Example 18. Ion conductive thin film formation (12)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 4-3 (0.25 g), serving as the anion receptor prepared in Example 4-3, and lithium trifluoromethanesulfonimide (0.4877 g). Then, a solid polymer thin film was formed in the same manner as in Example 7.

### Example 19. Ion conductive thin film formation (13)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-1 (0.25 g), serving as the anion receptor prepared in Example 5-1, and lithium trifluoromethanesulfonimide (0.4846 g). Then, a solid polymer thin film was formed in the same manner as in Example 7.

### Example 20. Ion conductive thin film formation (14)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-2 (0.25 g), serving as the anion receptor prepared in Example 5-2, and lithium trifluoromethanesulfonimide (0.4530 g). Then, a solid polymer thin film was formed in the same manner as in Example 7.

### Example 21. Ion conductive thin film formation (15)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-3 (0.25 g), serving as the anion receptor prepared in Example 5-3, and lithium trifluoromethanesulfonimide (0.4877 g). Then, a solid polymer thin film was formed in the same manner as in Example 7.

### Example 22. Ion conductive thin film formation (16)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-4 (0.25 g), serving as the anion receptor prepared in Example 5-4, and lithium trifluoromethanesulfonimide (0.4846 g). Then, a solid polymer thin film was formed in the same manner as in Example 7.

### Example 23. Ion conductive thin film formation (17)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-5 (0.25 g), serving as the anion receptor prepared in Example 5-5, and lithium trifluoromethanesulfonimide (0.4530 g). Then, a solid polymer thin film was formed in the same manner as in Example 7.

### Example 24. Ion conductive thin film formation (18)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-3 (0.25 g), serving as the anion receptor prepared in Example 5-6, and lithium trifluoromethanesulfonimide (0.4877 g). Then, a solid polymer thin film was formed in the same manner as in Example 7.

### Example 25. Ion conductive thin film formation (19)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-7 (0.25 g), serving as the anion receptor prepared in Example 5-7, and lithium trifluoromethanesulfonimide (0.4846 g). Then, a solid polymer thin film was formed in the same manner as in Example 7.

### Example 26. Ion conductive thin film formation (20)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-8 (0.25 g), serving as the anion receptor prepared in Example 5-8, and lithium trifluoromethanesulfonimide (0.4530 g). Then, a solid polymer thin film was formed in the same manner as in Example 7.

### Example 27. Ion conductive thin film formation (21)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 5-9 (0.25 g), serving as the anion receptor prepared in Example 5-9, and lithium trifluoromethanesulfonimide (0.4877 g). Then, a solid polymer thin film was formed in the same manner as in Example 7.

### Example 28. Ion conductive thin film formation (22)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 6-1 (0.25 g), serving as the anion receptor prepared in Example 6-1, and lithium trifluoromethanesulfonimide (0.4846 g). Then, a solid polymer thin film was formed in the same manner as in Example 7.

### Example 29. Ion conductive thin film formation (23)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 6-2 (0.25 g), serving as the anion receptor prepared in Example 6-2, and lithium trifluoromethanesulfonimide (0.4530 g). Then, a solid polymer thin film was formed in the same manner as in Example 7.

### Example 30. Ion conductive thin film formation (24)

Bisphenol A ethoxylate dimethacrylate serving as a crosslinker, poly(ethylene glycol) dimethyl ether, and dimethylphenyl acetophenone were added in the same amounts as in Example 7 to and mixed with Compound 6-3 (0.25 g), serving as the anion receptor prepared in Example 6-3, and lithium trifluoromethanesulfonimide (0.4877 g). Then, a solid polymer thin film was formed in the same manner as in Example 7.

**[Table 1]**

| Example (Compound) | Crosslinker (Bis-15m) usage | Anion receptor usage | Plasticizer (PEGDME) usage | Lithium salt (Li(CF₃SO₂)₂N) usage | Initiator (DMPA) usage |
|---|---|---|---|---|---|
| 7 (1-1) | 0.25 | 0.25 | 0.5 | 0.7809 | 0.075 |
| 8 (1-2) | | | | 0.7234 | |
| 9 (1-3) | | | | 0.7499 | |
| 10 (2-1) | | | | 0.6597 | |
| 11 (2-2) | | | | 0.6237 | |
| 12 (2-3) | | | | 0.6109 | |
| 13 (3-1) | | | | 0.4846 | |
| 14 (3-2) | | | | 0.4530 | |
| 15 (3-3) | | | | 0.4877 | |
| 16 (4-1) | | | | 0.4846 | |
| 17 (4-2) | | | | 0.4530 | |
| 18 (4-3) | | | | 0.4877 | |
| 19 (5-1) | | | | 0.4846 | |
| 20 (5-2) | | | | 0.4530 | |
| 21 (5-3) | | | | 0.4877 | |
| 22 (5-4) | | | | 0.4846 | |
| 23 (5-5) | | | | 0.4530 | |
| 24 (5-6) | | | | 0.4877 | |
| 25 (5-7) | | | | 0.4846 | |
| 26 (5-8) | | | | 0.4530 | |
| 27 (5-9) | | | | 0.4877 | |
| 28 (6-1) | | | | 0.4846 | |
| 29 (6-2) | | | | 0.4530 | |
| 30 (6-3) | | | | 0.4877 | |
| Comparative Example 1 | | - | | 0.2308 | |

### Comparative Example 1. Anion receptor-free thin film formation

A solid polymer thin film was formed in the same manner as in Example 7 using the composition of the compounds shown in Table 1. As shown in Table 1, the polymer electrolyte of the comparative example is anion receptor-free.

### Experimental Examples 1 to 25. Ion conductivity experiment (1)

The ion conductivities of the solid polymer electrolyte thin films formed in Examples 7 to 30 and Comparative Example 1 were measured. The ion conductivity was measured using the following method.

Each solid polymer electrolyte composition was applied on a band-type conductive glass substrate or lithium-copper foil, light-cured, and dried sufficiently, followed by measuring the alternating current (AC) impedance between band-type or sandwich-type electrodes under a nitrogen atmosphere. Then, the measured value was analyzed using a frequency response analyzer and calculated through a method of interpreting the complex impedance.

The band-type electrodes used were manufactured by attaching masking tape with a width in the range of 0.5 mm to 2 mm to the center of a conductive glass (indium tin oxide (ITO)) at intervals in the range of about 0.5 mm to 2 mm, placing the conductive glass in an etching solution for etching, and then washing and drying the conductive glass. The ion conductivities of the solid polymer electrolyte thin films formed were measured at a temperature of 30°C. The results thereof are shown in Table 2 below.

**[Table 2]**

| Classification | Ion conductivity σ (S/cm) |
|---|---|
| Example 7 | 2.23 × 10⁻⁴ |
| Example 8 | 2.28 × 10⁻⁴ |
| Example 9 | 2.45 × 10⁻⁴ |
| Example 10 | 1.98 × 10⁻⁴ |
| Example 11 | 1.84 × 10⁴ |
| Example 12 | 1.79 × 10⁻⁴ |
| Example 13 | 2.11 × 10⁻⁴ |
| Example 14 | 1.98 × 10⁻⁴ |
| Example 15 | 1.99 × 10⁻⁴ |
| Example 16 | 1.75 × 10⁻⁴ |
| Example 17 | 1.78 × 10⁻⁴ |
| Example 18 | 1.64 × 10⁴ |
| Example 19 | 1.94 × 10⁴ |
| Example 20 | 1.82 × 10⁴ |
| Example 21 | 1.84 × 10⁴ |
| Example 22 | 1.64 × 10⁴ |
| Example 23 | 1.67 × 10⁻⁴ |
| Example 24 | 1.59 × 10⁻⁴ |
| Example 25 | 1.79 × 10⁻⁴ |
| Example 26 | 1.73 × 10⁻⁴ |
| Example 27 | 1.77 × 10⁻⁴ |
| Example 28 | 1.86 × 10⁻⁴ |
| Example 29 | 1.88 × 10⁻⁴ |
| Example 30 | 1.93 × 10⁻⁴ |
| Comparative Example 1 | 4.84 × 10⁻⁶ |

From the above results, the anion receptor-containing solid polymer electrolytes exhibited higher ion conductivities than the anion receptor-free solid polymer electrolyte.

### Example 31. Battery manufacturing using anion receptor-containing liquid electrolyte

Compound 1-1 (AR-7 in FIG. 1, 0.015 g), serving as the anion receptor prepared in Example 1-1, Compound 2-1 (AR-8B in FIG. 1, 0.015 g), serving as the anion receptor prepared in Example 2-1, and Compound 1-3 (AR-8C in FIG. 1, 0.015 g), serving as the anion receptor prepared in Example 3-1, were mixed with EC/DMC/EMC (1:1:1, 1 M LiPF₆) (1.0 g) serving as an organic solvent. In a dry room (humidity: within 3%), a polypropylene separator impregnated with the obtained mixture solution was inserted between a nickel-manganese-cobalt (NMC) ternary positive electrode and a graphitic carbon negative electrode and then vacuum-sealed to assemble a battery.

### Comparative Example 2. Battery manufacturing using anion receptor-free liquid electrolyte

A battery was manufactured in the same manner as in Example 31 by assembling a separator impregnated with 1.0 g of EC/DMC/DEC (1:1:1, 1 M LiPF₆) serving as an organic solvent, an NMC ternary positive electrode, and a graphitic carbon negative electrode.

### Experimental Example 26. Lithium cycling performance experiment

The lithium cycling performance and efficiency of the batteries manufactured in Example 31 and Comparative Example 2 of the present disclosure were measured at room temperature using a charging and discharging experimental device (Maccor 4000). Charging and discharging were performed at 1 C. Each battery was charged and discharged between 3.0 V and 4.2 V at a constant current density of 0.6 mA/cm² (charging) and 1.5 mA/cm² (discharging) with respect to the NMC counter electrode.

The high-temperature (60°C) capacity retention rates of the batteries manufactured using the anion receptor-free electrolyte and the electrolytes containing the anion receptors of the present disclosure, Compound 1-1 (AR-7 in FIG. 1), the compound (AR-8B in FIG. 1), and the compound (AR-8C in FIG. 1), over time were compared. The results thereof are shown in FIG. 1. The batteries using the electrolytes containing the anion receptors, Compound 1-1 (AR-7 in FIG. 1), the compound (AR-8B in FIG. 1), and the compound (AR-8C in FIG. 1), exhibited significantly higher capacity retention rates than the battery using the anion receptor-free electrolyte (Ref).

Therefore, the above results indicate that with the use of the anion receptor, the high-temperature capacity retention rate is high, and the low increase rate of internal resistance means battery life extension and high-temperature stability.

The present disclosure also provides a battery that is enabled to be reusable by replacing and filling a waste electrolyte solution in a battery (waste battery) for an electric vehicle after use with an electrolyte to which the anion receptor is added.

Hereinafter, a method of manufacturing the reusable battery in which a waste electrolyte is replaced and filled with a fresh electrolyte containing the anion receptor of the present disclosure will be described.

The method of manufacturing the reusable battery of the present disclosure includes the following steps: preparing a waste battery; removing a waste electrolyte and other impurities from the waste battery; and regenerating the waste battery by injecting the novel electrolyte of the present disclosure.

The step of removing the waste electrolyte and other impurities from the waste battery may be performed in a dry room or under an inert atmosphere.

Alternatively, the step of removing the waste electrolyte and other impurities from the waste battery may be performed under vacuum conditions.

The step of regenerating the waste battery by injecting the novel electrolyte may use a method of applying vibration at a predetermined temperature after introducing the novel electrolyte into the waste battery. The predetermined temperature may be in the range of 20°C to 50°C.

To describe the method of regenerating the waste battery in more detail, the risk of explosion and fire is high in the case of charged-state waste batteries used for electric vehicles. Thus, a process of fully discharging the charged current and then dismantling and separating battery packs into each cell is necessary. The charge capacity and discharge capacity of each of the discharged cells are evaluated using a charging and discharging device to grade the cells depending on the capacity.

For example, the cells may be divided into those having a capacity of 80% or more, 68% to 80%, or 68% or less. Then, cells with a significantly reduced capacity, 68% or less, are subjected to a regeneration process.

After rendering the cells with a reduced capacity fully discharged, a hole is made in each cell in a dry room or inert atmosphere environment to remove the existing electrolyte, generated gases, and impurities under vacuum. An electrolyte containing an additive enabling performance restoration is then injected into the cell, followed by plugging the hole. Subsequently, the electrolyte is enabled to be evenly distributed through a process of shaking the cell under predetermined temperature (25°C to 50°C) conditions for a predetermined period of time, thus activating positive electrode/negative electrode active materials and increasing the activity of Li ions. As a result, the capacity of the battery may be recovered.

Hereinafter, a method of manufacturing a reusable battery using the electrolyte, according to the present disclosure, will be described.

### Example 32. Reusable battery manufacturing

### (1) Waste battery preparation

In this embodiment, a module was obtained from a battery pack used for the operation of an electric bus and then disassembled into unit cells. Then, cells divided into those having less than 12 Ah (less than 68% compared to the initial capacity) based on discharge capacity were discharged to 2.5 V at a discharge rate of 0.5 C. After making a hole in each cell using a syringe in a dry room or under an inert atmosphere in a glove box, the existing waste electrolyte solution, generated gases, and impurities were removed through vacuum suction for use.

### (2) Cell reassembly and cell activation

A novel electrolyte solution of the present disclosure was injected using a syringe, and the holes were sealed. While maintaining the temperature to be in the range of 25°C to 30°C, the cells were shaken through lateral vibration to be aged, subjected to constant current charging at a constant current rate of 0.1 C (2.1 A) up to 4.2 V, and then subjected to constant voltage charging at 4.2 V so that the current value reached 0.01 C (0.21 A).

### Comparative Example 3. Reusable battery manufacturing

A battery was manufactured in the same manner as in Example 32, except for using a nonaqueous electrolyte containing 1 M LiPF₆ in a mixed solvent where an EC:EMC:DMC volume ratio was 3:3:4, without involving other additives.

### Experimental Example 27. Reusable battery evaluation

The constant current discharge capacity of the battery manufactured in Example 32 was evaluated using a charging and discharging device at a current value of 0.1 C (2.1 A) in the range of 3.0 V to 4.2 V. As a result, the discharge capacity was recovered from a capacity of 6.2 Ah to a capacity of 14.8 Ah.

In the meantime, as a result of evaluating the battery manufactured in Comparative Example 3, the discharge capacity increased from a capacity of 6.2 Ah to a capacity of 10.5 Ah, but the capacity failed to be sufficiently recovered.

The present disclosure also provides a solidifying electrolyte that enables a battery to be operable as a normal lithium-ion battery using the electrolyte of the present disclosure until a predetermined temperature (preferably 70°C) is reached, but to stop operating through rapid curing (within 5 to 10 minutes) once a predetermined temperature (preferably 130°C) or higher is reached to prevent the risk of a fire occurring due to a rapid increase in the temperature of the battery resulting from thermal runaway of the battery.

Hereinafter, a method of preparing the solidifying electrolyte containing the anion receptor of the present disclosure will be described.

For the solidifying electrolyte, an anion receptor, a crosslinker, a curing initiator, and a polymerization inhibitor are added to an electrolyte solution and then stirred to prepare mixed solutions of compositions for preparing the solidifying electrolyte of the present disclosure, as shown in Table 3 below.

Hereinafter, examples of preparing the mixed solution of the solidifying electrolyte compositions and curing experiment results will be described in detail.

### Comparative Example 4. Solidifying electrolyte preparation

In 60 g of an electrolyte solution (EC:EMC:DMC = 3:3:4, LiPF₆ 1 mol/L), 0.24 g of Compound 1-1, serving as the anion receptor prepared in Example 1, and 6.15 g of triethylene glycol dimethacrylate (purchased from Aldrich, "TEGDA") serving as a crosslinker were mixed. To the resulting mixture, 0.01 g of Luperox TBEC (purchased from Aldrich) serving as an initiator was added. As a result, a solidifying electrolyte was prepared.

### Comparative Example 5. Solidifying electrolyte preparation

A solidifying electrolyte was prepared by mixing 6.06 g of the crosslinker (TEGDA), Compound 1-1, serving as the anion receptor, the electrolyte solution, and the initiator in the same amounts as in Comparative Example 3.

### Comparative Example 6. Solidifying electrolyte preparation

A solidifying electrolyte was prepared by mixing 6.04 g of the crosslinker (TEGDA), Compound 1-1, serving as the anion receptor, the electrolyte solution, and the initiator in the same amounts as in Comparative Example 3.

### Comparative Example 7. Solidifying electrolyte preparation

A solidifying electrolyte was prepared by mixing 6.00 g of the crosslinker (TEGDA), Compound 1-1, serving as the anion receptor, the electrolyte solution, and the initiator in the same amounts as in Comparative Example 3.

### Comparative Example 8. Solidifying electrolyte preparation

A solidifying electrolyte was prepared by mixing 5.40 g of the crosslinker (TEGDA), Compound 1-1, serving as the anion receptor, the electrolyte solution, and the initiator in the same amounts as in Comparative Example 3.

### Comparative Example 9. Solidifying electrolyte preparation

A solidifying electrolyte was prepared by mixing 4.50 g of the crosslinker (TEGDA), Compound 1-1, serving as the anion receptor, the electrolyte solution, and the initiator in the same amounts as in Comparative Example 3.

### Comparative Example 10. Solidifying electrolyte preparation

In 60 g of an electrolyte solution (EC:EMC:DMC = 3:3:4, LiPF₆ 1 mol/L), 0.30 g of Compound 1-1, serving as the anion receptor prepared in Example 1, and 8.40 g of triethylene glycol dimethacrylate (purchased from Aldrich, "TEGDA") serving as a crosslinker were mixed. To the resulting mixture, 0.01 g of Luperox TBEC (purchased from Aldrich) serving as an initiator and 1.2 mg of 4-methoxyphenol serving as a polymerization inhibitor were added. As a result, a solidifying electrolyte was prepared.

### Example 33. Solidifying electrolyte preparation

In 60 g of an electrolyte solution (EC:EMC:DMC = 3:3:4, LiPF₆ 1 mol/L), 0.33 g of Compound 1-1, serving as the anion receptor prepared in Example 1, and 9.23 g of triethylene glycol dimethacrylate (purchased from Aldrich, "TEGDA") serving as a crosslinker were mixed. To the resulting mixture, 0.01 g of Luperox TBEC (purchased from Aldrich) serving as an initiator and 1.2 mg of 4-methoxyphenol (purchased from Aldrich) serving as a polymerization inhibitor were added. As a result, a solidifying electrolyte was prepared.

**[Table 3]**

| Item | Electrolyte solution (usage g/content%) | Crosslinker (usage g/ content%) | Anion receptor (usage g/ content%) | Sum of additive (usage g/ content%) | Total (usage g/ content%) | Initiator usage g | Polymerization inhibitor usage g |
|---|---|---|---|---|---|---|---|
| Comparative Example 4 | 60.00 / 87.53 | 6.15 / 8.97 | 2.40 / 3.50 | 8.55 / 12.47 | 68.55 / 100.00 | 0.01 | - |
| Comparative Example 5 | 60.00 / 87.65 | 6.06 / 8.85 | 2.40 / 3.50 | 8.46 / 12.36 | 68.46 / 100.00 | 0.01 | - |
| Comparative Example 6 | 60.00 / 87.67 | 6.04 / 8.83 | 2.40 / 3.50 | 8.44 / **12.33** | 68.44 / 100.00 | 0.01 | - |
| Comparative Example 7 | 60.00 / 87.72 | 6.00 / 8.77 | 2.40 / 3.51 | 8.40 / 12.28 | 68.40 / 100.00 | 0.01 | - |
| Comparative Example 8 | 60.00 / 88.50 | 5.40 / 9.96 | 2.40 / 3.54 | 7.80 / 11.50 | 67.80 / 100.00 | 0.01 | - |
| Comparative Example 9 | 60.00 / 89.70 | 4.50 / 6.73 | 2.40 / 3.59 | 6.90 / 10.30 | 66.90 / 100.00 | 0.01 | - |
| Comparative Example 10 | 60.00 / 87.34 | 8.40 / 12.22 | 0.30 / 0.44 | 8.70 / 12.66 | 68.70 / 100.00 | 0.01 | 1.2 |
| Example 33 | 60.00 / 86.30 | 9.23 / 13.30 | 0.33 / 0.40 | 9.56 **/13.74** | 69.56 / 100.00 | 0.01 | 1.2 |

| | | | | | | | |
|---|---|---|---|---|---|---|---|
| *Additive = crosslinker + anion receptor | | | | | | | |

### Experimental Example 27. Solidifying electrolyte curing experiment (1)

Each solidifying electrolyte solution prepared in Comparative Examples 4 to 9 was placed in a 50 ml round-bottom flask and then visually observed at 50°C, 70°C, 90°C, 110°C, and 130°C under a nitrogen atmosphere to measure respective curing times.

The measurement results of Comparative Examples 4 to 9 are shown in Table 4 below.

**[Table 4]**

| Temperature /Curing time | 50°C /120 hours | 70°C /48 hours | 90°C /12 hours | 110°C /1 hour | 130°C /5 minutes |
|---|---|---|---|---|---|
| Comparative Example 4 | O | O | O | O | O |
| Comparative Example 5 | O | O | O | O | O |
| Comparative Example 6 | O | O | O | O | O |
| Comparative Example 7 | X | X | X | X | X |
| Comparative Example 8 | X | X | X | X | X |
| Comparative Example 9 | X | X | X | X | X |

| | | | | | |
|---|---|---|---|---|---|
| (In the table above, X means uncured, and O means cured.) | | | | | |

As shown in Table 4, it is seen that all the solidifying electrolyte solutions in the case of Comparative Examples 4 to 6 are cured at temperatures in the range of 50°C to 130°C and thus are unavailable as solidifying agents. It is also seen that the solidifying electrolyte solutions in the case of Comparative Examples 7 to 9 are uncured at temperatures in the range of 50°C to 130°C and thus are unavailable as solidifying agents.

As shown in Table 4, it is seen that the sum of the additive content is required to be at least 12.33% for curing.

### Experimental Example 28. Solidifying electrolyte curing experiment (2)

The respective curing times of the solidifying electrolyte solutions prepared in Comparative Example 10 and Example 33 were measured in the same manner as in Experimental Example 27.

The measurement results of Comparative Example 10 and Example 33 are shown in Table 5 below.

**[Table 5]**

| Temperature /Curing time | 50°C /120 hours | 70°C /48 hours | 90°C /12 hours | 110°C /1 hour | 130°C /5 minutes |
|---|---|---|---|---|---|
| Comparative Example 10 | O | O | O | O | O |
| Example 33 | X | X | O | O | O |

| | | | | | |
|---|---|---|---|---|---|
| (In the table above, X means uncured, and O means cured) | | | | | |

As shown in Table 5, it is seen that the solidifying electrolyte solution in the case of Example 33 is uncured at temperatures of 70°C or lower but is rapidly cured within 5 minutes at a high temperature of 130°C and thus is available as a solidifying agent. However, it is seen that the solidifying electrolyte solution in the case of Comparative Example 10 is cured even at temperatures of 70°C or lower and thus is unavailable as a solidifying agent.

Provided that 1.2 mg of the polymerization inhibitor is each independently added to both the solidifying electrolyte solutions of Example 33 and Comparative Example 10, as shown in Table 3 above, it is seen that the solidifying electrolyte solution is uncured at temperatures of 70°C or lower only when the sum of the additive content is at least 13.74%, as in Example 33, and thus is available as a solidifying agent.

As described above, the liquid electrolyte using the novel anion receptor, according to embodiments, as the additive can provide an electrolyte with improved lithium cycling performance and efficiency and thus is available as an electrolyte additive in high-capacity lithium-ion batteries. Furthermore, the polymer electrolyte containing the novel anion receptor of the present disclosure can provide an electrolyte with significantly improved ion conductivity and electrochemical stability at room temperature. Thus, the polymer electrolyte is widely applicable as polymer electrolytes of small lithium polymer secondary batteries applied to various electronic devices, such as portable information devices, including mobile phones and laptops, and camcorders, as well as large-capacity lithium polymer secondary batteries used for electric vehicles and power storage devices for power leveling. Moreover, provided is a solidifying electrolyte that enables a battery to stop operating through rapid curing within 5 minutes once a predetermined temperature (130°C) or higher is reached to prevent the risk of a fire occurring due to a rapid temperature increase resulting from thermal runaway of the battery. Such a solidifying electrolyte is expected to be in high demand for power storage devices in addition to batteries for electric vehicles where safety in use is most urgently required due to frequent fire incidents that have recently occurred.

Although the above embodiments have been illustrated with a limited number of drawings, those skilled in the art will be able to make various technical modifications and variations based on the above description. For example, even when the described techniques are performed in a different order other than that in the described method, and/or the described components, such as systems, structures, devices, and circuits, are coupled or combined in a different form other than that in the described method or are replaced or substituted with other components or equivalents, relevant results can be achieved.

Therefore, other embodiments, other examples, and equivalents to the claims also fall within the scope of the accompanying claims.

### Industrial Applicability

According to one embodiment of the present disclosure, the present disclosure can provide not only a battery with significantly improved ion conductivity and electrochemical stability by using a compound serving as a novel silicon-based ion receptor and a liquid electrolyte (for example, no-aqueous liquid electrolytes) and a gel-type or solid electrolyte (for example, gel-type or solid polymer electrolytes, solid sulfide-polymer-based electrolytes, and solid oxide-polymer-based electrolytes) containing the same, but also a method of recycling a waste battery by an electrolyte replacement method and a recycle battery.

## Claims

1. A silicon-based anion receptor compound selected from the group consisting of Formulas 1 to 6 shown below, 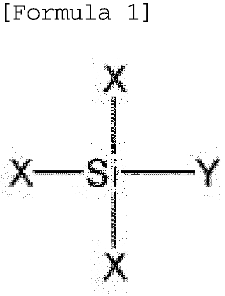 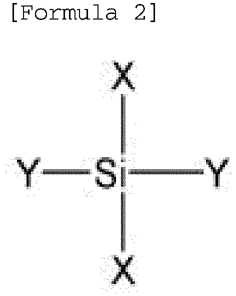 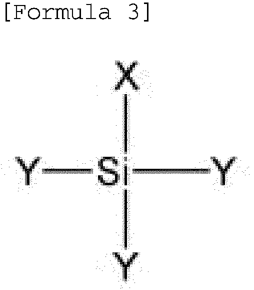 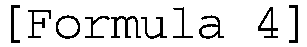 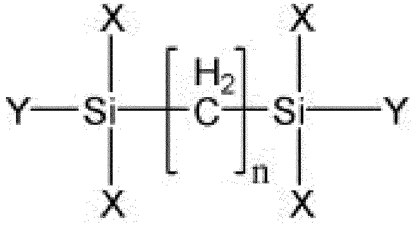 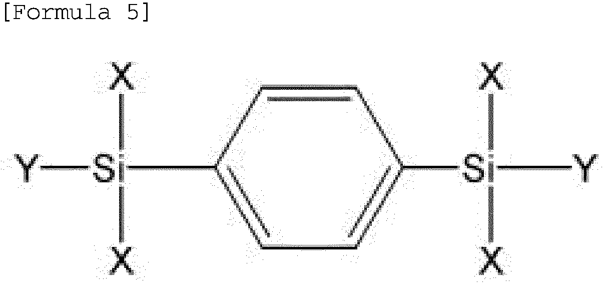 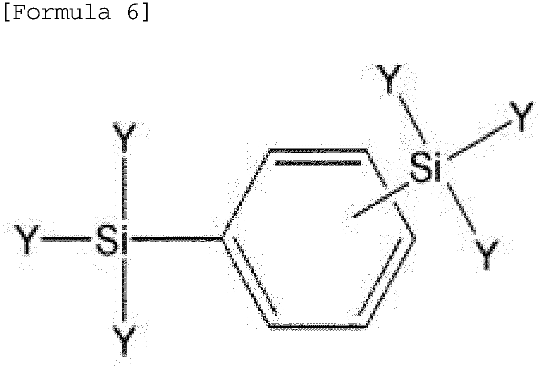 wherein in Formulas 1 to 6,
(a) X is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, -COR (where R is a linear or branched alkyl group having 1 to 20 carbon atoms or a linear or branched alkenyl group having 2 to 20 carbon atoms), -OR (where R is a linear or branched alkyl group having 1 to 20 carbon atoms), -ROR' (where R and R' are each independently a linear or branched alkyl group having 1 to 20 carbon atoms), -SiR₃ (where R is a linear or branched alkyl group having 1 to 20 carbon atoms), - O-SiR₃ (where R is a linear or branched alkyl group having 1 to 20 carbon atoms), 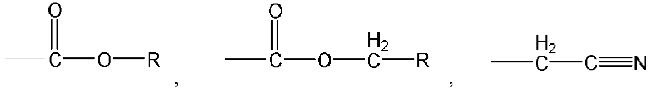 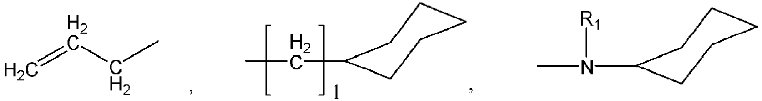 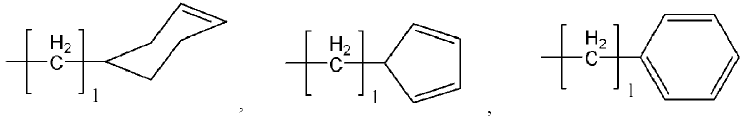 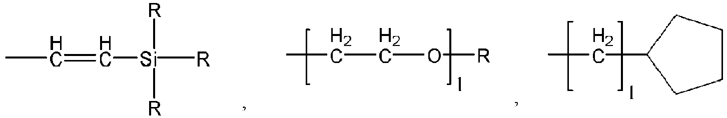 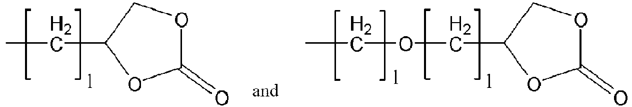 (where R is selected from a linear or branched alkyl group having 1 to 20 carbon atoms or a linear or branched alkenyl group having 2 to 20 carbon atoms, R₁ is selected from a halogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, and l is an integer in a range of 0 to 20),
(b) Y is selected from 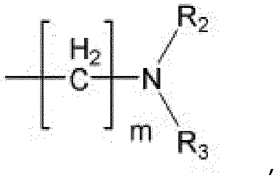 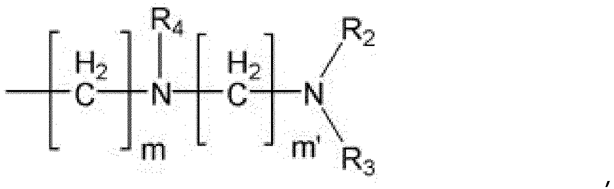 and 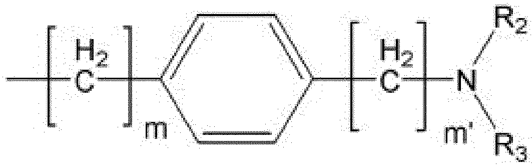 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in a range of 0 to 20),
(c) R₁, R₂, and R₃ are selected from a halogen atom and an electron withdrawing group that is selected from -SO₂CF₃, - OSO₂CF₃, -SO₂CHF₂, -OSO₂CHF₂, -SO₂CH₂F, -OSO₂CH₂F, -COCF₃, - OCOCF₃, -COCHF₂, -OCOCHF₂, -COCH₂F, -OCOCH₂F, -SO₂CN, -OSO₂CN, - SO₂F, -OSO₂F, -CF₃, -OCF₃, and -CN, and
(d) n is an integer in a range of 0 to 20.

2. The receptor compound of claim 1, wherein
Formula 1 is selected from the group consisting of 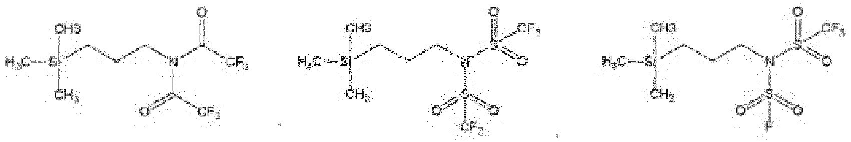 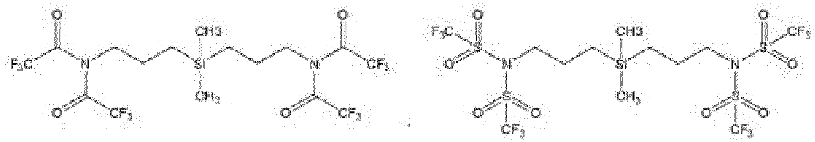 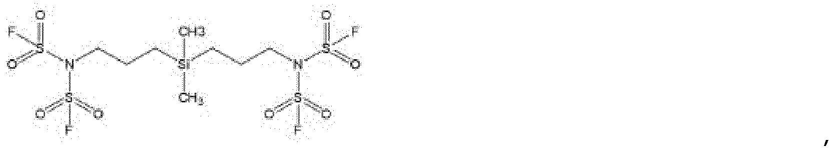
Formula 2 is selected from the group consisting of 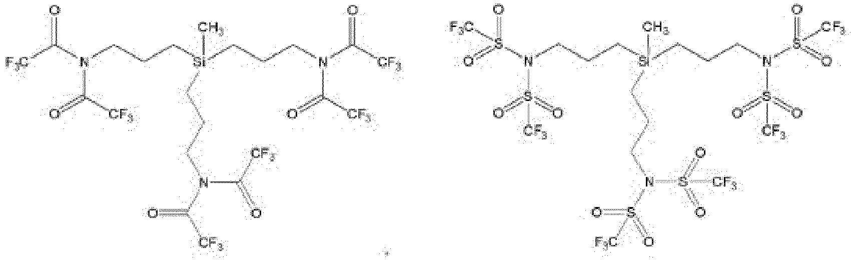 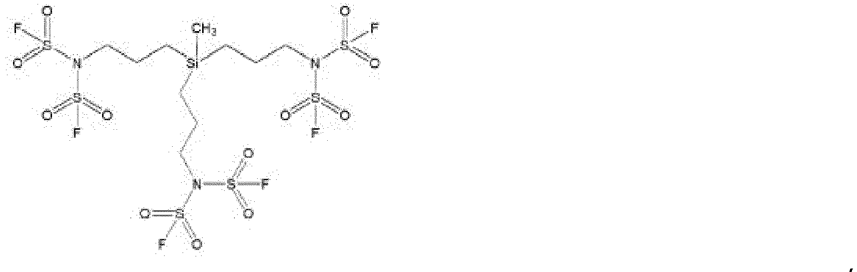
Formula 3 is selected from the group consisting of 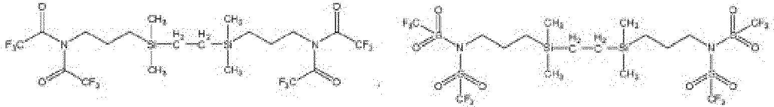 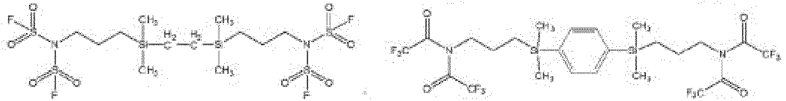 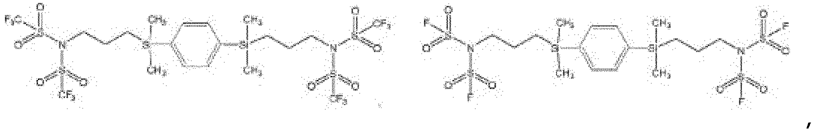
Formula 4 is selected from the group consisting of 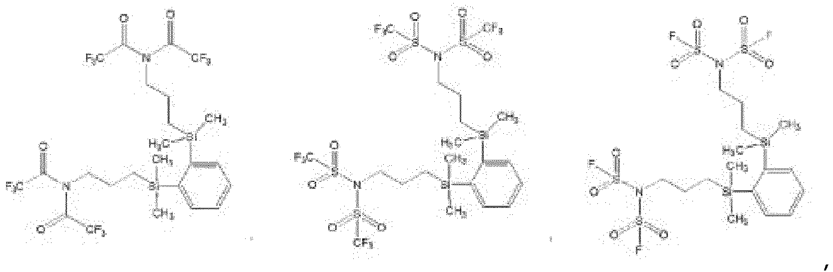
Formula 5 is selected from the group consisting of 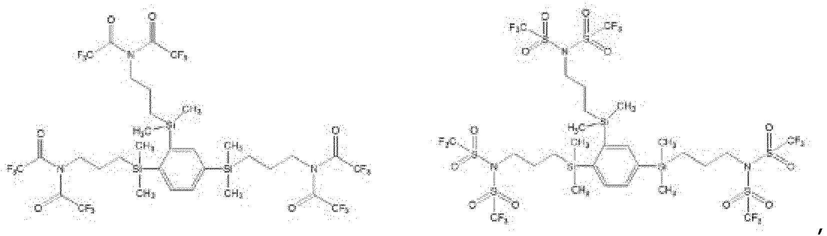 and
Formula 6 is selected from the group consisting of

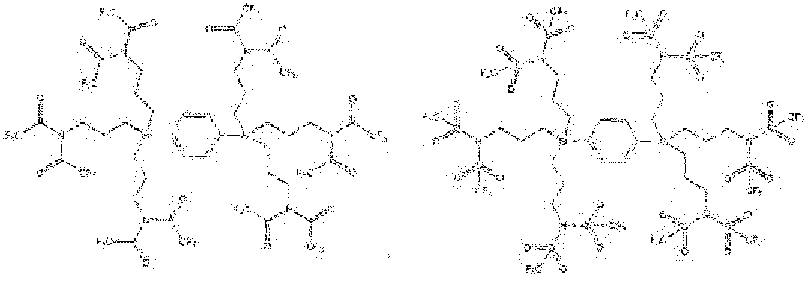

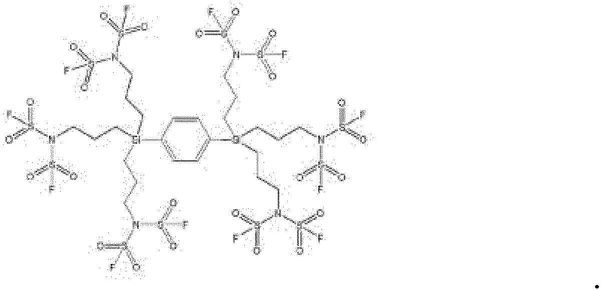

3. An electrolyte composition comprising at least one of the receptor compounds represented by Formulas 1 to 6 of claim 1.

4. The electrolyte composition of claim 3, further comprising one or more compounds selected from the group consisting of Formulas 7 to 16 shown below, 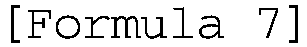 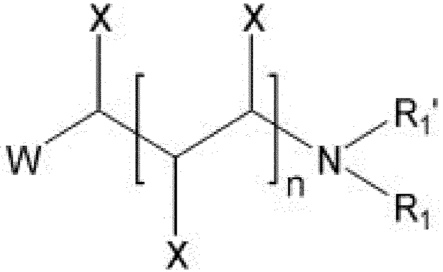 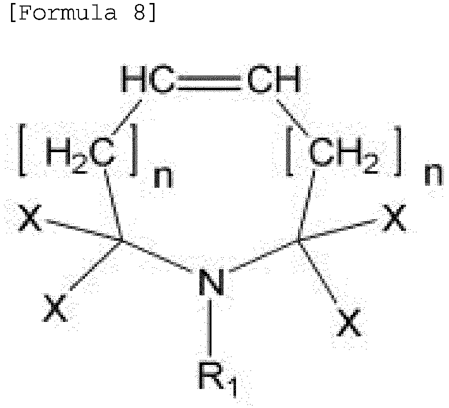 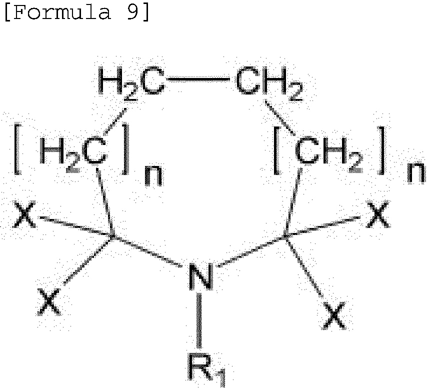 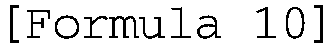 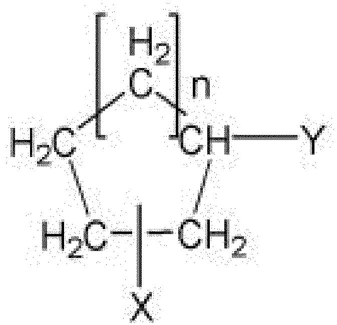 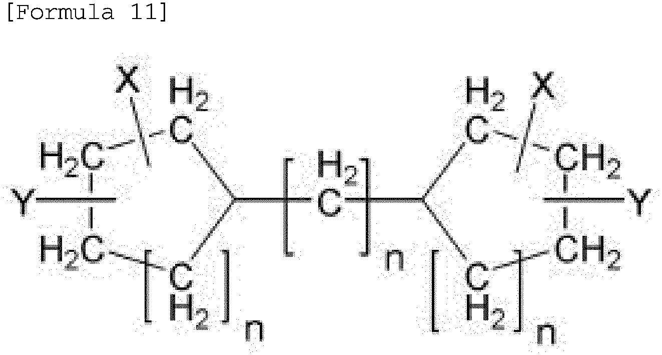 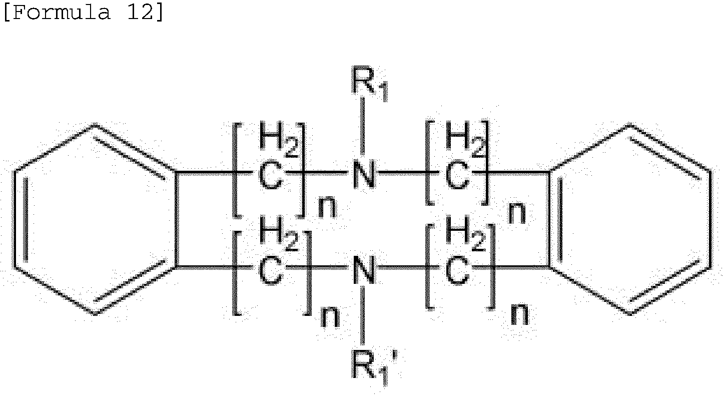 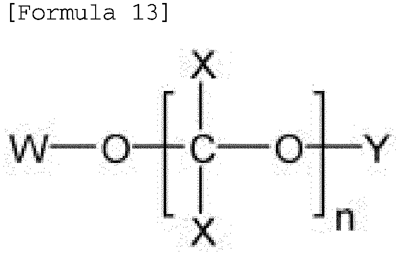 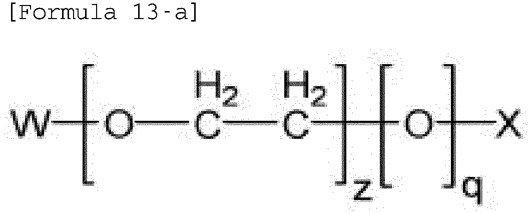 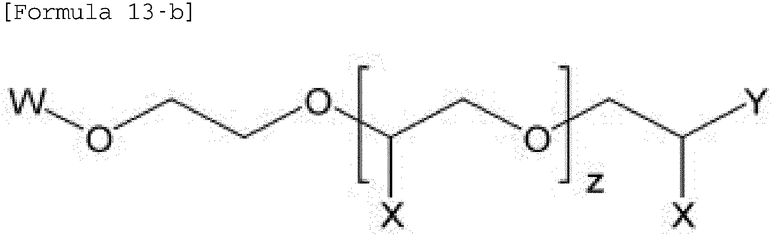 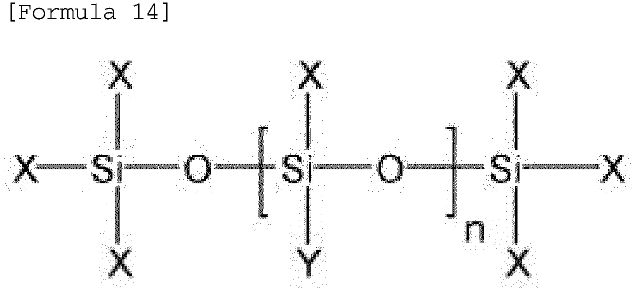 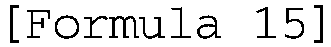 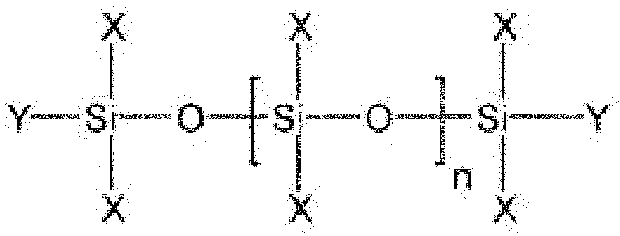 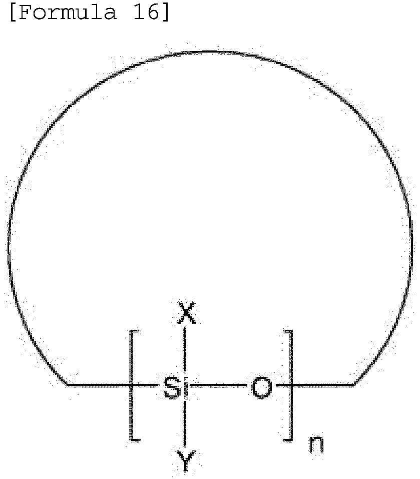 wherein in Formulas 7 to 16,
(a) X is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, -COR (where R is a linear or branched alkyl group having 1 to 20 carbon atoms or a linear or branched alkenyl group having 2 to 20 carbon atoms), -OR (where R is a linear or branched alkyl group having 1 to 20 carbon atoms), -ROR' (where R and R' are each independently a linear or branched alkyl group having 1 to 20 carbon atoms), -SiR₃ (where R is a linear or branched alkyl group having 1 to 20 carbon atoms), - O-SiR₃ (where R is a linear or branched alkyl group having 1 to 20 carbon atoms), 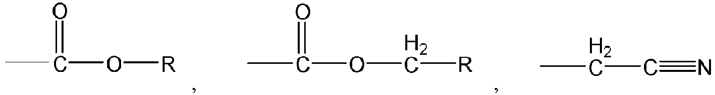 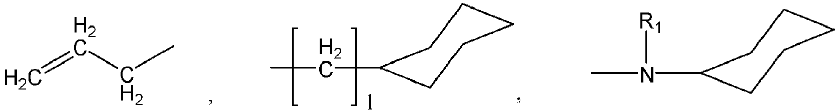 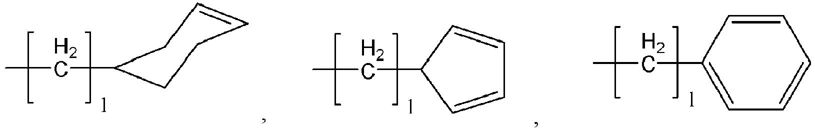 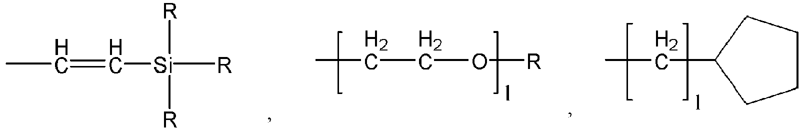 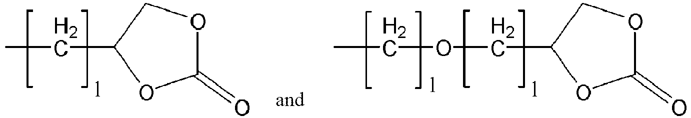 (where R is selected from a linear or branched alkyl group having 1 to 20 carbon atoms or a linear or branched alkenyl group having 2 to 20 carbon atoms, R₁ is selected from a halogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, and l is an integer in a range of 0 to 20),
(b) Y is selected from 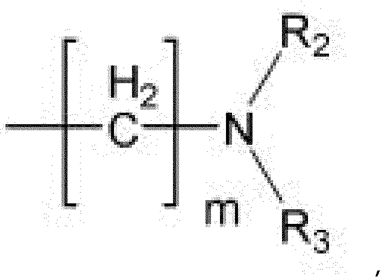 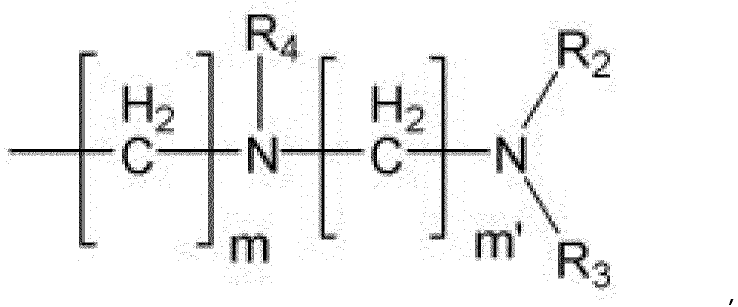 and 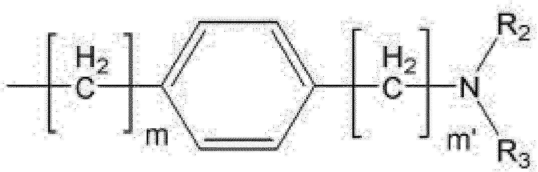 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in a range of 0 to 20),
(c) W is selected from a hydrogen atom, a halogen atom, a linear or branched alkyl group having 1 to 20 carbon atoms, a linear or branched alkenyl group having 2 to 20 carbon atoms, a linear or branched alkynyl group having 2 to 20 carbon atoms, 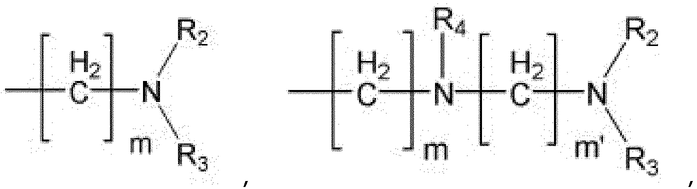 and 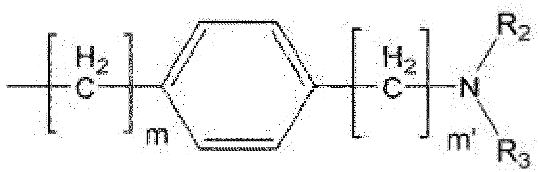 (where R₂, R₃, and R₄ are each independently selected from a hydrogen atom, a halogen atom, and an electron withdrawing group that is selected from -SO₂CF₃, -OSO₂CF₃, -SO₂CHF₂, -OSO₂CHF₂, -SO₂CH₂F, -OSO₂CH₂F, - COCF₃, -OCOCF₃, -COCHF₂, -OCOCHF₂, -COCH₂F, -OCOCH₂F, -SO₂CN, - OSO₂CN, -SO₂F, -OSO₂F, -CF₃, -OCF₃, and -CN, wherein R₂, R₃, and R₄ are not simultaneously hydrogen atoms, and m and m' are each independently an integer in a range of 0 to 20),
(d) R₁ and R₁' are each independently selected from a hydrogen atom and an electron withdrawing group that is selected from -SO₂CF₃, -OSO₂CF₃, -SO₂CHF₂, -OSO₂CHF₂, -SO₂CH₂F, - OSO₂CH₂F, -COCF₃, -OCOCF₃, -COCHF₂, -OCOCHF₂, -COCH₂F, -OCOCH₂F, -SO₂CN, -OSO₂CN, -SO₂F, -OSO₂F, -CF₃, -OCF₃, and -CN, wherein R₁ and R₁' are not simultaneously hydrogen atoms in the same molecule,
(e) n and q are each independently an integer in a range of 0 to 20, and
(f) z is an integer in a range of 1 to 20.

5. The electrolyte composition of claim 4, wherein one or more of the receptor compounds selected from the group consisting of Formulas 1 to 6 and one or more of the compounds selected from the group consisting of Formulas 7 to 16, contained in the electrolyte composition, account for 0.01 wt% to 40 wt%.

6. The electrolyte composition of claim 3, wherein the electrolyte composition forms a liquid, gel-type, or solid electrolyte.

7. A solidifying electrolyte prepared from the electrolyte composition of claim 3 or 4.

8. A polymer electrolyte thin film formed from the electrolyte composition of claim 3 or 4.

9. A battery comprising the solidifying electrolyte of claim 7.

10. A recycle battery comprising the solidifying electrolyte of claim 7.
